# EUROPEAN PATENT APPLICATION

(11) **EP 4 769 927 A1**
(43) Date of publication of application: **01.07.2026**
(21) Application number: 24856306.6
(22) Date of filing: 07.08.2024
(51) Int. Cl.: H02M 7/48

(54) **POWER CONVERSION DEVICE**

(30) Priority: 23.08.2023 JP 2023135780
(71) Applicant: Panasonic Intellectual Property Management Co., Ltd., Kadoma-shi, Osaka 571-0057 (JP)
(72) Inventor: KAMON, Yutaka, Kadoma-shi, Osaka 571-0057 (JP); HIGASHIYAMA, Koji, Kadoma-shi, Osaka 571-0057 (JP)
(74) Representative: Novagraaf International SA
(86) International application number: PCT/JP2024/028268
(87) International publication number: WO 2025/041615

(57) **Abstract**

Provided is a power converter having the ability to not only perform zero-voltage soft switching but also cut down switching loss. In a power converter (100), a controller (50) performs shortening control when determining that resonant currents respectively passing through two or more switches (8) belonging to a plurality of switches (8) should be going to flow simultaneously through a resonant inductor (L1) upon application of a control signal having a preset high-level period to each of the plurality of switches (8). When performing the shortening control, the controller (50) applies a control signal, of which the preset high-level period has been shortened, to a first switch which is one of the two or more switches (8) and applies a control signal having the preset high-level period to a second switch belonging to the two or more switches (8). The second switch is different from the first switch.

## Description

### Technical Field

The present disclosure generally relates to a power converter. More particularly, the present disclosure relates to a power converter having the ability to convert DC power into AC power.

### Background Art

Patent Literature 1 discloses a power converter for converting DC power into multiphase AC power.

The power converter of Patent Literature 1 includes a main switching means (power converter circuit), two capacitors, one coil (resonant inductor), a plurality of auxiliary switch elements, and a control means. The main switching means includes a plurality of main switching circuits provided for respective phases of the multiphase AC power. Each of the plurality of main switching circuits is implemented as a pair of main switch elements which are connected in series between both terminals of a DC power supply and uses, as the output node of its associated phase, the interconnection node of the pair of main switch elements. The two capacitors divide the voltage of the DC power supply. One end of the coil is connected to a voltage division node of the two capacitors. The plurality of auxiliary switch elements connect the other end of the coil and the output nodes of the respective phases. The control means controls, when determining that a plurality of phase currents should be going to flow through the coil, the plurality of auxiliary switch elements to make the amount of current flowing through at least one phase smaller than a preset amount.

### Citation List

### Patent Literature

Patent Literature 1: JP 2010-233306 A

### Summary of Invention

The power converter of Patent Literature 1 is configured to perform zero-current soft switching on the main switch and cannot perform zero-voltage soft switching.

An object of the present disclosure is to provide a power converter having the ability to not only perform zero-voltage soft switching but also cut down the switching loss.

A power converter according to an aspect of the present disclosure includes a first DC terminal and a second DC terminal, a power converter circuit, a plurality of AC terminals, a plurality of switches, a plurality of resonant capacitors, a resonant inductor, a regenerative capacitor, and a controller. The power converter circuit includes a plurality of first switching elements and a plurality of second switching elements. In the power converter circuit, a plurality of switching circuits, in each of which one of the plurality of first switching elements and a corresponding one of the plurality of second switching elements are connected one to one in series, are connected to each other in parallel. In the power converter circuit, the plurality of first switching elements are connected to the first DC terminal, and the plurality of second switching elements are connected to the second DC terminal. The plurality of AC terminals are provided one to one for the plurality of switching circuits. Each of the plurality of AC terminals is connected to a connection node between the first switching element and the second switching element of a corresponding one of the plurality of switching circuits. The plurality of switches are provided one to one for the plurality of switching circuits. Each of the plurality of switches has a first end and a second end. Each of the plurality of switches has the first end thereof connected to the connection node between the first switching element and the second switching element of a corresponding one of the plurality of switching circuits. The plurality of switches have the respective second ends thereof connected in common to a common connection node. The plurality of resonant capacitors are provided one to one for the plurality of switches. Each of the plurality of resonant capacitors is connected between the first end of a corresponding one of the plurality of switches and the second DC terminal. The resonant inductor has a first end and a second end. In the resonant inductor, the first end of the resonant inductor is connected to the common connection node. The regenerative capacitor has a third end and a fourth end. In the regenerative capacitor, the third end of the regenerative capacitor is connected to either the first DC terminal or the second DC terminal. The controller applies a control signal, of which a potential level alternates between high level and low level, to each of the plurality of first switching elements, the plurality of second switching elements, and the plurality of switches. The controller sets a dead time period between a high-level period of the control signal for the first switching element and a high-level period of the control signal for the second switching element with respect to each of the plurality of switching circuits. The controller sets a high-level period of the control signal for each of the plurality of switches based on the dead time period for a corresponding one of the plurality of switching circuits. A load current, passing through either the first switching element or the second switching element of the corresponding one of the plurality of switching circuits, flows through each of the plurality of AC terminals. The controller performs shortening control when determining that resonant currents respectively passing through two or more switches belonging to the plurality of switches should be going to flow simultaneously through the resonant inductor upon application of a control signal having a preset high-level period to each of the plurality of switches. When performing the shortening control, the controller applies a control signal, of which the preset high-level period has been shortened, to a first switch which is one of the two or more switches and applies a control signal having the preset high-level period to a second switch belonging to the two or more switches. The second switch is different from the first switch.

A power converter according to the present disclosure achieves the advantages of having the ability to not only perform zero-voltage soft switching but also cut down the switching loss.

### Brief Description of Drawings

[FIG. 1] FIG. 1 is a circuit diagram of a system including a power converter according to a first embodiment;
[FIG. 2] FIG. 2 illustrates how the power converter according to the first embodiment operates in a situation where its controller has performed a basic operation when a load current > 0 and a charging operation is performed on its resonant capacitor;
[FIG. 3] FIG. 3 also illustrates how the power converter according to the first embodiment operates in the situation where its controller has performed the basic operation when the load current > 0 and the charging operation is performed on its resonant capacitor;
[FIG. 4] FIG. 4 also illustrates how the power converter according to the first embodiment operates in the situation where its controller has performed the basic operation when the load current > 0 and the charging operation is performed on its resonant capacitor;
[FIG. 5] FIG. 5 shows how duties and load currents, respectively corresponding to three-phase voltage instruction values in an AC load connected to a plurality of AC terminals of the power converter according to the first embodiment, change with time;
[FIG. 6] FIG. 6 shows a first current threshold value and a second current threshold value for use in the controller of the power converter according to the first embodiment;
[FIG. 7] FIG. 7 illustrates how the power converter according to the first embodiment operates in a situation where its controller has performed the basic operation when the load current > 0 and a discharging operation is performed on its resonant capacitor;
[FIG. 8] FIG. 8 also illustrates how the power converter according to the first embodiment operates in a situation where its controller has performed the basic operation when the load current < 0 and the discharging operation is performed on its resonant capacitor;
[FIG. 9] FIG. 9 illustrates how the power converter according to the first embodiment operates in a situation where its controller has performed the basic operation when the load current < 0 and the charging operation is performed on its resonant capacitor;
[FIG. 10] FIG. 10 is a timing chart showing an exemplary boundary condition between a situation where currents flowing through a resonant inductor do not overlap with each other (i.e., do not flow simultaneously) and a situation where the currents flowing through the resonant inductor overlap with each other (i.e., flow simultaneously) in the power converter according to the first embodiment;
[FIG. 11] FIG. 11 is a timing chart showing an exemplary boundary condition between a situation where a U-phase resonant current and a V-phase resonant current do not overlap with each other (i.e., do not flow simultaneously) and a situation where the U-phase resonant current and the V-phase resonant current overlap with each other (i.e., flow simultaneously) in the power converter according to the first embodiment;
[FIG. 12] FIG. 12 illustrates a condition on which a controller performs shortening control in the power converter according to the first embodiment;
[FIG. 13] FIG. 13 is a timing chart illustrating how the power converter according to the first embodiment operates in a situation where its controller has determined that resonant currents should overlap with each other when the load current > 0 and the charging operation is performed on its resonant capacitor;
[FIG. 14] FIG. 14 is a timing chart illustrating how the power converter according to the first embodiment operates in a situation where its controller has performed the shortening control;
[FIG. 15] FIG. 15 illustrates a condition on which the controller performs the shortening control in the power converter according to the first embodiment;
[FIG. 16] FIG. 16 is a timing chart illustrating how the power converter according to the first embodiment operates in a situation where its controller has determined that resonant currents should overlap with each other when the load current < 0 and the discharging operation is performed on its resonant capacitor;
[FIG. 17] FIG. 17 is a timing chart illustrating how the power converter according to the first embodiment operates in a situation where its controller has performed the shortening control;
[FIG. 18] FIG. 18 is a timing chart illustrating how a power converter according to a second embodiment operates in a situation where its controller has performed the shortening control;
[FIG. 19] FIG. 19 is a timing chart illustrating how the power converter according to the second embodiment operates in the situation where its controller has performed the shortening control;
[FIG. 20] FIG. 20 is a timing chart illustrating how a power converter according to a third embodiment operates in a situation where its controller has determined that three-phase resonant currents should overlap with each other when the load current > 0 and the charging operation is performed on its resonant capacitor;
[FIG. 21] FIG. 21 is a timing chart illustrating how the power converter according to the third embodiment operates in a situation where its controller has performed the shortening control;
[FIG. 22] FIG. 22 is a timing chart illustrating how the power converter according to the third embodiment operates in a situation where its controller has determined that three-phase resonant currents should overlap with each other when the load current < 0 and the discharging operation is performed on its resonant capacitor;
[FIG. 23] FIG. 23 is a timing chart illustrating how the power converter according to the third embodiment operates in the situation where its controller has performed the shortening control;
[FIG. 24] FIG. 24 illustrates a condition on which a controller performs shortening control in a power converter according to a second variation of the third embodiment;
[FIG. 25] FIG. 25 is a timing chart illustrating how a power converter according to a fourth embodiment operates in a situation where its controller has performed the shortening control;
[FIG. 26] FIG. 26 is a timing chart illustrating how the power converter according to the fourth embodiment operates in the situation where its controller has performed the shortening control;
[FIG. 27] FIG. 27 is a timing chart illustrating how a power converter according to a fifth embodiment operates in a situation where its controller has performed the shortening control;
[FIG. 28] FIG. 28 is a timing chart illustrating how the power converter according to the fifth embodiment operates in the situation where its controller has performed the shortening control;
[FIG. 29] FIG. 29 is a timing chart illustrating how a power converter according to a sixth embodiment operates in a situation where its controller has performed the shortening control;
[FIG. 30] FIG. 30 is a timing chart illustrating how the power converter according to the sixth embodiment operates in the situation where its controller has performed the shortening control;
[FIG. 31] FIG. 31 is a timing chart illustrating how a power converter according to a seventh embodiment operates in a situation where its controller has performed the shortening control;
[FIG. 32] FIG. 32 is a timing chart illustrating how the power converter according to the seventh embodiment operates in the situation where its controller has performed the shortening control;
[FIG. 33] FIG. 33 is a timing chart illustrating how a power converter according to an eighth embodiment operates in a situation where its controller has performed the shortening control;
[FIG. 34] FIG. 34 is a timing chart illustrating how the power converter according to the eighth embodiment operates in the situation where its controller has performed the shortening control;
[FIG. 35] FIG. 35 is a timing chart illustrating how a power converter according to a ninth embodiment operates in a situation where its controller has performed the shortening control;
[FIG. 36] FIG. 36 is a timing chart illustrating how the power converter according to the ninth embodiment operates in the situation where its controller has performed the shortening control;
[FIG. 37] FIG. 37 is a timing chart illustrating how a power converter according to a tenth embodiment operates in a situation where its controller has performed the shortening control;
[FIG. 38] FIG. 38 is a timing chart illustrating how the power converter according to the tenth embodiment operates in the situation where its controller has performed the shortening control;
[FIG. 39] FIG. 39 is a circuit diagram of a system including a power converter according to an eleventh embodiment;
[FIG. 40] FIG. 40 is a circuit diagram of a system including a power converter according to a twelfth embodiment; and
[FIG. 41] FIG. 41 is a circuit diagram of a system including a power converter according to a thirteenth embodiment.

### Description of Embodiments

### (First embodiment)

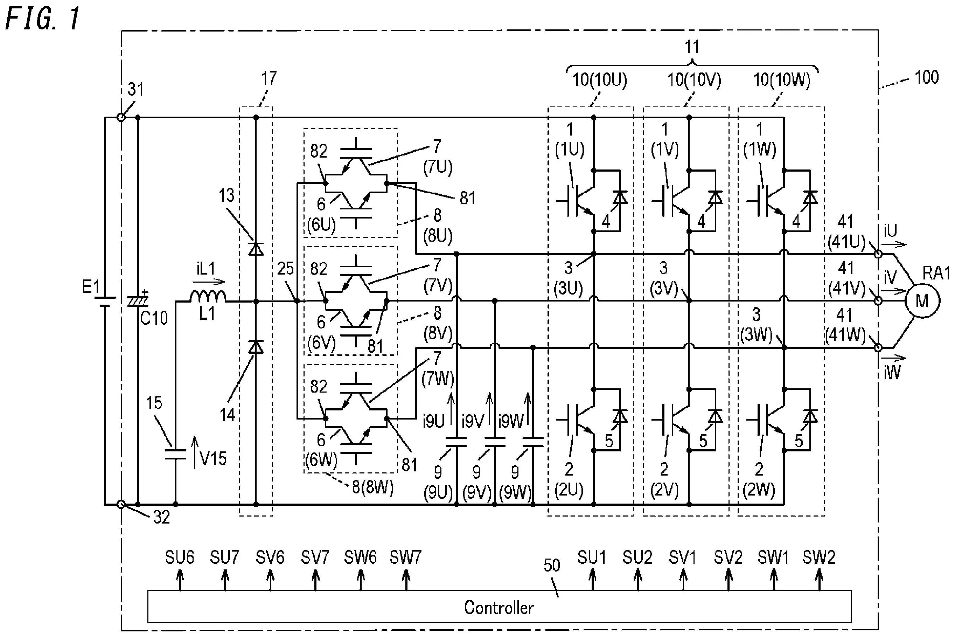

A power converter 100 according to a first embodiment will now be described with reference to FIGS. 1-17.

### (1) Overall configuration for power converter

FIG. 1 is a circuit diagram of a system including a power converter 100 according to the first embodiment. The power converter 100 includes a first DC terminal 31 and a second DC terminal 32, and a plurality of (e.g., three) AC terminals 41 as shown in FIG. 1, for example. A DC power supply E1 is connected between the first DC terminal 31 and the second DC terminal 32. An AC load RA1 is connected to the plurality of AC terminals 41. The AC load RA1 may be, for example, a three-phase servo motor. The power converter 100 converts the DC output of the DC power supply E1 into AC power and outputs the AC power to the AC load RA1. The DC power supply E1 may include, for example, a solar cell or a fuel cell. The DC power supply E1 may include a DC-DC converter. In the power converter 100, if the plurality of AC terminals 41 are three AC terminals 41, then the AC power is, for example, three-phase AC power having U-, V-, and W-phases.

The power converter 100 includes a power converter circuit 11, a plurality of (e.g., three) switches 8, a plurality of (e.g., three) resonant capacitors 9, a resonant inductor L1, a regenerative capacitor 15, and a controller 50. The power converter 100 further includes a protection circuit 17 and a capacitor C10. Each of the plurality of switches 8 may be, for example, a bidirectional switch.

The power converter circuit 11 includes a plurality of (e.g., three) first switching elements 1 and a plurality of (e.g., three) second switching elements 2. In the power converter circuit 11, a plurality of (e.g., three) switching circuits 10, in each of which one of the plurality of first switching elements 1 and a corresponding one of the plurality of second switching elements 2 are connected one to one in series, are connected in parallel. In the power converter circuit 11, the plurality of first switching elements 1 are connected to the first DC terminal 31 and the plurality of second switching elements 2 are connected to the second DC terminal 32. The plurality of AC terminals 41 are provided one to one for the plurality of switching circuits 10. Each of the plurality of AC terminals 41 is connected to a connection node 3 between the first switching element 1 and the second switching element 2 of a corresponding one of the plurality of switching circuits 10. The plurality of switches 8 are provided one to one for the plurality of switching circuits 10. Each of the plurality of switches 8 has a first end 81 thereof connected to the connection node 3 between the first switching element 1 and the second switching element 2 of a corresponding one of the plurality of switching circuits 10. The plurality of switches 8 have their respective second ends 82 connected in common to a common connection node 25. The plurality of resonant capacitors 9 are provided one to one for the plurality of switches 8. Each of the plurality of resonant capacitors 9 is connected between the first end 81 of a corresponding one of the plurality of switches 8 and the second DC terminal 32. The resonant inductor L1 has a first end and a second end. In the resonant inductor L1, the first end of the resonant inductor L1 is connected to the common connection node 25. The regenerative capacitor 15 has a third end 153 and a fourth end 154. In the regenerative capacitor 15, the third end thereof is connected to the second DC terminal 32 and the fourth end thereof is connected to the common connection node 25 via the resonant inductor L1. The controller 50 controls the plurality of first switching elements 1, the plurality of second switching elements 2, and the plurality of switches 8.

### (2) Details of power converter

In the following description, as for the plurality of switching circuits 10, the switching circuits 10 for the U-, V-, and W-phases will be hereinafter sometimes referred to as a "switching circuit 10U," a "switching circuit 10V," and a "switching circuit 10W," respectively, for the sake of convenience of description. Also, in the following description, the first switching element 1 and second switching element 2 of the switching circuit 10U will be hereinafter sometimes referred to as a "first switching element 1U" and a "second switching element 2U," respectively. In the same way, in the following description, the first switching element 1 and second switching element 2 of the switching circuit 10V will be hereinafter sometimes referred to as a "first switching element 1V" and a "second switching element 2V," respectively. In the same way, in the following description, the first switching element 1 and second switching element 2 of the switching circuit 10W will be hereinafter sometimes referred to as a "first switching element 1W" and a "second switching element 2W," respectively. Furthermore, in the following description, the connection node 3 between the first switching element 1U and the second switching element 2U will be hereinafter sometimes referred to as a "connection node 3U," the connection node 3 between the first switching element 1V and the second switching element 2V will be hereinafter sometimes referred to as a "connection node 3V," and the connection node 3 between the first switching element 1W and the second switching element 2W will be hereinafter sometimes referred to as a "connection node 3W." Furthermore, in the following description, the AC terminal 41 connected to the connection node 3U will be hereinafter sometimes referred to as an "AC terminal 41U," the AC terminal 41 connected to the connection node 3V will be hereinafter sometimes referred to as an "AC terminal 41V," and the AC terminal 41 connected to the connection node 3W will be hereinafter sometimes referred to as an "AC terminal 41W." Furthermore, in the following description, the resonant capacitor 9 connected to the second switching element 2U in parallel will be hereinafter sometimes referred to as a "resonant capacitor 9U," the resonant capacitor 9 connected to the second switching element 2V in parallel will be hereinafter sometimes referred to as a "resonant capacitor 9V," and the resonant capacitor 9 connected to the second switching element 2W in parallel will be hereinafter sometimes referred to as a "resonant capacitor 9W." Furthermore, in the following description, the switch 8 connected to the connection node 3U will be hereinafter sometimes referred to as a "switch 8U," the switch 8 connected to the connection node 3V will be hereinafter sometimes referred to as a "switch 8V," and the switch 8 connected to the connection node 3W will be hereinafter sometimes referred to as a "switch 8W."

In the power converter 100, the higher-potential output terminal (positive electrode) of the DC power supply E1 is connected to the first DC terminal 31, and the lower-potential output terminal (negative electrode) of the DC power supply E1 is connected to the second DC terminal 32. Also, in the power converter 100, the U-, V-, and W-phase terminals of the AC load RA1, for example, are connected to the three AC terminals 41U, 41V, and 41W, respectively.

In the power converter circuit 11, each of the plurality of (e.g., three) first switching elements 1 and the plurality of (e.g., three) second switching elements 2 has a control terminal, a first main terminal, and a second main terminal. The respective control terminals of the plurality of first switching elements 1 and the plurality of second switching elements 2 are connected to the controller 50. In each of the plurality of switching circuits 10 of the power converter 100, the first main terminal of the first switching element 1 is connected to the first DC terminal 31, the second main terminal of the first switching element 1 is connected to the first main terminal of the second switching element 2, and the second main terminal of the second switching element 2 is connected to the second DC terminal 32. In each of the plurality of switching circuits 10, the first switching element 1 is a high-side switching element (P-side switching element) and the second switching element 2 is a low-side switching element (N-side switching element). Each of the plurality of first switching elements 1 and the plurality of second switching elements 2 may be, for example, an insulated gate bipolar transistor (IGBT). Thus, in each of the plurality of first switching elements 1 and the plurality of second switching elements 2, the control terminal, the first main terminal, and the second main terminal thereof are a gate terminal, a collector terminal, and an emitter terminal, respectively.

The power converter circuit 11 further includes a plurality of (e.g., three) first diodes 4 which are connected one to one to the plurality of (e.g., three) first switching elements 1 in antiparallel and a plurality of (e.g., three) second diodes 5 which are connected one to one to the plurality of (e.g., three) second switching elements 2 in antiparallel. In each of the plurality of first diodes 4, the first diode 4 has its anode connected to the second main terminal (emitter terminal) of the first switching element 1 corresponding to the first diode 4, and has its cathode connected to the first main terminal (collector terminal) of the first switching element 1 corresponding to the first diode 4. In each of the plurality of second diodes 5, the second diode 5 has its anode connected to the second main terminal (emitter terminal) of the second switching element 2 corresponding to the second diode 5, and has its cathode connected to the first main terminal (collector terminal) of the second switching element 2 corresponding to the second diode 5.

The U-phase terminal of the AC load RA1, for example, is connected to the connection node 3U between the first switching element 1U and the second switching element 2U via the AC terminal 41U. The V-phase of the AC load RA1, for example, is connected to the connection node 3V between the first switching element 1V and the second switching element 2V via the AC terminal 41V. The W-phase of the AC load RA1, for example, is connected to the connection node 3W between the first switching element 1W and the second switching element 2W via the AC terminal 41W.

The plurality of resonant capacitors 9 are provided one to one for the plurality of switches 8. Each of the plurality of resonant capacitors 9 is connected between the first end of a corresponding one of the switches 8 and the second DC terminal 32. The power converter 100 includes a plurality of resonant circuits. The plurality of resonant circuits includes a resonant circuit having the resonant capacitor 9U and the resonant inductor L1, a resonant circuit having the resonant capacitor 9V and the resonant inductor L1, and a resonant circuit having the resonant capacitor 9W and the resonant inductor L1. The plurality of resonant circuits shares the resonant inductor L1 in common.

Each of the plurality of switches 8 includes, for example, two IGBTs, namely, a first IGBT 6 and a second IGBT 7, which are connected in antiparallel. In each of the plurality of switches 8, a collector terminal of the first IGBT 6 and an emitter terminal of the second IGBT 7 are connected to each other, and an emitter terminal of the first IGBT 6 and a collector terminal of the second IGBT 7 are connected to each other. In each of the plurality of switches 8, the emitter terminal of the first IGBT 6 is connected to the connection node 3 of a switching circuit 10 corresponding to the switch 8 including the first IGBT 6. In each of the plurality of switches 8, the collector terminal of the second IGBT 7 is connected to the connection node 3 of a switching circuit 10 corresponding to the switch 8 including the second IGBT 7. The switch 8U is connected to the connection node 3U between the first switching element 1U and the second switching element 2U. The switch 8V is connected to the connection node 3V between the first switching element 1V and the second switching element 2V. The switch 8W is connected to the connection node 3W between the first switching element 1W and the second switching element 2W. In the following description, the first IGBT 6 and second IGBT 7 of the switch 8U will be hereinafter sometimes referred to as a "first IGBT 6U" and a "second IGBT 7U," respectively, the first IGBT 6 and second IGBT 7 of the switch 8V will be hereinafter sometimes referred to as a "first IGBT 6V" and a "second IGBT 7V," respectively, and the first IGBT 6 and second IGBT 7 of the switch 8W will be hereinafter sometimes referred to as a "first IGBT 6W" and a "second IGBT 7W," respectively, for the sake of convenience of description.

The plurality of switches 8 are controlled by the controller 50. In other words, the first IGBT 6U, the second IGBT 7U, the first IGBT 6V, the second IGBT 7V, the first IGBT 6W, and the second IGBT 7W are controlled by the controller 50.

The resonant inductor L1 has a first end and a second end. In the resonant inductor L1, the first end of the resonant inductor L1 is connected to the common connection node 25 and the second end of the resonant inductor L1 is connected to the fourth end 154 of the regenerative capacitor 15.

The regenerative capacitor 15 is connected between the second end of the resonant inductor L1 and the second DC terminal 32. The regenerative capacitor 15 may be, for example, a film capacitor.

The protection circuit 17 includes a third diode 13 and a fourth diode 14. The third diode 13 is connected between the common connection node 25 and the first DC terminal 31. In the third diode 13, the anode of the third diode 13 is connected to the common connection node 25. In the third diode 13, the cathode of the third diode 13 is connected to the first DC terminal 31. The fourth diode 14 is connected between the common connection node 25 and the second DC terminal 32. In the fourth diode 14, the anode of the fourth diode 14 is connected to the second DC terminal 32. In the fourth diode 14, the cathode of the fourth diode 14 is connected to the common connection node 25. Thus, the fourth diode 14 is connected to the third diode 13 in series.

The capacitor C10 is connected between the first DC terminal 31 and the second DC terminal 32 and is connected to the power converter circuit 11 in parallel. The capacitor C10 may be, for example, an electrolytic capacitor.

The controller 50 controls the plurality of first switching elements 1, the plurality of second switching elements 2, and the plurality of switches 8. The agent that performs the functions of the controller 50 includes a computer system. The computer system includes a single or a plurality of computers. The computer system includes a processor and a memory as principal hardware components thereof. The computer system serves as the agent that performs the functions of the controller 50 according to the present disclosure by making the processor execute a program stored in the memory of the computer system. The program may be stored in advance in the memory of the computer system. Alternatively, the program may also be downloaded through a telecommunications line or be distributed after having been stored in a non-transitory storage medium such as a memory card, an optical disc, or a hard disk drive (magnetic disk), any of which is readable for the computer system. The processor of the computer system may be made up of a single or a plurality of electronic circuits including a semiconductor integrated circuit (IC) or a large-scale integrated circuit (LSI). Those electronic circuits may be either integrated together on a single chip or distributed on multiple chips, whichever is appropriate. Those multiple chips may be aggregated together in a single device or distributed in multiple devices without limitation.

The controller 50 outputs control signals SU1, SV1, SW1 for controlling the ON/OFF states of the plurality of first switching elements 1U, 1V, 1W, respectively. Each of the control signals SU1, SV1, SW1 may be, for example, a pulse width modulation (PWM) signal having, for example, a potential level that alternates between a first potential level (hereinafter referred to as a "low level") and a second potential level (hereinafter referred to as a "high level") higher than the first potential level. The first switching elements 1U, 1V, 1W respectively turn ON when the control signals SU1, SV1, SW1 have high level and respectively turn OFF when the control signals SU1, SV1, SW1 have low level. In addition, the controller 50 also outputs control signals SU2, SV2, SW2 for controlling the ON/OFF states of the plurality of second switching elements 2U, 2V, 2W, respectively. Each of the control signals SU2, SV2, SW2 may be, for example, a PWM signal having, for example, a potential level that alternates between the first potential level (hereinafter referred to as a "low level") and the second potential level (hereinafter referred to as a "high level") higher than the first potential level. The second switching elements 2U, 2V, 2W respectively turn ON when the control signals SU2, SV2, SW2 have high level and respectively turn OFF when the control signals SU2, SV2, SW2 have low level.

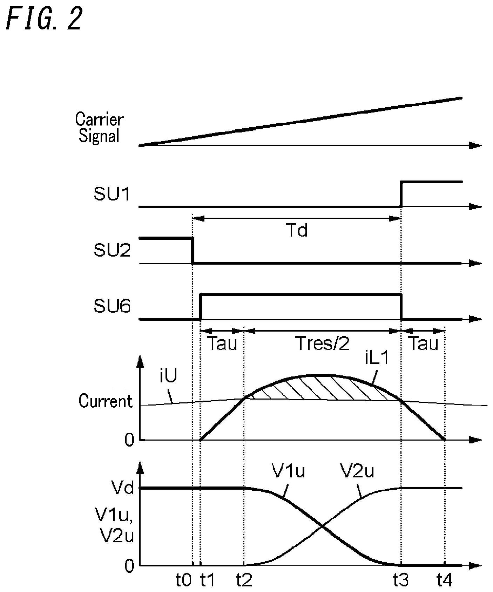

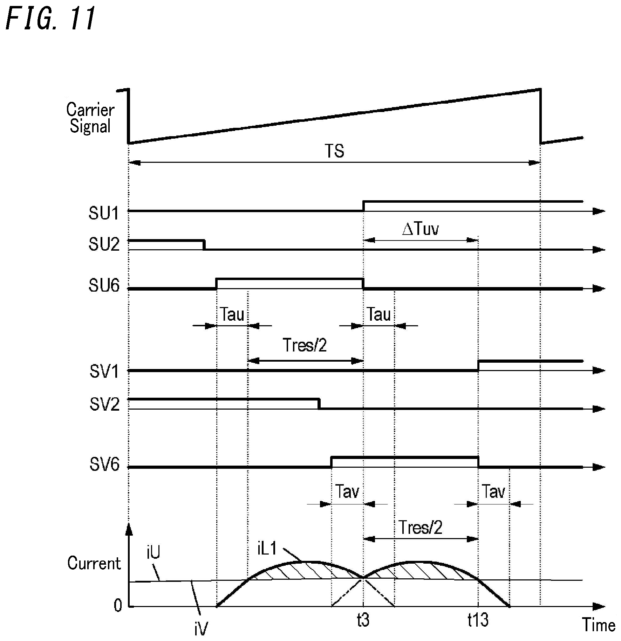

The controller 50 generates, using a carrier signal (refer to FIGS. 2 and 11) having a saw-tooth waveform, the control signals SU1, SV1, SW1 for the plurality of first switching elements 1U, 1V, 1W, respectively, and the control signals SU2, SV2, SW2 for the plurality of second switching elements 2U, 2V, 2W, respectively. More specifically, the controller 50 generates, based on at least the carrier signal and a U-phase voltage instruction value, the control signals SU1, SU2 to be applied to the first switching element 1U and the second switching element 2U, respectively. Also, the controller 50 generates, based on at least the carrier signal and a V-phase voltage instruction value, the control signals SV1, SV2 to be applied to the first switching element 1V and the second switching element 2V, respectively. Furthermore, the controller 50 generates, based on at least the carrier signal and a W-phase voltage instruction value, the control signals SW1, SW2 to be applied to the first switching element 1W and the second switching element 2W, respectively. The U-phase voltage instruction value, the V-phase voltage instruction value, and the W-phase voltage instruction value may be, for example, sinusoidal wave signals, of which the phases are different from each other by 120 degrees and of which the value changes with time. Note that the waveform of the carrier signal does not have to be the saw-tooth waveform but may also be a triangular waveform or a mirror-reversed version of the saw-tooth waveform shown in FIG. 11. Also, the U-phase voltage instruction value, the V-phase voltage instruction value, and the W-phase voltage instruction value each have one cycle of the same length. In addition, one cycle of the U-phase voltage instruction value, the V-phase voltage instruction value, and the W-phase voltage instruction value is longer than one cycle of the carrier signal.

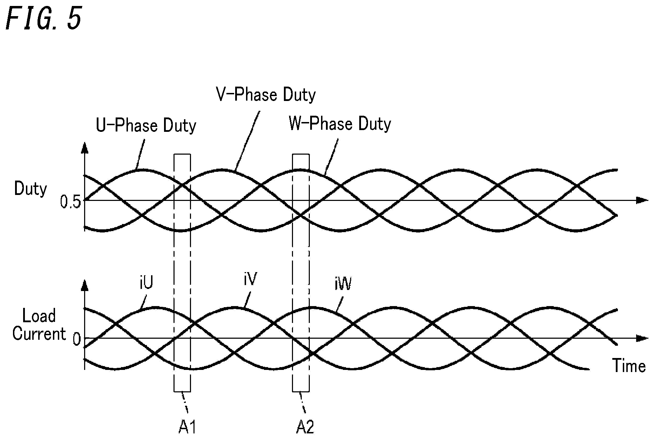

The duty of the control signals SU1, SU2 to be applied from the controller 50 to the first switching element 1U and the second switching element 2U, respectively, varies in accordance with the U-phase voltage instruction value. In FIG. 5, the duty of the control signal SU1 is shown as a "U-phase duty." The controller 50 (refer to FIG. 1) generates the control signal SU1 to be applied to the first switching element 1U by comparing the U-phase voltage instruction value with the carrier signal. The controller 50 generates the control signal SU2 to be applied to the second switching element 2U by inverting the control signal SU1 to be applied to the first switching element 1U. In addition, to prevent the respective ON periods of the first switching element 1U and the second switching element 2U from overlapping with each other, the controller 50 sets a dead time period Td (refer to FIG. 2) between a high-level period of the control signal SU1 and a high-level period of the control signal SU2.

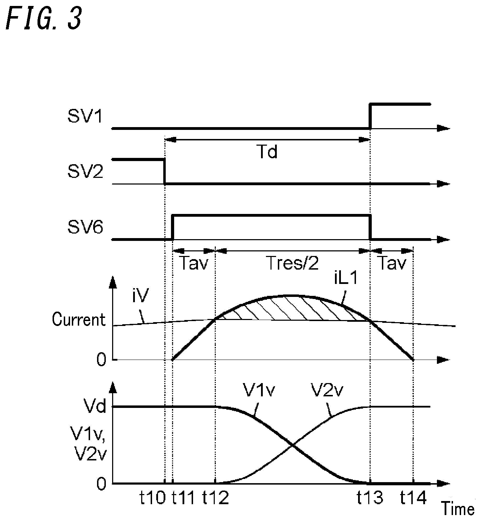

The duty of the control signals SV1, SV2 to be applied from the controller 50 to the first switching element 1V and the second switching element 2V, respectively, varies in accordance with the V-phase voltage instruction value. In FIG. 5, the duty of the control signal SV1 is shown as a "V-phase duty." The controller 50 (refer to FIG. 1) generates the control signal SV1 to be applied to the first switching element 1V by comparing the V-phase voltage instruction value with the carrier signal. The controller 50 also generates the control signal SV2 to be applied to the second switching element 2V by inverting the control signal SV1 to be applied to the first switching element 1V. In addition, to prevent the respective ON periods of the first switching element 1V and the second switching element 2V from overlapping with each other, the controller 50 sets a dead time period Td (refer to FIG. 3) between a high-level period of the control signal SV1 and a high-level period of the control signal SV2.

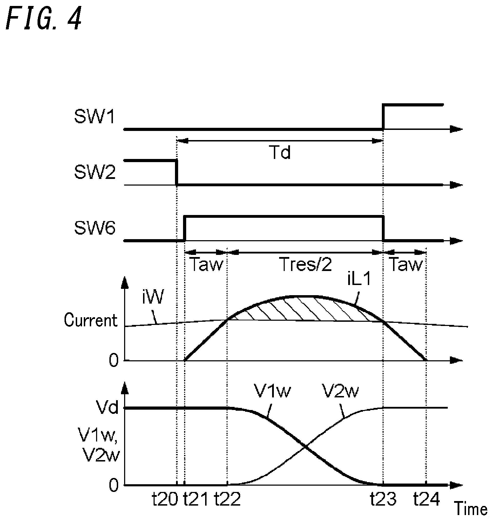

The duty of the control signals SW1, SW2 to be applied from the controller 50 to the first switching element 1W and the second switching element 2W, respectively, varies in accordance with the W-phase voltage instruction value. In FIG. 5, the duty of the control signal SW1 is shown as a "W-phase duty." The controller 50 (refer to FIG. 1) generates the control signal SW1 to be applied to the first switching element 1W by comparing the W-phase voltage instruction value with the carrier signal. The controller 50 generates the control signal SW2 to be applied to the second switching element 2W by inverting the control signal SW1 to be applied to the first switching element 1W. In addition, to prevent the respective ON periods of the first switching element 1W and the second switching element 2W from overlapping with each other, the controller 50 sets a dead time period Td (refer to FIG. 4) between a high-level period of the control signal SW1 and a high-level period of the control signal SW2.

The U-phase voltage instruction value, the V-phase voltage instruction value, and the W-phase voltage instruction value may be, for example, sinusoidal wave signals, of which the phases are different from each other by 120 degrees and of which the value changes with time. Thus, the respective duties (i.e., U-, V-, and W-phase duties) of the control signals SU1, SV1, SW1 change in the form of sinusoidal waves, of which the phases are different from each other by 120 degrees, as shown in FIG. 5, for example. In the same way, the respective duties of the control signals SU2, SV2, SW2 also change in the form of sinusoidal waves, of which the phases are different from each other by 120 degrees.

The controller 50 generates the respective control signals SU1, SU2, SV1, SV2, SW1, SW2 based on the carrier signal, the respective voltage instruction values, and information about the state of the AC load RA1. For example, if the AC load RA1 is a three-phase servo motor, the information about the state of the AC load RA1 may include, for example, detection values provided by a plurality of current sensors for respectively detecting output currents (hereinafter referred to as "load currents") iU, iV, iW flowing respectively through the U-, V-, and W-phases of the AC load RA1.

The plurality of switches 8, the resonant inductor L1, the plurality of resonant capacitors 9, and the regenerative capacitor 15 are provided to make zero-voltage soft switching of the plurality of first switching elements 1 and the plurality of second switching elements 2.

In this power converter 100, the controller 50 controls not only the plurality of first switching elements 1 and the plurality of second switching elements 2 of the power converter circuit 11 but also the plurality of switches 8 as well.

The controller 50 generates control signals SU6, SU7, SV6, SV7, SW6, SW7 for controlling the respective ON/OFF states of the first IGBT 6U, the second IGBT 7U, the first IGBT 6V, the second IGBT 7V, the first IGBT 6W, and the second IGBT 7W, respectively, and outputs the control signals SU6, SU7, SV6, SV7, SW6, SW7 to the respective gate terminals of the first IGBT 6U, the second IGBT 7U, the first IGBT 6V, the second IGBT 7V, the first IGBT 6W, and the second IGBT 7W.

If the first IGBT 6U is ON and the second IGBT 7U is OFF, the switch 8U allows a charging current that flows along a path passing through the regenerative capacitor 15, the resonant inductor L1, the switch 8U, and the resonant capacitor 9U in this order to pass therethrough. The charging current is a current for charging the resonant capacitor 9U with electricity. On the other hand, if the first IGBT 6U is OFF and the second IGBT 7U is ON, the switch 8U allows a discharging current that flows along a path passing through the resonant capacitor 9U, the switch 8U, the resonant inductor L1, and the regenerative capacitor 15 in this order to pass therethrough. The discharging current is a current for discharging electricity from the resonant capacitor 9U.

If the first IGBT 6V is ON and the second IGBT 7V is OFF, the switch 8V allows a charging current that flows along a path passing through the regenerative capacitor 15, the resonant inductor L1, the switch 8V, and the resonant capacitor 9V in this order to pass therethrough. The charging current is a current for charging the resonant capacitor 9V with electricity. On the other hand, if the first IGBT 6V is OFF and the second IGBT 7V is ON, the switch 8V allows a discharging current that flows along a path passing through the resonant capacitor 9V, the switch 8V, the resonant inductor L1, and the regenerative capacitor 15 in this order to pass therethrough. The discharging current is a current for discharging electricity from the resonant capacitor 9V.

If the first IGBT 6W is ON and the second IGBT 7W is OFF, the switch 8W allows a charging current that flows along a path passing through the regenerative capacitor 15, the resonant inductor L1, the switch 8W, and the resonant capacitor 9W in this order to pass therethrough. The charging current is a current for charging the resonant capacitor 9W with electricity. On the other hand, if the first IGBT 6W is OFF and the second IGBT 7W is ON, the switch 8W allows a discharging current that flows along a path passing through the resonant capacitor 9W, the switch 8W, the resonant inductor L1, and the regenerative capacitor 15 in this order to pass therethrough. The discharging current is a current for discharging electricity from the resonant capacitor 9W.

### (3) Operation of power converter

In the following description, as for a current iL1 flowing through the resonant inductor L1, if the current iL1 flows in the direction indicated by the arrow shown in FIG. 1, then the polarity of the current iL1 is supposed to be positive. On the other hand, if the current iL1 flows in the direction opposite from the one indicated by the arrow shown in FIG. 1, then the polarity of the current iL1 is supposed to be negative. In addition, in the following description, as for each of the load currents iU, iV, iW respectively flowing through the U-, V-, and W-phases of the AC load RA1, if the load current iU, iV, iW flows in the direction indicated by a corresponding one of the arrows shown in FIG. 1, then the polarity of the load current iU, iV, iW is supposed to be positive. On the other hand, if the load current iU, iV, iW flows in the direction opposite from the one indicated by the arrow shown in FIG. 1, then the polarity of the load current iU, iV, iW is supposed to be negative. Furthermore, as for each of currents i9U, i9V, i9W flowing through the resonant capacitors 9U, 9V, 9W, respectively, if the current i9U, i9V, i9W flows in the direction indicated by a corresponding one of the arrows shown in FIG. 1, then the polarity of the current i9U, i9V, i9W is supposed to be positive. On the other hand, if the current i9U, i9V, i9W flows in the direction opposite from the one indicated by the arrow shown in FIG. 1, then the polarity of the current i9U, 19V, i9W is supposed to be negative. Thus, in the case of the discharging operation of discharging electricity from the resonant capacitor 9U, 9V, 9W, the polarity of the current i9U, i9V, i9W is positive. On the other hand, in the case of the charging operation of charging the resonant capacitor 9U, 9V, 9W with electricity, the polarity of the current i9U, i9V, i9W is negative.

In this power converter 100, the first IGBT 6U of the switch 8U may turn OFF in a state where the first IGBT 6U of the switch 8U is ON and a positive current iL1 is flowing through the resonant inductor L1, for example. In that case, the current iL1 flowing through the resonant inductor L1 will be regenerated to the power converter circuit 11 via the third diode 13 until the current iL1 goes zero due to the consumption of energy of the resonant inductor L1. Also, in this power converter 100, the second IGBT 7U of the switch 8U may turn OFF in a state where the second IGBT 7U of the switch 8U is ON and a negative current iL1 is flowing through the resonant inductor L1, for example. In that case, the current iL1 will flow through the resonant inductor L1 along the path passing through the fourth diode 14, the resonant inductor L1, and the regenerative capacitor 15 in this order until the current iL1 goes zero due to the consumption of energy of the resonant inductor L1.

Furthermore, in this power converter 100, the first IGBT 6V of the switch 8V may turn OFF in a state where the first IGBT 6V of the switch 8V is ON and a positive current iL1 is flowing through the resonant inductor L1, for example. In that case, the current iL1 flowing through the resonant inductor L1 will be regenerated to the power converter circuit 11 via the third diode 13 until the current iL1 goes zero due to the consumption of energy of the resonant inductor L1. Furthermore, in this power converter 100, the second IGBT 7V of the switch 8V may turn OFF in a state where the second IGBT 7V of the switch 8V is ON and a negative current iL1 is flowing through the resonant inductor L1, for example. In that case, the current iL1 will flow through the resonant inductor L1 along the path passing through the fourth diode 14, the resonant inductor L1, and the regenerative capacitor 15 in this order until the current iL1 goes zero due to the consumption of energy of the resonant inductor L1.

Furthermore, in this power converter 100, the first IGBT 6W of the switch 8W may turn OFF in a state where the first IGBT 6W of the switch 8W is ON and a positive current iL1 is flowing through the resonant inductor L1, for example. In that case, the current iL1 flowing through the resonant inductor L1 will be regenerated to the power converter circuit 11 via the third diode 13 until the current iL1 goes zero due to the consumption of energy of the resonant inductor L1. Furthermore, in this power converter 100, the second IGBT 7W of the switch 8W may turn OFF in a state where the second IGBT 7W of the switch 8W is ON and a negative current iL1 is flowing through the resonant inductor L1, for example. In that case, the current iL1 will flow through the resonant inductor L1 along the path passing through the fourth diode 14, the resonant inductor L1, and the regenerative capacitor 15 in this order until the current iL1 goes zero due to the consumption of energy of the resonant inductor L1.

The controller 50 sets a dead time period Td between the high-level period of the control signal SU1, SV1, SW1 for the first switching element 1U, 1V, 1W and the high-level period of the control signal SU2, SV2, SW2 for the second switching element 2U, 2V, 2W with respect to each of the plurality of switching circuits 10. In addition, the controller 50 also sets the high-level period of a control signal for each of the plurality of switches 8 based on the dead time period Td with respect to a corresponding one of the plurality of switching circuits 10. In this case, the controller 50 sets the length of the high-level period of the control signal for each of the plurality of switches 8 as, for example, the sum of the length of a first period and the length of a second period. The length of the first period is the length of a resonant half cycle which is determined by the capacitance of the resonant capacitor 9 corresponding to the switch 8 and the inductance of the resonant inductor L1. Supposing the resonant cycle is Tres, the length of the first period is Tres/2. The end time of the first period, i.e., the point in time when a period which is an integral number of times as long as the resonant half cycle ends, preferably agrees with the end time of the dead time period Td for the switching circuit 10 corresponding to the switch 8. For example, in the example shown in FIG. 2, the length of the control signal SU6 between a time t2 and a time t3 is the length of the first period. The length of the second period may be, for example, an additional time Tau which is determined by the voltage of the regenerative capacitor 15, the inductance of the resonant inductor L1, and a load current value. The length of the first period described above is an exemplary value according to an ideal design. Alternatively, the length of the first period may also be equal to or greater than 90% and equal to or less than 110% of the length Tres/2. The length of the second period described above is an exemplary value according to an ideal design. Alternatively, the length of the second period may also be equal to or greater than 90% and equal to or less than 110% of the additional time (e.g., an additional time Tau in the example shown in FIG. 2) determined by the voltage of the regenerative capacitor 15, the inductance of the resonant inductor L1, and the load current value.

Next, the basic operation of zero-voltage soft switching to be performed on each of the plurality of first switching elements 1 and the plurality of second switching elements 2 will be described with reference to FIGS. 1-9. As used herein, the "basic operation" refers to an operation to be performed when resonant currents, respectively passing through two or more switches 8 belonging to the plurality of switches 8, are not going to flow simultaneously through the resonant inductor L1. It will be described, after the basic operation has been described, how this power converter 100 operates when the controller 50 determines that the resonant currents respectively passing through the two or more switches 8 belonging to the plurality of switches 8 should be going to flow simultaneously.

### (3.1) Basic operation

When the zero-voltage soft switching is performed on the first switching element 1, the voltage across the first switching element 1 as the target of zero-voltage soft switching needs to be reduced to zero just before the first switching element 1 turns ON. When the zero-voltage soft switching is performed on the second switching element 2, the voltage across the second switching element 2 as the target of zero-voltage soft switching needs to be reduced to zero just before the second switching element 2 turns ON. In the following description, the switching element (which is either the first switching element 1 or the second switching element 2) designated as the target of the zero-voltage soft switching will be hereinafter sometimes referred to as a target switching element."

The basic operation of the controller 50 changes according to the polarity (i.e., either positive or negative) of a load current flowing through the AC terminal 41 connected to the target switching element and depending on whether the charging operation or the discharging operation is performed on the resonant capacitor 9 connected to the target switching element in series or in parallel. The load current has positive polarity when flowing from the AC terminal 41 toward the AC load RA1 and has negative polarity when flowing from the AC load RA1 toward the AC terminal 41. While charging operation is performed on the resonant capacitor 9, the voltage across the resonant capacitor 9 increases. On the other hand, while the discharging operation is performed on the resonant capacitor 9, the voltage across the resonant capacitor 9 decreases. The voltage across each of the plurality of second switching elements 2 is the same as the voltage across the resonant capacitor 9 connected to the second switching element 2 in parallel.

### (3.1.1) Operation of soft-switching first switching element when load current > 0

If the target of the soft switching is a first switching element 1 (hereinafter referred to as a "target first switching element 1") and the polarity of the load current flowing through the AC terminal 41 connected to the target first switching element 1 is positive, then the controller 50 turns ON the first IGBT 6 corresponding to the target first switching element 1. In this manner, the controller 50 causes the resonant inductor L1 and resonant capacitor 9 connected to the target first switching element 1 to produce resonance, thereby charging the resonant capacitor 9 with electricity supplied from the regenerative capacitor 15 and reducing the voltage across the target first switching element 1 to zero. This allows the power converter 100 to make zero-voltage soft switching of the target first switching element 1.

FIG. 2 illustrates how the power converter 100 according to the first embodiment operates in a situation where its controller 50 has performed the basic operation when the load current > 0 and the charging operation is performed on the resonant capacitor 9. The control signals SU1, SU2 to be respectively applied from the controller 50 to the first switching element 1U and the second switching element 2U of the switching circuit 10U in a situation where the target first switching element is the first switching element 1U of the switching circuit 10U are shown in FIG. 2. In addition, the control signal SU6 to be applied from the controller 50 to the first IGBT 6U of the switch 8U, the load current iU flowing through the U-phase of the AC load RA1, the current iL1 flowing through the resonant inductor L1, the voltage V1u across the first switching element 1U, and the voltage V2u across the second switching element 2U are also shown in FIG. 2.

Furthermore, the dead time period Td that the controller 50 sets to prevent the first switching element 1 and the second switching element 2 of the same phase from being in ON state simultaneously is also shown in FIG. 2. Besides, an additional time Tau set by the controller 50 with respect to the control signal SU6 for the first IGBT 6U of the switch 8U is also shown in FIG. 2. The additional time Tau will be described later.

FIG. 3 also illustrates how the power converter 100 according to the first embodiment operates in the situation where its controller 50 has performed the basic operation when the load current > 0 and the charging operation is performed on the resonant capacitor 9. The control signals SV1, SV2 to be respectively applied from the controller 50 to the first switching element 1V and the second switching element 2V of the switching circuit 10V in a situation where the target first switching element is the first switching element 1V of the switching circuit 10V are also shown in FIG. 3. In addition, the control signal SV6 to be applied from the controller 50 to the first IGBT 6V of the switch 8V, the load current iV flowing through the V-phase of the AC load RA1, the current iL1 flowing through the resonant inductor L1, the voltage V1v across the first switching element 1V, and the voltage V2v across the second switching element 2V are also shown in FIG. 3. In FIG. 3, the voltage value of the DC power supply E1 is designated by Vd.

Furthermore, the dead time period Td that the controller 50 sets to prevent the first switching element 1 and the second switching element 2 of the same phase from being in ON state simultaneously is also shown in FIG. 3. Besides, an additional time Tav set by the controller 50 with respect to the control signal SV6 for the first IGBT 6V of the switch 8V is also shown in FIG. 3. The additional time Tav will be described later.

FIG. 4 also illustrates how the power converter 100 according to the first embodiment operates in the situation where the controller 50 has performed the basic operation when the load current > 0 and the charging operation is performed on the resonant capacitor 9. The control signals SW1, SW2 to be respectively applied from the controller 50 to the first switching element 1W and the second switching element 2W of the switching circuit 10W in a situation where the target first switching element is the first switching element 1W of the switching circuit 10W are shown in FIG. 4. In addition, the control signal SW6 to be applied from the controller 50 to the first IGBT 6W of the switch 8W and the load current iW flowing through the W-phase of the AC load RA1 are also shown in FIG. 4. The current iL1 flowing through the resonant inductor L1 is also shown in FIG. 4. The voltage V1w across the first switching element 1W and the voltage V2w across the second switching element 2 are also shown in FIG. 4. In FIG. 4, the voltage value of the DC power supply E1 is designated by Vd.

Furthermore, the dead time period Td that the controller 50 sets to prevent the first switching element 1W and the second switching element 2W from being in ON state simultaneously is also shown in FIG. 4. Besides, an additional time Taw set by the controller 50 with respect to the control signal SW6 for the first IGBT 6W of the switch 8W is also shown in FIG. 4. The additional time Taw will be described later.

The additional time Tau is an amount of time that the controller 50 provides to make the high-level period of the control signal SU6 longer than a first period by setting the beginning time t1 of the high-level period of the control signal SU6 at a point in time earlier than the beginning time t2 of the first period as shown in FIG. 2. The length of the additional time Tau is determined by the value of the load current iU. To start producing the LC resonance from the beginning time t2 of the first period, it is preferable that the value of the current iL1 agree with the value of the load current iU at the beginning time t2 of the first period. This is because as long as iL1 < iU is satisfied, all of the current iL1 flows through the AC load RA1, and therefore, the resonant capacitor 9U cannot be charged. The end time of the high-level period of the control signal SU6 may be simultaneous with, or later than, the end time t3 of the dead time period Td. In the example shown in FIG. 2, the end time of the high-level period of the control signal SU6 is set to be simultaneous with the end time t3 of the dead time period Td. The controller 50 sets the high-level period of the control signal SU6 at Tau + (Tres/2), for example. That is to say, the controller 50 sets the length of the first period at Tres/2. In the switching circuit 10U, the voltage V2u across the second switching element 2U becomes equal to Vd at the end time t3 of the dead time period Td, and the voltage V1u across the first switching element 1U goes zero at the end time t3 of the dead time period Td. In the example shown in FIG. 2, the current iL1 starts flowing through the resonant inductor L1 at the beginning time t1 of the high-level period of the control signal SU6, which is later than the time t0 when the dead time period Td begins, and goes zero at a time t4 when the additional time Tau has passed since the end time t3 of the dead time period Td. As for the current iL1, the current iL1 satisfies iL1 ≥ iU from the beginning time t2 of the first period, and therefore, the current iL1 in the hatched part of the current waveform shown as the fifth waveform from the top of FIG. 2 flows into the resonant capacitor 9U to produce LC resonance. From the end time t3 of the dead time period Td and on, the current iL1 will be regenerated to the power converter circuit 11 via the third diode 13 directly connected to the resonant inductor L1.

To start producing the LC resonance at the beginning time t2 of the first period and end a resonant half cycle at the end time t3 of the dead time period Td as described above, the controller 50 determines the additional time Tau based on the load current iU such that iL1 = iU is satisfied at the beginning time t2 of the first period. More specifically, using either the detection result of the load current iU by a current sensor or a signal processing value thereof, or an estimated value of the load current iU, the inductance L of the resonant inductor L1 that has been stored in advance, and the detection result of the voltage V15 across the regenerative capacitor 15 (i.e., the potential V15 at the fourth terminal of the regenerative capacitor 15), for example, the controller 50 determines the additional time Tau by the equation: Tau = iU × (L/V15). In this case, as the detection result of the load current iU or the signal processing value thereof, either a detection value at a carrier cycle at which the additional time Tau is added or a detection value at a timing closest to the carrier cycle may be used. Also, in this case, as the estimated value of the load current iU, a value of the load current iU estimated at the carrier cycle at which the additional time Tau is added may be used, for example. The resonant half cycle in the case of the basic operation is one half of a resonant cycle, which is the reciprocal of the resonant frequency of a resonant circuit including the resonant inductor L1 and one resonant capacitor 9. Thus, if the inductance of the resonant inductor L1 is L and the capacitance of the resonant capacitor 9 is C, then the resonant half cycle is π × (L·C)^{1/2}. In this embodiment, the controller 50 makes the dead time period Td longer than the resonant half cycle. Alternatively, the controller 50 may also make the dead time period Td equal to or shorter than the resonant half cycle. Nevertheless, the resonant half cycle is preferably set to be equal to or shorter than the dead time period Td.

The additional time Tav is an amount of time that the controller 50 provides to make the high-level period of the control signal SV6 longer than the first period by setting the beginning time t11 of the high-level period of the control signal SV6 at a point in time earlier than the beginning time t12 of the first period as shown in FIG. 3. The length of the additional time Tav is determined by the value of the load current iV. To start producing LC resonance from the beginning time t12 of the first period, it is preferable that the value of the current iL1 agree with the value of the load current iV at the beginning time t12 of the first period. This is because as long as iL1 < iV is satisfied, all of the current iL1 flows through the AC load RA1, and therefore, the resonant capacitor 9V cannot be charged with electricity. The end time of the high-level period of the control signal SV6 may be simultaneous with, or later than, the end time t13 of the dead time period Td. In the example shown in FIG. 3, the end time of the high-level period of the control signal SV6 is set to be simultaneous with the end time t13 of the dead time period Td. The controller 50 sets the high-level period of the control signal SV6 at Tav + (Tres/2). The voltage V1v across the first switching element 1V goes zero at the end time t13 of the dead time period Td. In the example shown in FIG. 3, the current iL1 starts flowing through the resonant inductor L1 at the beginning time t11 of the high-level period of the control signal SV6, which is later than the beginning time t10 of the dead time period Td, and goes zero at a time t14 when the additional time Tav has passed since the end time t13 of the dead time period Td. As for the current iL1, the current iL1 satisfies iL1 ≥ iV from the beginning time t12 of the first period and on, and therefore, the current iL1 in the hatched part of the current waveform shown as the fourth waveform from the top of FIG. 3 flows into the resonant capacitor 9V to produce the LC resonance. From the end time t13 of the dead time period Td and on, the current iL1 will be regenerated to the power converter circuit 11 via the third diode 13 directly connected to the resonant inductor L1.

As described above, the controller 50 determines the additional time Tav based on the load current iV such that iL1 = iV is satisfied at the beginning time t12 of the first period. More specifically, using either the detection result of the load current iV by a current sensor or a signal processing value thereof, or an estimated value of the load current iV, the inductance L of the resonant inductor L1 that has been stored in advance, and the detection result of the voltage V15 across the regenerative capacitor 15, for example, the controller 50 determines the additional time Tav by the equation: Tav = iV × (L/V15). In this case, as the detection result of the load current iV or the signal processing value thereof, either a detection value at a carrier cycle at which the additional time Tav is added or a detection value at a timing closest to the carrier cycle may be used. Also, in this case, as the estimated value of the load current iV, a value of the load current iV estimated at the carrier cycle at which the additional time Tav is added may be used, for example.

The additional time Taw is an amount of time that the controller 50 provides to make the high-level period of the control signal SW6 longer than the first period by setting the beginning time t9 of the high-level period of the control signal SW6 at a point in time earlier than the beginning time t22 of the first period as shown in FIG. 4. The length of the additional time Taw is determined by the value of the load current iW. To start producing LC resonance from the beginning time t22 of the first period, it is preferable that the value of the current iL1 agree with the value of the load current iW at the beginning time t22 of the first period. This is because as long as iL1 < iW is satisfied, all of the current iL1 flows through the AC load RA1, and therefore, the resonant capacitor 9W cannot be charged with electricity. The end time of the high-level period of the control signal SW6 may be simultaneous with, or later than, the end time t23 of the dead time period Td. In the example shown in FIG. 4, the end time of the high-level period of the control signal SW6 is set to be simultaneous with the end time t23 of the dead time period Td. The controller 50 sets the high-level period of the control signal SW6 at Taw + (Tres/2). The voltage V1w across the first switching element 1W goes zero at the end time t23 of the dead time period Td. In the example shown in FIG. 4, the current iL1 starts flowing through the resonant inductor L1 at the beginning time t21 of the high-level period of the control signal SW6, which is later than the beginning time t20 of the dead time period Td, and goes zero at a time t24 when the additional time Taw has passed since the end time t23 of the dead time period Td. As for the current iL1, the current iL1 satisfies iL1 ≥ iW from the beginning time t22 of the first period and on, and therefore, the current iL1 in the hatched part of the current waveform shown as the fourth waveform from the top of FIG. 4 flows into the resonant capacitor 9W to produce the LC resonance. From the end time t23 of the dead time period Td and on, the current iL1 will be regenerated to the power converter circuit 11 via the third diode 13 directly connected to the resonant inductor L1.

The controller 50 determines the additional time Taw based on the load current iW. More specifically, using the detection result of the load current iW by a current sensor, the inductance L of the resonant inductor L1 that has been stored in advance, and the detection result of the voltage V15 across the regenerative capacitor 15, the controller 50 determines the additional time Taw by the equation: Taw = iW × (L/V15). In this case, as the detection result of the load current iW or the signal processing value thereof, either a detection value at a carrier cycle at which the additional time Taw is added or a detection value at a timing closest to the carrier cycle may be used. Also, in this case, as the estimated value of the load current iW, a value of the load current iW estimated at the carrier cycle at which the additional time Taw is added may be used, for example.

### (3.1.2) Operation of soft-switching second switching element when load current > 0

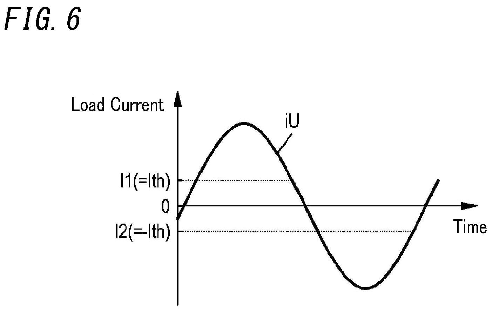

FIG. 6 shows a first current threshold value I1 and a second current threshold value I2 for use in the controller 50 of the power converter 100 according to the first embodiment. If the target of the soft switching is a second switching element 2 (hereinafter referred to as a "target second switching element 2") and the polarity of the load current (which is the load current iU, the load current iV, or the load current iW) flowing through the AC terminal 41 connected to the target second switching element 2 is positive, then the controller 50 compares the current value of the load current with the first current threshold value I1 (= Ith, refer to FIG. 6). Specifically, according to an exemplary operation design of the controller 50, if the current value of the load current is greater than the first current threshold value I1, the controller 50 does not turn the switch 8 ON. On the other hand, if the current value of the load current is less than the first current threshold value I1, the controller 50 turns the switch 8 ON in the dead time period Td. In this case, the dead time period Td is supposed to be longer than the resonant half cycle as in the (3.1.1) section. In the power converter 100, if the current value of the load current is greater than the first current threshold value I1, the controller 50 may perform, using the load current iU, a discharging operation on the resonant capacitor 9U connected to the target second switching element 2 in parallel without turning ON the switch 8 corresponding to the target second switching element 2. This allows the power converter 100 to make zero-voltage soft switching of the target second switching element 2.

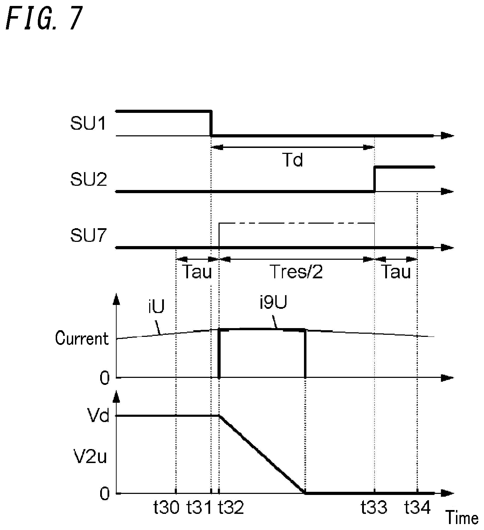

FIG. 7 illustrates how the power converter 100 according to the first embodiment operates in a situation where its controller 50 has performed the basic operation when the load current > 0 and the discharging operation is performed on its resonant capacitor. In FIG. 7, the control signals SU1, SU2, SU7, the load current iU, a current i9U flowing from the resonant capacitor 9U, and the voltage V2u across the second switching element 2U are shown as for a situation where the target second switching element 2 is the second switching element 2U of the switching circuit 10U and the current value of the load current is greater than the first current threshold value I1. In addition, the dead time period Td and the additional time Tau set by the controller 50 with respect to the control signal SU7 for the second IGBT 7U of the switch 8U are also shown in FIG. 7.

If the current value of the load current iU is greater than the first current threshold value I1, the controller 50 does not provide any high-level period for the control signal SU7. In that case, in the power converter 100, a current i9U starts flowing from the resonant capacitor 9U at the beginning time t32 of the first period, the current i9U decreases to zero before the end time t33 of the dead time period Td, and the voltage V2u across the second switching element 2U goes zero before the end time t33 of the dead time period Td. Thus, in the power converter 100, when the control signal SU2 changes from low level to high level at the end time t33 of the dead time period Td, the second switching element 2U is subjected to zero-voltage soft switching.

If the current value of the load current iU is less than the first current threshold value I1, then the controller 50 provides a high-level period for the control signal SU7 as indicated by the two-dot chain in FIG. 7, for example. In that case, the beginning time t32 of the high-level period of the control unit SU7 may be, for example, later than the beginning time t31 of the dead time period Td. Also, the end time of the high-level period of the control signal SU7 is simultaneous with the end time t33 of the dead time period Td. Thus, in the power converter 100, the voltage V2u across the second switching element 2U goes zero before the end time t33 of the dead time period Td. Consequently, in the power converter 100, when the control signal SU2 changes from low level to high level at the end time t33 of the dead time period Td, the second switching element 2U is subjected to zero-voltage soft switching. Alternatively, the beginning time of the high-level period of the control signal SU7 may be a time t30 which is earlier than the beginning time of the first period by the additional time Tau. The end time of the high-level period of the control signal SU7 may be a time t34 which is later than the end time t33 of the dead time period Td by the additional time Tau. Note that the time, preceding or following the first period, of the high-level period does not have to be the additional time Tau but may also be any other preset time. Also, note that the way to determine the high-level period of a control signal for the switch 8 changes according to the threshold value of the load current is only an example of ideal design, and therefore, should not be construed as limiting. For example, even if the current value of the load current is greater than the first current threshold value I1, the controller 50 may also set the high-level period of the control signal for the switch 8 to turn the switch 8 ON during the first period, for example. Also, even if the current value of the load current is less than the first current threshold value I1, the controller 50 does not have to turn the switch 8 ON during the first period. Alternatively, the controller 50 may set the high-level period of the control signal for the switch 8 to, for example, always keep the switch 8 ON throughout the first period irrespective of the first current threshold value I1. Still alternatively, the controller 50 may always keep the switch 8 OFF irrespective of the first current threshold value I1. Yet alternatively, the controller 50 may perform some of the operations described in the (3.1.2) section in combination as appropriate. Furthermore, the controller 50 does not have to bring the high-level period of a control signal for the switch 8 into agreement with the first period as in the example described above. For example, the high-level period of the control signal for the switch 8 may be designed according to the designed time of the resonant half cycle to have a length different from the length of the first period.

### (3.1.3) Operation of soft-switching second switching element when load current < 0

If the polarity of the load current (which is the load current iU, the load current iV, or the load current iW) flowing through the AC terminal 41 connected to the target second switching element 2 is negative, then the controller 50 turns ON the second IGBT 7 corresponding to the target second switching element 2. In this manner, the controller 50 causes the resonant capacitor 9 and the resonant inductor L1 connected to the target second switching element 2 to produce resonance, thereby discharging electricity from the resonant capacitor 9 and reducing the voltage across the target second switching element 2 to zero. This allows the power converter 100 to make zero-voltage soft switching of the target second switching element 2.

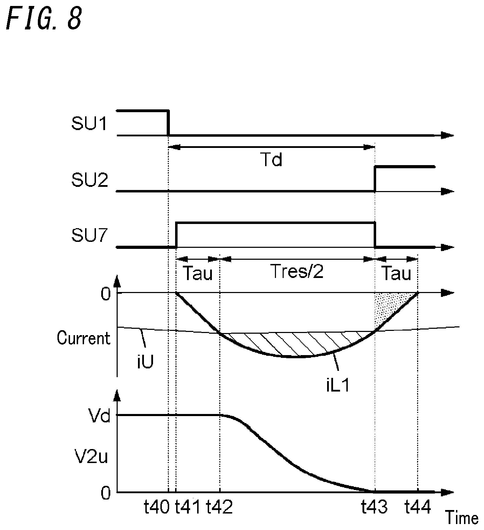

FIG. 8 also illustrates how the power converter 100 according to the first embodiment operates in a situation where its controller 50 has performed the basic operation when the load current < 0 and the discharging operation is performed on the resonant capacitor 9. In FIG. 8, the control signals SU1, SU2, SU7, the load current iU, a current iL1 flowing through the resonant inductor L1, and the voltage V2u across the second switching element 2U are shown as for a situation where the target second switching element 2 is the second switching element 2U of the switching circuit 10U.

Furthermore, the dead time period Td that the controller 50 sets to prevent the first switching element 1 and the second switching element 2 of the same phase from being in ON state simultaneously is also shown in FIG. 8. Besides, an additional time Tau set by the controller 50 with respect to the control signal SU7 for the second IGBT 7U of the switch 8U is also shown in FIG. 8. The end time of the high-level period of the control signal SU7 may be simultaneous with, or later than, the end time t43 of the dead time period Td. In the example shown in FIG. 8, the end time of the high-level period of the control signal SU7 is set to be simultaneous with the end time t43 of the dead time period Td. The controller 50 may set the high-level period of the control signal SU7 at Tau + (Tres/2), for example. In the switching circuit 10U, the voltage V2u across the second switching element 2U goes zero at the end time t43 of the dead time period Td. In the example shown in FIG. 8, the current iL1 starts flowing through the resonant inductor L1 at the beginning time t41 of the high-level period of the control signal SU7, which is later than the beginning time t40 of the dead time period Td, and goes zero at a time t44 when the additional time Tau has passed since the end time t43 of the dead time period Td. As for the current iL1, the current iL1 satisfies iL1 ≤ iU from the beginning time t42 of the first period, and therefore, LC resonance is produced to cause a resonant current (i.e., a discharging current from the resonant capacitor 9U) to flow from the resonant capacitor 9U toward the resonant inductor L1. From the end time t43 of the dead time period Td and on, the current iL1 will be regenerated to the power converter circuit 11 via the fourth diode 14 directly connected to the resonant inductor L1.

To start producing the LC resonance at the beginning time t42 of the first period and end a resonant half cycle at the end time t43 of the dead time period Td, the controller 50 determines the additional time Tau based on the load current iU such that iL1 = iU is satisfied at the beginning time t42 of the first period. More specifically, using either the detection result of the output current iU by a current sensor or a signal processing value thereof, or an estimated value of the load current iU, the inductance L of the resonant inductor L1 that has been stored in advance, and the detection result of the voltage V15 across the regenerative capacitor 15, for example, the controller 50 determines the additional time Tau by the equation: Tau = | iU | × (L/V15). In this case, as the load current value (i.e., the detection result of the load current iU or the signal processing value thereof), either a detection value at a carrier cycle at which the additional time Tau is added or a detection value at a timing closest to the carrier cycle may be used. Also, in this case, as the estimated value of the load current iU, a value of the load current iU estimated at the carrier cycle at which the additional time Tau is added may be used, for example. The resonant half cycle in the case of the basic operation is one half of a resonant cycle, which is the reciprocal of the resonant frequency of a resonant circuit including the resonant inductor L1 and one resonant capacitor 9. Thus, if the inductance of the resonant inductor L1 is L and the capacitance of the resonant capacitor 9 is C, then the resonant half cycle is π × (L·C)^{1/2}. The controller 50 makes the dead time period Td in the case of the basic operation longer than the resonant half cycle in the case of the basic operation, for example. Alternatively, the dead time period Td in the case of the basic operation may also be set to be as long as the resonant half cycle in the case of the basic operation.

### (3.1.4) Operation of soft-switching first switching element when load current < 0

If the polarity of the load current (which is the load current iU, the load current iV, or the load current iW) flowing through the AC terminal 41 connected to the target first switching element 1 is negative, then the controller 50 compares the current value of the load current with the second current threshold value I2 (= -Ith, refer to FIG. 6). If the current value of the load current is less than the second current threshold value I2, the controller 50 does not turn the switch 8 ON according to an exemplary operation design of the controller 50. On the other hand, if the current value of the load current is greater than the second current threshold value I2, the controller 50 turns the switch 8 ON in the first period. In this case, the dead time period Td is supposed to be, for example, longer than the resonant half cycle as in the (3.1.1) section. In the power converter 100, if the current value of the load current is less than the second current threshold value I2, the controller 50 may charge, using the load current, the resonant capacitor 9U connected to the target first switching element 1 in series without turning ON the switch 8 corresponding to the target first switching element 1. This allows the power converter 100 to make zero-voltage soft switching of the target first switching element 1.

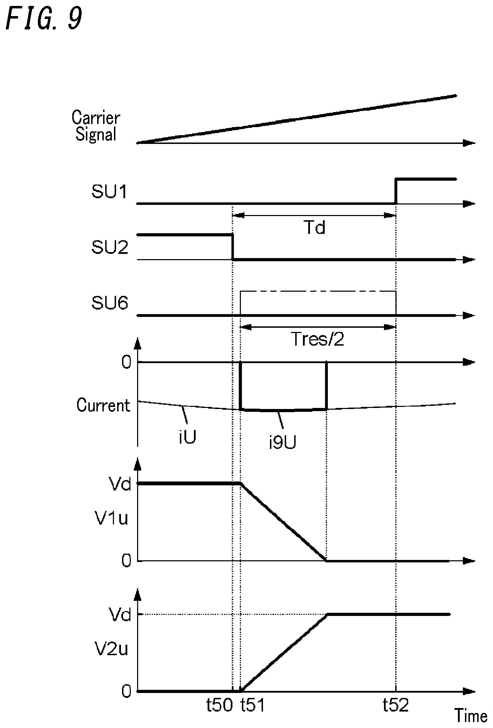

FIG. 9 illustrates how the power converter 100 according to the first embodiment operates in a situation where its controller 50 has performed the basic operation when the load current < 0 and the charging operation is performed on its resonant capacitor 9. In FIG. 9, the control signals SU1, SU2, SU6, the load current iU, a current i9U flowing from the resonant capacitor 9U, and the voltage V2u across the second switching element 2U are shown as for a situation where the target first switching element 1 is the first switching element 1U of the switching circuit 10U and the current value of the load current is greater than the second current threshold value I2 (in other words, a situation where the absolute value of the current value of the load current is less than the absolute value of the second current threshold value I2). In addition, the dead time period Td is also shown in FIG. 9.

If the current value of the load current is less than the second current threshold value I2 (in other words, if the absolute value of the load current is greater than the absolute value of the second current threshold value I2), the controller 50 does not provide any high-level period for the control signal SU6. In that case, in the power converter 100, a current i9U starts flowing through the resonant capacitor 9U at the beginning time t51 of the first period. As a result, in the power converter 100, the resonant capacitor 9U is charged with electricity to cause an increase in the voltage V2u across the second switching element 2U. The current i9U goes zero before the end time t52 of the dead time period Td, and the voltage V1u across the first switching element 1U goes zero before the end time t52 of the dead time period Td. Thus, in the power converter 100, when the control signal SU1 changes from low level to high level at the end time t52 of the dead time period Td, the first switching element 1U is subjected to zero-voltage soft switching.

If the current value of the load current is greater than the second current threshold value I2 (in other words, if the absolute value of the load current is less than the absolute value of the second current threshold value), then the controller 50 provides a high-level period for the control signal SU6 as indicated by the two-dot chain in FIG. 9, for example. In that case, the beginning time of the high-level period of the control signal SU6 is a time t51 which is later than the beginning time t50 of the dead time period Td. Also, the end time of the high-level period of the control signal SU6 is simultaneous with the end time t52 of the dead time period Td. Thus, in the power converter 100, the voltage V1u across the first switching element 1U goes zero before the end time t52 of the dead time period Td. Consequently, in the power converter 100, when the control signal SU1 changes from low level to high level at the end time t52 of the dead time period Td, the first switching element 1U is subjected to zero-voltage soft switching. Also, note that how the way to determine the high-level period of a control signal for the switch 8 changes according to the threshold value of the load current as described above is only an example of ideal design, and therefore, should not be construed as limiting. For example, even if the current value of the load current is less than the second current threshold value I2, the controller 50 may also set the high-level period of the control signal for the switch 8 to turn the switch 8 ON during the first period. Also, even if the current value of the load current is greater than the second current threshold value I2, the controller 50 does not have to turn the switch 8 ON during the first period. Alternatively, the controller 50 may set the high-level period of the control signal for the switch 8 to, for example, always keep the switch 8 ON throughout the first period irrespective of the second current threshold value I2. Still alternatively, the controller 50 may always keep the switch 8 OFF irrespective of the second current threshold value I2. Yet alternatively, the controller 50 may perform some of the operations described in the (3.1.3) section in combination as appropriate. Furthermore, the controller 50 does not have to bring the high-level period of a control signal for the switch 8 into agreement with the first period as in the example described above. For example, the controller 50 may set the high-level period of the control signal for the switch 8 according to the designed time of the resonant half cycle to cause the high-level period of the control signal for the switch 8 to have a length different from the length of the first period.

### (3.2) Operation of shortening control

The controller 50 performs shortening control when determining that resonant currents respectively passing through two or more switches 8 belonging to the plurality of switches 8 should be going to flow simultaneously through the resonant inductor L1 upon the application of a control signal having a preset high-level period to each of the plurality of switches 8. When performing the shortening control, the controller 50 applies a control signal, of which the preset high-level period has been shortened, to a first switch which is one of the two or more switches 8 and applies a control signal having the preset high-level period to a second switch belonging to the two or more switches 8 which is different from the first switch. As used herein, the expression "when the controller 50 determines that resonant currents respectively passing through two or more switches 8 belonging to the plurality of switches 8 should be going to flow simultaneously" means that the controller 50 has presumed in advance that resonant currents respectively passing through two or more switches 8 would be going to flow simultaneously through the resonant inductor L1.

### (3.2.1) Determining whether two-phase resonant currents flow simultaneously

FIG. 5 shows how duties and load currents, respectively corresponding to three-phase voltage instruction values in an AC load connected to a plurality of AC terminals of the power converter 100 according to the first embodiment, change with time. In the power converter 100, the phases of three-phase (i.e., U-, V-, and W-phase) voltage instruction values are different from each other by 120 degrees, but the instruction values of two-phase voltage instructions approach each other every electrical angle of 60 degrees and the duties of two-phase control signals approach each other (refer to first and second regions A1, A2 shown in FIG. 5). Specifically, in the first region A1 shown in FIG. 5, the duty of the U-phase control signal and the duty of the V-phase control signal become around 0.75. In the second region A2 shown in FIG. 5, the duty of the U-phase control signal and the duty of the V-phase control signal become around 0.25. In the power converter 100, the polarity of the resonant current is the same as the polarity of the current iL1. In the first region A1, the polarity of the resonant current is positive. In the second region A2, the polarity of the resonant current is negative. In the power converter 100, in the first region A1, the time lag between the beginning time t1 (refer to FIG. 2) of the high-level period of the control signal SU6 to be applied to the first IGBT 6U and the beginning time t11 (refer to FIG. 3) of the high-level period of the control signal SV6 to be applied to the first IGBT 6V becomes so short in one cycle time of the carrier signal, for example, that the U-phase resonant current and the V-phase resonant current may flow simultaneously through the resonant inductor L1. In the power converter 100, the direction of the resonant current in the second region A2 is reverse from that of the resonant current in the first region A1 but the U-phase resonant current and the V-phase resonant current may flow simultaneously through the resonant inductor L1.

Supposing the capacitance of each of the plurality of resonant capacitors 9U, 9V, and 9W is C, if a U-phase current and a V-phase current flow simultaneously through the resonant inductor L1, a capacitor having a combined capacitance (= 2 × C) of the resonant capacitor 9U and the resonant capacitor 9V is connected to the resonant inductor L1 in series in an equivalent circuit. Thus, in the power converter 100, if two-phase currents flow simultaneously through the resonant inductor L1, then the resonant frequency of a resonant circuit including the resonant inductor L1 changes compared to a situation where a single-phase current flows through the resonant inductor L1. Consequently, the power converter 100 may be unable to make zero-voltage soft switching.

### (3.2.1.1) When charging operation is performed on resonant capacitor

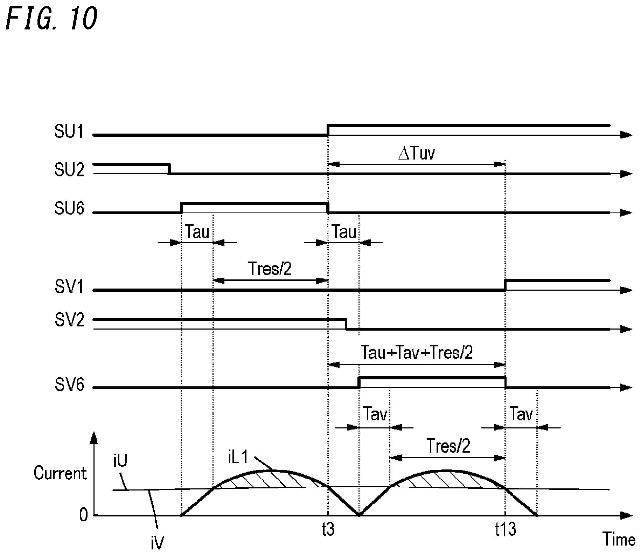

FIG. 10 shows an exemplary boundary condition between a situation where a U-phase current (i.e., a current passing through the switch 8U) and a V-phase current (i.e., a current passing through the switch 8V) do not overlap with each other (i.e., do not flow simultaneously) in the resonant inductor L1 and a situation where the U-phase current and the V-phase current overlap with each other (i.e., flow simultaneously) in the resonant inductor L1. The boundary condition will be described with reference to FIG. 10. FIG. 11 shows an exemplary boundary condition between a situation where a U-phase resonant current and a V-phase resonant current do not overlap with each other (i.e., do not flow simultaneously) in the resonant inductor L1 and a situation where the U-phase resonant current and the V-phase resonant current overlap with each other (i.e., flow simultaneously) in the resonant inductor L1. The boundary condition will be described with reference to FIG. 11.

In the power converter 100, if the time lag ΔTuv is equal to or greater than Tau + Tav + (Tres/2), then the U-phase current and the V-phase current do not overlap with each other in the resonant inductor L1 as shown in FIG. 10. On the other hand, if the time lag ΔTuv is less than Tau + Tav + (Tres/2), then the U-phase current and the V-phase current overlap with each other. The time lag ΔTuv is a time lag between the beginning time t3 of the high-level period of the control signal SU1 and the beginning time t13 of the high-level period of the control signal SV1.

In the power converter 100, if the time lag ΔTuv is equal to or greater than Tres/2, then the U-phase resonant current and the V-phase resonant current do not overlap with each other in the resonant inductor L1 as shown in FIG. 11. On the other hand, if the time lag ΔTuv is less than Tres/2, then the U-phase resonant current and the V-phase resonant current overlap with each other in the resonant inductor L1 as shown in FIG. 11.

The controller 50 sets a threshold value for the time lag ΔTuv at Tres/2. If the time lag ΔTuv is less than Tres/2, the controller 50 presumes that the U-phase resonant current and the V-phase resonant current would flow simultaneously through the resonant inductor L1. Note that this threshold value is only an example, and the threshold value may also be set at any other value. For example, with the error of the Tres/2 value taken into account, the threshold value may also be set at a value even larger than Tres/2. For example, the threshold value may be set at Tau + Tav + (Tres/2). In that case, if the time lag ΔTuv is less than Tau + Tav + (Tres/2), the controller 50 presumes that a U-phase current (i.e., a current flowing through the switch 8U) and a V-phase current (i.e., a current flowing through the switch 8V) would overlap with each other in the resonant inductor L1. Alternatively, with the error of the Tau + Tav + (Tres/2) value, for example, taken into account, the threshold value may also be set at a value even larger than Tau + Tav + (Tres/2). In addition, the above-described method for calculating the time lag ΔTuv to determine whether the two-phase resonant currents flow simultaneously is only an example. Rather, any other calculating method may also be adopted as long as a time lag corresponding to the time lag ΔTuv may be calculated. For example, as the time lag ΔTuv for use to determine whether the two-phase resonant currents flow simultaneously, a time lag between the end time t0 (refer to FIG. 2) of the high-level period of the control signal SU2 and the end time t10 (refer to FIG. 3) of the high-level period of the control signal SV2 may also be used.

Also, in the following description, the time lag between the beginning time t3 (refer to FIG. 2) of the high-level period of the control signal SU1 and the beginning time t23 (refer to FIG. 4) of the high-level period of the control signal SW1 will be hereinafter designated by "ΔTuw." In the power converter 100, if the time lag ΔTuw is equal to or greater than Tres/2, then the U-phase resonant current and the W-phase resonant current do not overlap with each other in the resonant inductor L1. On the other hand, if the time lag ΔTuv is less than Tres/2, then the U-phase resonant current and the W-phase resonant current overlap with each other in the resonant inductor L1.

The controller 50 sets a threshold value for the time lag ΔTuw at Tres/2. If the time lag ΔTuw is less than the threshold value, the controller 50 presumes that the U-phase resonant current and the W-phase resonant current would flow simultaneously through the resonant inductor L1. Note that this threshold value is only an example, and the threshold value may also be set at any other value. For example, with the error of the Tres/2 value taken into account, the threshold value may also be set at a value even larger than Tres/2. For example, the threshold value may be set at Tau + Taw + (Tres/2). In that case, if the time lag ΔTuw is less than Tau + Taw + (Tres/2), the controller 50 presumes that a U-phase current (i.e., a current flowing through the switch 8U) and a W-phase current (i.e., a current flowing through the switch 8W) would overlap with each other in the resonant inductor L1. Alternatively, with the error of the Tau + Taw + (Tres/2) value taken into account, the threshold value may also be set at a value even larger than Tau + Taw + (Tres/2). In addition, the above-described method for calculating the time lag ΔTuw to determine whether the two-phase resonant currents flow simultaneously is only an example. Rather, any other calculating method may also be adopted as long as a time lag corresponding to the time lag ΔTuw may be calculated. For example, as the time lag ΔTuw for use to determine whether the two-phase resonant currents flow simultaneously, a time lag between the end time t0 (refer to FIG. 2) of the high-level period of the control signal SU2 and the end time t20 (refer to FIG. 4) of the high-level period of the control signal SW2 may also be used.

Also, in the following description, the time lag between the beginning time t13 (refer to FIG. 3) of the high-level period of the control signal SV1 to be applied to the first switching element 1V of the switching circuit 10V and the beginning time t23 (refer to FIG. 4) of the high-level period of the control signal SW1 to be applied to the first switching element 1W of the switching circuit 10W will be hereinafter designated by "ΔTvw." In the power converter 100, if the time lag ΔTvw is equal to or greater than Tres/2, then the V-phase resonant current and the W-phase resonant current do not overlap with each other in the resonant inductor L1. On the other hand, if the time lag ΔTvw is less than Tres/2, then the V-phase resonant current and the W-phase resonant current overlap with each other in the resonant inductor L1.

The controller 50 sets a threshold value for the time lag ΔTvw at Tres/2. If the time lag ΔTvw is less than the threshold value, the controller 50 presumes that the V-phase resonant current and the W-phase resonant current would flow simultaneously through the resonant inductor L1. Note that this threshold value is only an example, and the threshold value may also be set at any other value. For example, with the error of the Tres/2 value taken into account, the threshold value may also be set at a value even larger than Tres/2. For example, the threshold value may be set at Tav + Taw + (Tres/2). In that case, if the time lag ΔTvw is less than Tav + Taw + (Tres/2), the controller 50 presumes that a V-phase current (i.e., a current flowing through the switch 8V) and a W-phase current (i.e., a current flowing through the switch 8W) would overlap with each other in the resonant inductor L1. Alternatively, with the error of the Tav + Taw + (Tres/2) value taken into account, the threshold value may also be set at a value even larger than Tav + Taw + (Tres/2). In addition, the above-described method for calculating the time lag ΔTvw to determine whether the two-phase resonant currents flow simultaneously is only an example. Rather, any other calculating method may also be adopted as long as a time lag corresponding to the time lag ΔTvw may be calculated. For example, as the time lag ΔTvw for use to determine whether the two-phase resonant currents flow simultaneously, a time lag between the end time t0 (refer to FIG. 3) of the high-level period of the control signal SV2 and the end time t20 (refer to FIG. 4) of the high-level period of the control signal SW2 may also be used.

### (3.2.1.2) When discharging operation is performed on resonant capacitor

When performing a discharging operation on the resonant capacitor 9, the controller 50 may also determine, using the same time lag and threshold value as in the case of performing the charging operation on the resonant capacitor 9, whether two-phase resonant currents are going to flow simultaneously.

For example, if the time lag between the beginning time of the high-level period of the control signal SU2 and the beginning time of the high-level period of the control signal SV2 is less than the threshold value (e.g., Tres/2), then the controller 50 presumes that the U-phase resonant current and the V-phase resonant current would overlap with each other. Note that this threshold value is only an example, and the threshold value may also be set at any other value. For example, with the error of the Tres/2 value taken into account, the threshold value may also be set at a value even larger than Tres/2. For example, the threshold value may be set at Tau + Tav + (Tres/2). In that case, if the time lag ΔTuv is less than Tau + Tav + (Tres/2), the controller 50 presumes that a U-phase current (i.e., a current flowing through the switch 8U) and a V-phase current (i.e., a current flowing through the switch 8V) would overlap with each other in the resonant inductor L1. Alternatively, with the error of the Tau + Tav + (Tres/2) value taken into account, the threshold value may also be set at a value even larger than Tau + Tav + (Tres/2).

Also, if the time lag between the beginning time of the high-level period of the control signal SU2 and the beginning time of the high-level period of the control signal SW2 is less than the threshold value (e.g., Tres/2), then the controller 50 presumes that the U-phase resonant current and the W-phase resonant current would overlap with each other. Note that this threshold value is only an example, and the threshold value may also be set at any other value. For example, with the error of the Tres/2 value taken into account, the threshold value may also be set at a value even larger than Tres/2. For example, the threshold value may be set at Tau + Taw + (Tres/2). In that case, if the time lag ΔTuw is less than Tau + Taw + (Tres/2), the controller 50 presumes that a U-phase current (i.e., a current flowing through the switch 8U) and a W-phase current (i.e., a current flowing through the switch 8W) would overlap with each other in the resonant inductor L1. Alternatively, with the error of the Tau + Taw + (Tres/2) value taken into account, the threshold value may also be set at a value even larger than Tau + Taw + (Tres/2).

Furthermore, if the time lag between the beginning time of the high-level period of the control signal SV2 and the beginning time of the high-level period of the control signal SW2 is less than the threshold value (e.g., Tres/2), then the controller 50 presumes that the V-phase resonant current and the W-phase resonant current would overlap with each other. Note that this threshold value is only an example, and the threshold value may also be set at any other value. For example, with the error of the Tres/2 value taken into account, the threshold value may also be set at a value even larger than Tres/2. For example, the threshold value may be set at Tav + Taw + (Tres/2). In that case, if the time lag ΔTvw is less than Tav + Taw + (Tres/2), the controller 50 presumes that a V-phase current (i.e., a current flowing through the switch 8V) and a W-phase current (i.e., a current flowing through the switch 8W) would overlap with each other in the resonant inductor L1. Alternatively, with the error of the Tav + Taw + (Tres/2) value taken into account, the threshold value may also be set at a value even larger than Tav + Taw + (Tres/2).

### (3.2.2) Shortening control to be performed when two-phase resonant currents are determined to flow simultaneously

When performing the shortening control, the controller 50 applies a control signal, of which the preset high-level period has been shortened, to a first switch which is one of the two or more switches 8 and applies a control signal having the preset high-level period to a second switch belonging to the two or more switches 8 which is different from the first switch. The first switch is one of the two or more switches 8 and corresponds to one switching circuit 10 belonging to two or more switching circuits 10. The two or more switching circuits 10 are switching circuits 10 respectively corresponding to the two or more switches 8 which belong to the plurality of switching circuits 10. The two or more switching circuits 10 respectively cause load currents having mutually different absolute values to flow therethrough. The one switching circuit causes a load current, of which the absolute value is the largest among the two or more switching circuits 10, to flow therethrough.

### (3.2.2.1) When charging operation is performed on resonant capacitor

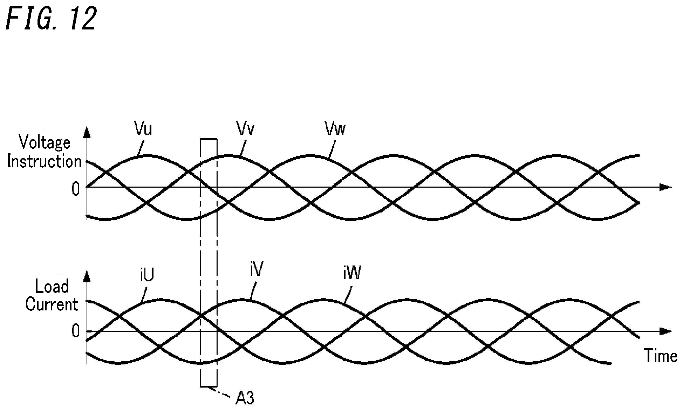

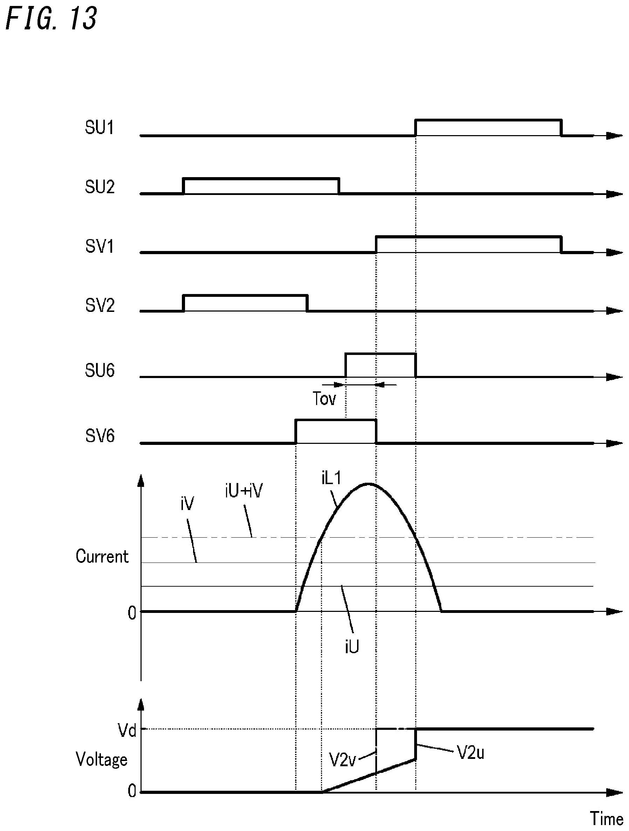

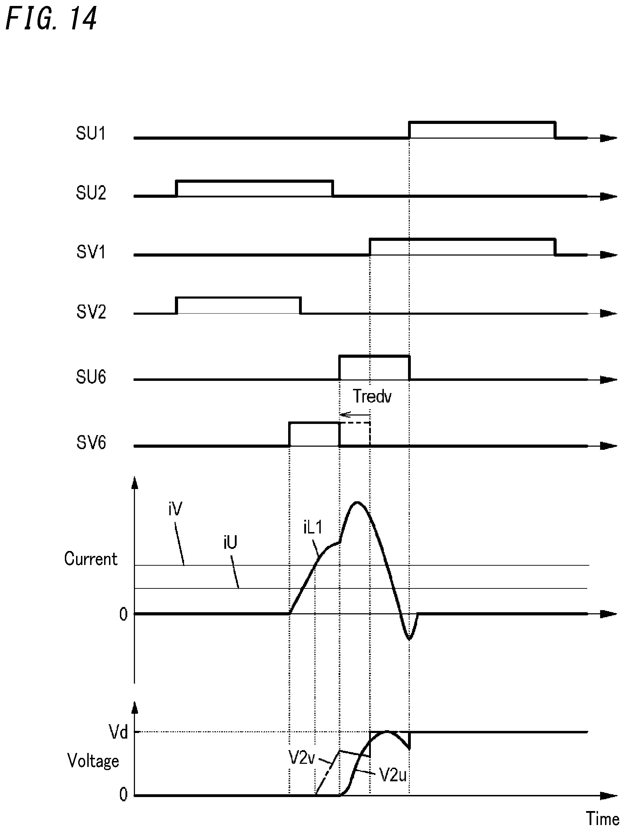

Next, it will be described with reference to FIGS. 13 and 14 how the controller 50 performs the operation of shortening control when determining in advance that two-phase resonant currents, namely, U-phase and V-phase resonant currents, should be going to flow simultaneously in a period corresponding to the third region A3 shown in FIG. 12.

FIG. 12 illustrates a condition on which the controller 50 performs the shortening control in the power converter 100 according to the first embodiment. In the upper portion of FIG. 12, shown are a voltage instruction value Vu for the U-phase switching circuit 10U, a voltage instruction value Vv for the V-phase switching circuit 10V, and a voltage instruction value Vw for the W-phase switching circuit 10W, all of which are given by an external device to the controller 50. On the other hand, in the lower portion of FIG. 12, shown are the U-phase load current iU, the V-phase load current iV, and the W-phase load current iW. In the third region A3 shown in FIG. 12, the absolute value of the voltage instruction value Vv is greater than the absolute value of the voltage instruction value Vu. In addition, in the third region A3 shown in FIG. 12, the absolute value of the load current iV is greater than the absolute value of the load current iU.

FIG. 13 is a timing chart illustrating how the power converter 100 according to the first embodiment operates in a situation where its controller 50 has determined that resonant currents should overlap with each other when the load current > 0 and the charging operation is performed on its resonant capacitor 9. In FIG. 13, shown is a timing chart of the control signals SU1, SU2, SV1, SV2, the control signals SU6, SV6, the load currents iU, iV, the current iL1, and the voltages V2u, V2v across the second switching elements 2U, 2V when the controller 50 has determined that the U-phase resonant current and the V-phase resonant current should be going to flow simultaneously and before the shortening control is performed. On the other hand, FIG. 14 is a timing chart illustrating how the power converter 100 according to the first embodiment operates when its controller 50 has performed the shortening control. In FIG. 14, shown is a timing chart of the control signals SU1, SU2, SV1, SV2, the control signals SU6, SV6, the load currents iU, iV, the current iL1, and the voltages V2u, V2v across the second switching elements 2U, 2V when the controller 50 has performed the shortening control. Note that FIGS. 13 and 14 are timing charts corresponding to only a part of one cycle of the carrier signal.

In the power converter 100, unless the controller 50 performs the shortening control, when the control signals SU1, SV1 change from the low-level period to the high-level period (i.e., when the dead time period corresponding to the U- and V-phases ends), the voltages V2u, V2v across the second switching elements 2U, 2V do not increase to reach Vd as shown in FIG. 13. That is to say, unless the controller 50 performs the shortening control, the resonant capacitors 9U, 9V have not been charged with electricity yet at a point in time when the dead time period corresponding to the U- and V-phases ends. Thus, unless the shortening control is performed, the voltages across the first switching elements 1U, 1V do not decrease to zero at the end time of the dead time period corresponding to the U- and V-phases. Consequently, in the power converter 100, the first switching elements 1U, 1V are switched by hard switching.

In a situation where a charging operation is performed on the resonant capacitor, when determining that the U-phase resonant current and the V-phase resonant current should be going to flow simultaneously, the controller 50 performs shortening control on either the high-level period of the control signal SU6 or the high-level period of the control signal SV6. FIG. 14 illustrates an example in which the high-level period of the control signal SV6 is shortened by a shortening period Tredv. Alternatively, the controller 50 may shorten the high-level period of the control signal SU6, instead of the high-level period of the control signal SV6. Specifically, to prevent the control signals SU6, SV6 from overlapping with each other, the controller 50 shortens the high-level period of the control signal SV6 by the shortening period Tredv. In the example shown in FIG. 14, the controller 50 sets the length of the shortening period Tredv at the length of an overlap period Tov (refer to FIG. 13) between the high-level period of the control signal SU6 that has not been subjected to the shortening control yet and the high-level period of the control signal SV6 that has not been subjected to the shortening control yet. In the example shown in FIG. 13, the length of the overlap period Tov is the time lag between the beginning time of the high-level period of the control signal SU6 and the end time of the high-level period of the control signal SV6. Thus, in the example shown in FIG. 14, the shortening period Tredv is as long as the overlap period Tov. In the example shown in FIG. 14, the controller 50 shortens the high-level period of the control signal SV6 to advance, by the shortening period Tredv, the end time of the high-level period of the control signal SV6 that has not been subjected to the shortening control yet.

As can be seen from the waveform of the current iL1 shown in FIG. 13 and the waveform of the current iL1 shown in FIG. 14, in the power converter 100, the controller 50 may shorten the period in which the U-phase resonant current and the V-phase resonant current overlap with each other by performing the shortening control when the controller 50 determines in advance that the two-phase resonant currents, namely, the U-phase resonant current and the V-phase resonant current, should be going to flow simultaneously. In addition, as can be seen from the voltages V2u, V2v across the second switching elements 2U, 2V shown in FIG. 13 and the voltages V2u, V2v across the second switching elements 2U, 2V shown in FIG. 14, not only hard switching of the first switching element 1U but also hard switching of the first switching element 1V are relieved as well. The value of the voltage across the first switching circuit 10U is Vd. Thus, the sum of the voltage V1u across the first switching element 1U and the voltage V2u across the second switching element 2U is Vd. As used herein, the expression "hard switching of the first switching element 1U is relieved" means that either zero-voltage soft switching of the first switching element 1U is realized or the value of the voltage V1u across the first switching element 1U when the first switching element 1U turns ON is reduced. As for each of the other first switching elements 1V, 1W, the expression "hard switching of the switching element is relieved" means the same as in the situation where hard switching of the first switching element 1U is relieved. That is to say, the expression "hard switching of a switching element is relieved" means that either zero-voltage soft switching of the switching element is realized or the value of the voltage across the switching element when the switching element turns ON is reduced.

In the same way, in this power converter 100, the controller 50 may not only shorten the period in which the U-phase resonant current and the W-phase resonant current overlap with each other but also relieve hard switching of the switching elements 1U, 1W as well by performing the shortening control when the controller 50 determines in advance that the two-phase resonant currents, namely, the U-phase resonant current and the W-phase resonant current, should be going to flow simultaneously.

In addition, in this power converter 100, the controller 50 may not only shorten the period in which the V-phase resonant current and the W-phase resonant current overlap with each other but also relieve hard switching of the switching elements 1V, 1W as well by performing the shortening control when the controller 50 determines in advance that the two-phase resonant currents, namely, the V-phase resonant current and the W-phase resonant current, should be going to flow simultaneously.

### (3.2.2.2) When discharging operation is performed on resonant capacitor

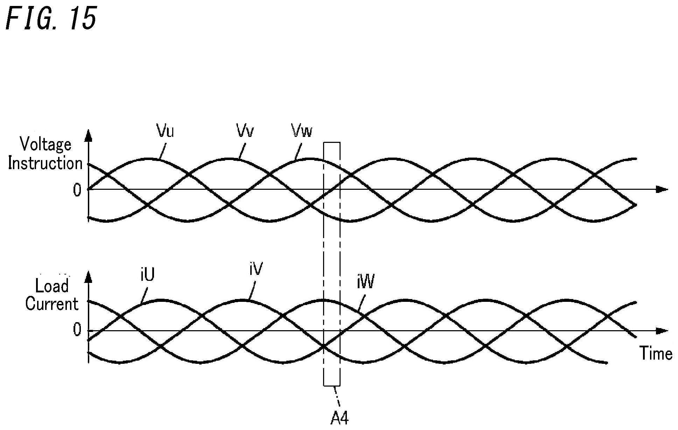

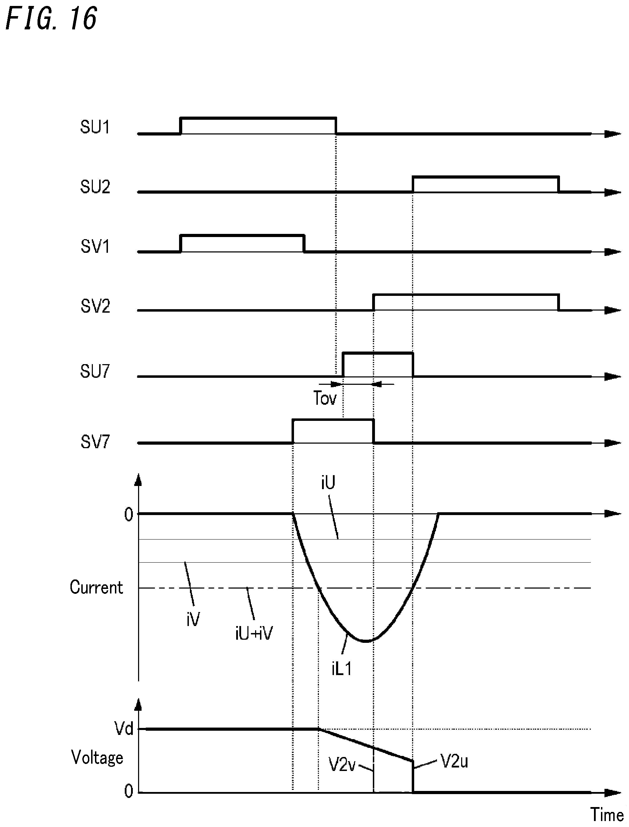

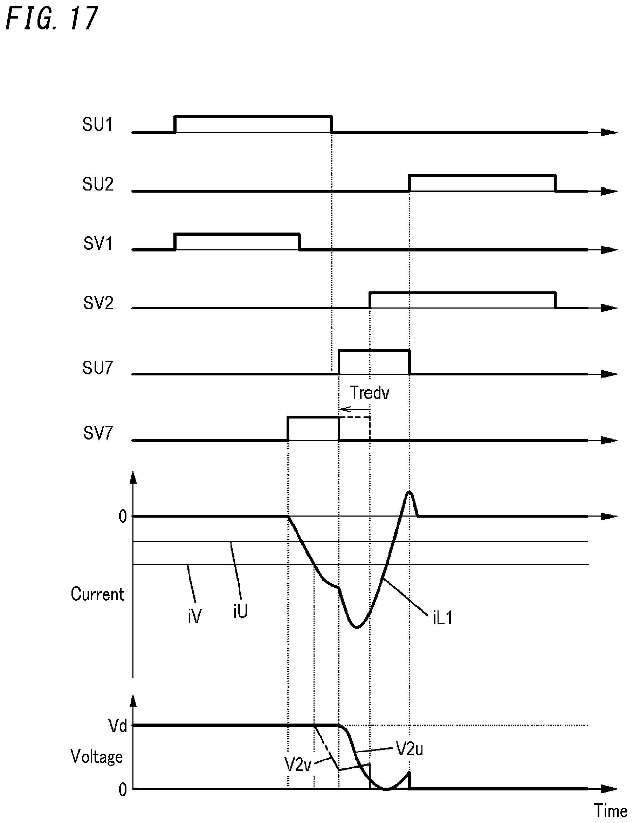

Next, it will be described with reference to FIGS. 16 and 17 how the controller 50 performs the operation of shortening control when determining in advance that two-phase resonant currents, namely, U-phase and V-phase resonant currents, should be going to flow simultaneously in a period corresponding to the fourth region A4 shown in FIG. 15.

FIG. 15 illustrates a condition on which the controller 50 performs the shortening control in the power converter 100 according to the first embodiment. FIG. 15 may be interpreted in the same way as FIG. 12, and therefore, description thereof will be omitted herein. In the fourth region A4 shown in FIG. 15, the absolute value of the voltage instruction value Vv is greater than the absolute value of the voltage instruction value Vu. In addition, in the fourth region A4 shown in FIG. 15, the absolute value of the load current iV is greater than the absolute value of the load current iU.

FIG. 16 is a timing chart illustrating how the power converter 100 according to the first embodiment operates in a situation where its controller 50 has determined that resonant currents should overlap with each other when the load current < 0 and the discharging operation is performed on its resonant capacitor 9. In FIG. 16, shown is a timing chart of the control signals SU1, SU2, SV1, SV2, the control signals SU7, SV7, the load currents iU, iV, the current iL1, and the voltages V2u, V2v across the second switching elements 2U, 2V when the controller 50 has determined that the U-phase resonant current and the V-phase resonant current should be going to flow simultaneously and before the shortening control is performed. On the other hand, FIG. 17 is a timing chart illustrating how the power converter 100 according to the first embodiment operates when its controller 50 has performed the shortening control. In FIG. 17, shown is a timing chart of the control signals SU1, SU2, SV1, SV2, the control signals SU7, SV7, the load currents iU, iV, and the current iL1 when the controller 50 has performed the shortening control. Note that FIGS. 16 and 17 are timing charts corresponding to only a part of one cycle of the carrier signal.

In the power converter 100, unless the controller 50 performs the shortening control, when the control signals SU1, SV1 change from the low-level period to the high-level period (i.e., when the dead time period corresponding to the U- and V-phases ends), the voltages V2u, V2v across the second switching elements 2U, 2V do not decrease to zero as shown in FIG. 16. That is to say, unless the controller 50 performs the shortening control, electricity has not been discharged from the resonant capacitors 9U, 9V yet at a point in time when the dead time period corresponding to the U- and V-phases ends. Thus, in the power converter 100, unless the controller 50 performs the shortening control, the second switching elements 2U, 2V are switched by hard switching.

The controller 50 compares the absolute value of the load current iU with the absolute value of the load current iV to shorten, by a shortening period Tredv, the high-level period of the control signal SV7 for the switch 8V, through which the load current iV with the greater absolute value flows. Specifically, to prevent the control signals SU7, SV7 from overlapping with each other, the controller 50 shortens the high-level period of the control signal SV7 by the shortening period Tredv. In the example shown in FIG. 17, the controller 50 sets the length of the shortening period Tredv at the length of an overlap period Tov (refer to FIG. 16) between the high-level period of the control signal SU7 that has not been subjected to the shortening control yet and the high-level period of the control signal SV7 that has not been subjected to the shortening control yet. In the example shown in FIG. 16, the length of the overlap period Tov is the time lag between the beginning time of the high-level period of the control signal SU7 and the end time of the high-level period of the control signal SV7. Thus, in the example shown in FIG. 17, the shortening period Tredv is as long as the overlap period Tov. In the example shown in FIG. 17, the controller 50 shortens the high-level period of the control signal SV7 to advance, by the shortening period Tredv, the end time of the high-level period of the control signal SV7 that has not been subjected to the shortening control yet.

As can be seen from the waveform of the current iL1 shown in FIG. 16 and the waveform of the current iL1 shown in FIG. 17, in the power converter 100, the controller 50 may shorten the period in which the U-phase resonant current and the V-phase resonant current overlap with each other by performing the shortening control when the controller 50 determines in advance that the two-phase resonant currents, namely, the U-phase resonant current and the V-phase resonant current, should be going to flow simultaneously. In addition, as can be seen from the voltages V2u, V2v across the second switching elements 2U, 2V shown in FIG. 16 and the voltages V2u, V2v across the second switching elements 2U, 2V shown in FIG. 17, not only hard switching of the second switching element 2U but also hard switching of the second switching element 2V are relieved as well. As used herein, the expression "hard switching of the second switching element 2U is relieved" means that either zero-voltage soft switching of the second switching element 2U is realized or the value of the voltage V2u across the second switching element 2U when the second switching element 2U turns ON is reduced. As for each of the other switching elements 2V, 2W, the expression "hard switching of the switching element is relieved" means the same as in the situation where hard switching of the second switching element 2U is relieved. That is to say, the expression "hard switching of a switching element is relieved" means that either zero-voltage soft switching of the switching element is realized or the value of the voltage across the switching element when the switching element turns ON is reduced.

In the same way, in this power converter 100, the controller 50 may not only shorten the period in which the U-phase resonant current and the W-phase resonant current overlap with each other but also relieve hard switching of the switching elements 1U, 1W as well by performing the shortening control when the controller 50 determines in advance that the two-phase resonant currents, namely, the U-phase resonant current and the W-phase resonant current, should be going to flow simultaneously.

In addition, in this power converter 100, the controller 50 may not only shorten the period in which the V-phase resonant current and the W-phase resonant current overlap with each other but also relieve hard switching of the switching elements 1V, 1W as well by performing the shortening control when the controller 50 determines in advance that the two-phase resonant currents, namely, the V-phase resonant current and the W-phase resonant current, should be going to flow simultaneously.

### (4) Advantages

In a power converter 100 according to the first embodiment, the controller 50 sets a dead time period Td between a high-level period of the control signal for the first switching element 1 and a high-level period of the control signal for the second switching element 2 with respect to each of the plurality of switching circuits 10. The controller 50 sets a high-level period of the control signal for each of the plurality of switches 8 based on the dead time period Td for a corresponding one of the plurality of switching circuits 10. In addition, the controller 50 performs shortening control when determining that resonant currents respectively passing through two or more switches 8 belonging to the plurality of switches 8 should be going to flow simultaneously through the resonant inductor L1 upon application of a control signal having a preset high-level period to each of the plurality of switches 8. When performing the shortening control, the controller 50 applies a control signal, of which the preset high-level period has been shortened, to a first switch which is one of the two or more switches 8 and applies a control signal having the preset high-level period to a second switch belonging to the two or more switches 8. The second switch is different from the first switch.

This configuration not only allows zero-voltage soft switching to be performed but also allows the switching loss to be cut down.

In addition, in the power converter 100, when the controller 50 performs the shortening control, the first switch is one of the two or more switches 8 and corresponds to one switching circuit 10 belonging to two or more switching circuits 10. The two or more switching circuits 10 are switching circuits 10 respectively corresponding to the two or more switches 8 which belong to the plurality of switching circuits 10. The two or more switching circuits 10 respectively cause load currents having mutually different absolute values to flow therethrough. The one switching circuit causes a load current, of which the absolute value is the largest among the two or more switching circuits 10, to flow therethrough.

This configuration allows for uniformizing switches 8, of which hard switching is to be relieved, among the plurality of switches 8.

### (Variation of first embodiment)

A power converter 100 according to a variation of the first embodiment has the same circuit configuration as the power converter 100 according to the first embodiment (refer to FIG. 1), and therefore, illustration and description thereof will be omitted herein.

In the power converter 100 according to the variation of the first embodiment, the controller 50 just determines the first switch and the second switch differently when performing the shortening control.

The first switch is one of the two or more switches 8 and corresponds to one switching circuit 10 belonging to two or more switching circuits 10. The two or more switching circuits 10 are switching circuits 10 respectively corresponding to the two or more switches 8 which belong to the plurality of switching circuits 10. Voltage instruction values for the two or more switching circuits 10 have mutually different absolute values. The voltage instruction value for the one switching circuit 10 has the largest absolute value among the voltage instruction values for the two or more switching circuits 10.

Therefore, in the third region A3 shown in FIG. 12, for example, the absolute value of the voltage instruction value Vv for the V-phase switching circuit 10V is greater than the absolute value of the voltage instruction value Vu for the U-phase switching circuit 10U. In this case, the drawings for use to illustrate the shortening control operation of the controller 50 are the same as FIGS. 13 and 14 for the first embodiment. In addition, in the fourth region shown in FIG. 15, the absolute value of the voltage instruction value Vv for the V-phase switching circuit 10 is greater than the absolute value of the voltage instruction value Vu for the U-phase switching circuit 10. In this case, the drawings for use to illustrate the shortening control operation of the controller 50 are the same as FIGS. 16 and 17 for the first embodiment.

### (Second embodiment)

A power converter 100 according to a second embodiment has the same circuit configuration as the power converter 100 according to the first embodiment (refer to FIG. 1), and therefore, illustration and description thereof will be omitted herein.

In the power converter 100 according to the second embodiment, the controller 50 determines the first switch and the second switch differently when performing the shortening control.

In the power converter 100 according to the second embodiment, when the controller 50 performs the shortening control, the first switch is one of the two or more switches 8 and corresponds to one switching circuit 10 belonging to two or more switching circuits 10. The two or more switching circuits 10 are switching circuits 10 respectively corresponding to the two or more switches 8 which belong to the plurality of switching circuits 10. The two or more switching circuits 10 respectively cause load currents having mutually different absolute values to flow therethrough. The one switching circuit 10 causes a load current, of which the absolute value is smallest among the two or more switching circuits 10, to flow therethrough.

### (1.1) When charging operation is performed on resonant capacitor

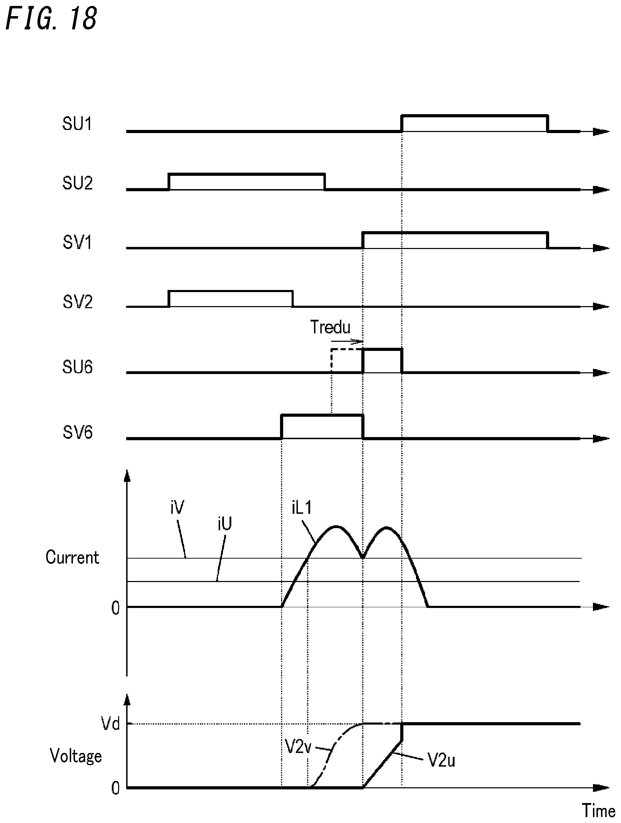

Next, it will be described with reference to FIGS. 13 and 18 how the controller 50 performs the operation of shortening control when determining in advance that two-phase resonant currents, namely, U-phase and V-phase resonant currents, should be going to flow simultaneously in a period corresponding to the third region A3 shown in FIG. 12. In the third region A3 shown in FIG. 12, the absolute value of the load current iU is smaller than the absolute value of the load current iV.

In FIG. 13, shown is a timing chart of the control signals SU1, SU2, SV1, SV2, the control signals SU6, SV6, the load currents iU, iV, the current iL1, and the voltages V2u, V2v across the second switching elements 2U, 2V when the controller 50 has determined that the U-phase resonant current and the V-phase resonant current should be going to flow simultaneously and before the shortening control is performed. On the other hand, FIG. 18 is a timing chart of the control signals SU1, SU2, SV1, SV2, the control signals SU6, SV6, the load currents iU, iV, and the current iL1 in a situation where the controller 50 has performed the shortening control. Note that FIGS. 13 and 18 are timing charts corresponding to only a part of one cycle of the carrier signal.

In the power converter 100, unless the controller 50 performs the shortening control, when the control signals SU1, SV1 change from the low-level period to the high-level period (i.e., when the dead time period corresponding to the U- and V-phases ends), the voltages V2u, V2v across the second switching elements 2U, 2V do not increase to reach Vd as shown in FIG. 13. Consequently, in the power converter 100, the first switching elements 1U, 1V are switched by hard switching.

The controller 50 compares the absolute value of the load current iU with the absolute value of the load current iV to shorten, by a shortening period Tredu, the high-level period of the control signal SU6 for the switch 8U, through which a load current with the smaller absolute value flows. Specifically, to prevent the control signals SU6, SV6 from overlapping with each other, the controller 50 shortens the high-level period of the control signal SU6 by the shortening period Tredu. FIG. 18 is a timing chart illustrating how the power converter 100 according to the second embodiment operates in a situation where the controller 50 has performed the shortening control. In the example shown in FIG. 18, the controller 50 sets the length of the shortening period Tredu at the length of an overlap period Tov (refer to FIG. 13) between the high-level period of the control signal SU6 that has not been subjected to the shortening control yet and the high-level period of the control signal SV6 that has not been subjected to the shortening control yet. In the example shown in FIG. 18, the shortening period Tredu is as long as the overlap period Tov. In the example shown in FIG. 18, the controller 50 shortens the high-level period of the control signal SU6 to postpone, by the shortening period Tredu, the beginning time of the high-level period of the control signal SVU that has not been subjected to the shortening control yet.

As can be seen from the waveform of the current iL1 shown in FIG. 13 and the waveform of the current iL1 shown in FIG. 18, in the power converter 100, the controller 50 may shorten the period in which the U-phase resonant current and the V-phase resonant current overlap with each other by performing the shortening control when the controller 50 determines in advance that the two-phase resonant currents, namely, the U-phase resonant current and the V-phase resonant current, should be going to flow simultaneously. In addition, as can be seen from the voltages V2u, V2v across the second switching elements 2U, 2V shown in FIG. 13 and the voltages V2u, V2v across the second switching elements 2U, 2V shown in FIG. 18, not only hard switching of the first switching element 1U is relieved but also zero-voltage soft switching of the first switching element 1V is realized as well.

In the same way, in this power converter 100, the controller 50 may not only shorten the period in which the U-phase resonant current and the W-phase resonant current overlap with each other but also relieve hard switching of the switching elements 1U, 1W as well by performing the shortening control when the controller 50 determines in advance that the two-phase resonant currents, namely, the U-phase resonant current and the W-phase resonant current, should be going to flow simultaneously.

In addition, in this power converter 100, the controller 50 may not only shorten the period in which the V-phase resonant current and the W-phase resonant current overlap with each other but also relieve hard switching of the switching elements 1V, 1W as well by performing the shortening control when the controller 50 determines in advance that the two-phase resonant currents, namely, the V-phase resonant current and the W-phase resonant current, should be going to flow simultaneously.

### (1.2) When discharging operation is performed on resonant capacitor

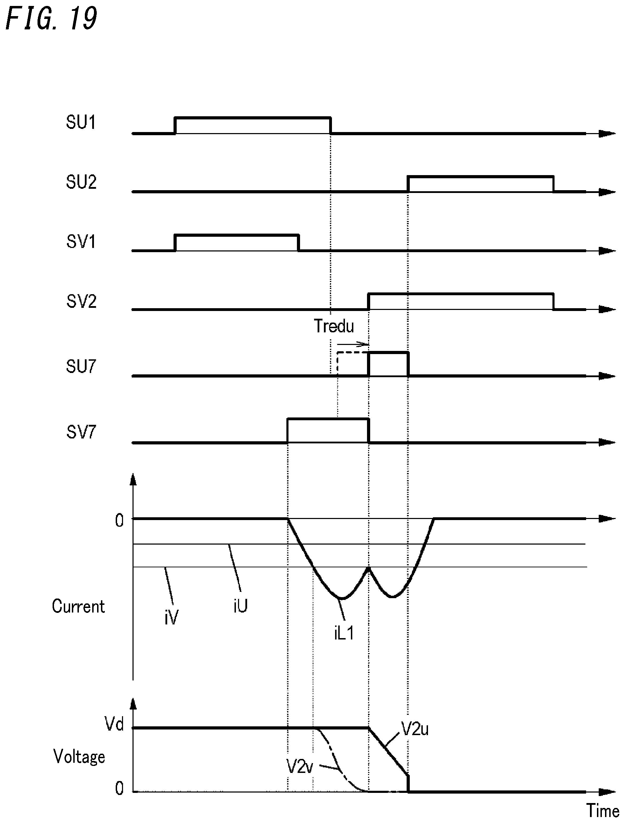

Next, it will be described with reference to FIGS. 16 and 19 how the controller 50 performs the operation of shortening control when determining in advance that two-phase resonant currents, namely, U-phase and V-phase resonant currents, should be going to flow simultaneously in a period corresponding to the fourth region A4 shown in FIG. 15.

FIG. 15 may be interpreted in the same way as FIG. 12, and therefore, description thereof will be omitted herein. In the fourth region A4 shown in FIG. 15, the absolute value of the voltage instruction value Vv is greater than the absolute value of the voltage instruction value Vu. In addition, in the fourth region A4 shown in FIG. 15, the absolute value of the load current iU is greater than the absolute value of the load current iV.

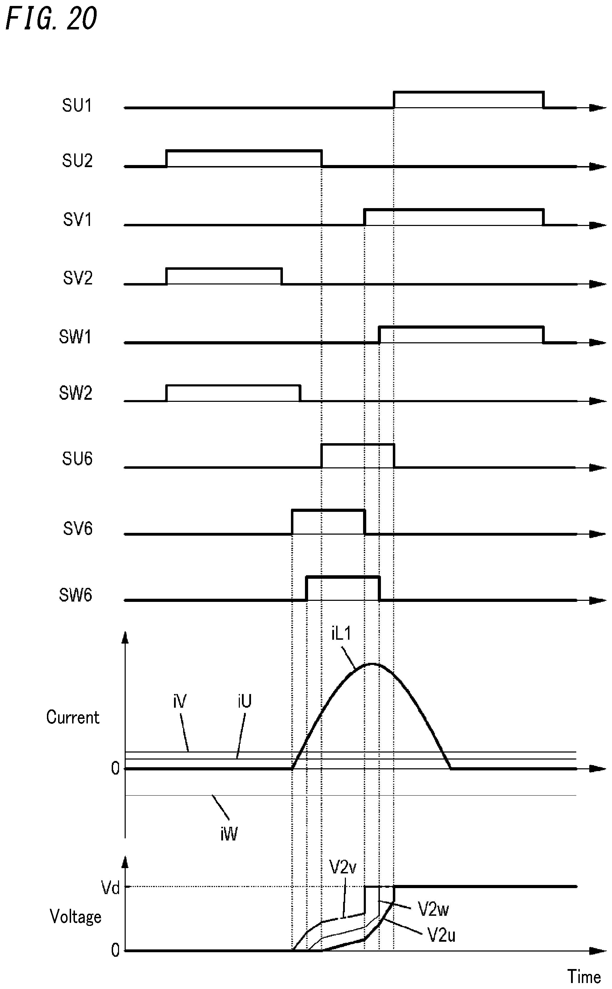

In FIG. 16, shown is a timing chart of the control signals SU1, SU2, SV1, SV2, the control signals SU7, SV7, the load currents iU, iV, the current iL1, and the voltages V2u, V2v across the second switching elements 2U, 2V when the controller 50 has determined that the U-phase resonant current and the V-phase resonant current should be going to flow simultaneously and before the shortening control is performed. On the other hand, FIG. 19 is a timing chart illustrating how the power converter 100 according to the second embodiment operates when its controller 50 has performed the shortening control. In FIG. 19, shown is a timing chart of the control signals SU1, SU2, SV1, SV2, the control signals SU7, SV7, the load currents iU, iV, and the current iL1 when the controller 50 has performed the shortening control. Note that FIGS. 16 and 20 are timing charts corresponding to only a part of one cycle of the carrier signal.

In the power converter 100, unless the controller 50 performs the shortening control, when the control signals SU1, SV1 change from the low-level period to the high-level period, the voltages V2u, V2v across the second switching elements 2U, 2V do not decrease to zero as shown in FIG. 16. That is to say, in the power converter 100, unless the controller 50 performs the shortening control, the second switching elements 2U, 2V are switched by hard switching.

The controller 50 compares the absolute value of the load current iU with the absolute value of the load current iV to shorten, by a shortening period Tredu, the high-level period of the control signal SU7 for the switch 8U, through which a load current with the smaller absolute value flows. Specifically, to prevent the control signals SU7, SV7 from overlapping with each other, the controller 50 shortens the high-level period of the control signal SU7 by the shortening period Tredu. In the example shown in FIG. 19, the controller 50 sets the length of the shortening period Tredu at the length of an overlap period Tov (refer to FIG. 16) between the high-level period of the control signal SU7 that has not been subjected to the shortening control yet and the high-level period of the control signal SV7 that has not been subjected to the shortening control yet. In the example shown in FIG. 16, the length of the overlap period Tov is the time lag between the beginning time of the high-level period of the control signal SU7 and the end time of the high-level period of the control signal SV7. Thus, in the example shown in FIG. 19, the shortening period Tredu is as long as the overlap period Tov. In the example shown in FIG. 19, the controller 50 shortens the high-level period of the control signal SU7 to postpone, by the shortening period Tredu, the beginning time of the high-level period of the control signal SU7 that has not been subjected to the shortening control yet.

As can be seen from the waveform of the current iL1 shown in FIG. 16 and the waveform of the current iL1 shown in FIG. 19, in the power converter 100, the controller 50 may shorten the period in which the U-phase resonant current and the V-phase resonant current overlap with each other by performing the shortening control when the controller 50 determines in advance that the two-phase resonant currents, namely, the U-phase resonant current and the V-phase resonant current, should be going to flow simultaneously. In addition, as can be seen from the voltages V2u, V2v across the second switching elements 2U, 2V shown in FIG. 16 and the voltages V2u, V2v across the second switching elements 2U, 2V shown in FIG. 19, not only hard switching of the second switching element 2U is relieved but also zero-voltage soft switching of the second switching element 2V is realized as well.

In the same way, in this power converter 100, the controller 50 may not only shorten the period in which the U-phase resonant current and the W-phase resonant current overlap with each other but also relieve hard switching of one of the switching elements 2U, 2W and realize the zero-voltage soft switching of the other switching element 2U, 2W as well by performing the shortening control when the controller 50 determines in advance that the two-phase resonant currents, namely, the U-phase resonant current and the W-phase resonant current, should be going to flow simultaneously.

In addition, in this power converter 100, the controller 50 may not only shorten the period in which the V-phase resonant current and the W-phase resonant current overlap with each other but also relieve hard switching of one of the switching elements 2U, 2W and realize the zero-voltage soft switching of the other switching element 2U, 2W as well by performing the shortening control when the controller 50 determines in advance that the two-phase resonant currents, namely, the V-phase resonant current and the W-phase resonant current, should be going to flow simultaneously.

### (2) Advantages

In a power converter 100 according to the second embodiment, the controller 50 sets a dead time period Td between a high-level period of the control signal for the first switching element 1 and a high-level period of the control signal for the second switching element 2 with respect to each of the plurality of switching circuits 10. The controller 50 sets a high-level period of the control signal for each of the plurality of switches 8 based on the dead time period Td for a corresponding one of the plurality of switching circuits 10. In addition, the controller 50 performs shortening control when determining that resonant currents respectively passing through two or more switches 8 belonging to the plurality of switches 8 should be going to flow simultaneously through the resonant inductor L1 upon application of a control signal having a preset high-level period to each of the plurality of switches 8. When performing the shortening control, the controller 50 applies a control signal, of which the preset high-level period has been shortened, to a first switch which is one of the two or more switches 8 and applies a control signal having the preset high-level period to a second switch belonging to the two or more switches 8. The second switch is different from the first switch.

This configuration not only allows zero-voltage soft switching to be performed but also allows the switching loss to be cut down.

In addition, in the power converter 100, when the controller 50 performs the shortening control, the first switch is one of the two or more switches 8 and corresponds to one switching circuit 10 belonging to two or more switching circuits 10. The two or more switching circuits 10 are switching circuits 10 respectively corresponding to the two or more switches 8 which belong to the plurality of switching circuits 10. The two or more switching circuits 10 respectively cause load currents having mutually different absolute values to flow therethrough. The one switching circuit causes a load current, of which the absolute value is the smallest among the two or more switching circuits 10, to flow therethrough.

This configuration allows for uniformizing switches 8, of which hard switching is to be relieved, among the plurality of switches 8. In addition, according to this configuration, the high-level period of a control signal for the switch 8 corresponding to the switching circuit 10, which causes a load current with the smallest absolute value to flow therethrough, is shortened, thus allowing the switching loss to be further cut down.

### (Variation of second embodiment)

A power converter 100 according to a variation of the second embodiment has the same circuit configuration as the power converter 100 according to the first embodiment (refer to FIG. 1), and therefore, illustration and description thereof will be omitted herein.

In the power converter 100 according to the variation of the second embodiment, the controller 50 just determines the first switch and the second switch differently when performing the shortening control.

The first switch is one of the two or more switches 8 and corresponds to one switching circuit 10 belonging to two or more switching circuits 10. The two or more switching circuits 10 are switching circuits 10 respectively corresponding to the two or more switches 8 which belong to the plurality of switching circuits 10. Voltage instruction values for the two or more switching circuits 10 have mutually different absolute values. The voltage instruction value for the one switching circuit 10 has the smallest absolute value among the voltage instruction values for the two or more switching circuits 10.

Therefore, in the third region A3 shown in FIG. 12, for example, the absolute value of the voltage instruction value Vu for the U-phase switching circuit 10U is smaller than the absolute value of the voltage instruction value Vv for the V-phase switching circuit 10V. In this case, the drawings for use to illustrate the shortening control operation of the controller 50 are the same as FIGS. 13 and 18 for the first embodiment. In addition, in the fourth region shown in FIG. 15, the absolute value of the voltage instruction value Vu for the U-phase switching circuit 10 is smaller than the absolute value of the voltage instruction value Vv for the V-phase switching circuit 10. In this case, the drawings for use to illustrate the shortening control operation of the controller 50 are the same as FIGS. 16 and 19 for the second embodiment.

### (Third embodiment)

A power converter 100 according to a third embodiment has the same circuit configuration as the power converter 100 according to the first embodiment (refer to FIG. 1), and therefore, illustration and description thereof will be omitted herein.

In the power converter 100 according to the third embodiment, even when the controller 50 determines that resonant currents respectively passing through three switches 8 belonging to the plurality of switches 8 should be going to flow simultaneously (i.e., when the controller 50 determines in advance that three-phase resonant currents would be going to flow simultaneously), the controller 50 also performs the shortening control, which is a difference from the power converter 100 according to the first embodiment. As used herein, the expression "when determining that the resonant currents respectively passing through three switches 8 belonging to the plurality of switches 8 should be going to flow simultaneously" refers to a situation where it has been presumed in advance that the resonant currents respectively passing through the three switches 8 would flow simultaneously through the resonant inductor L1. The controller 50 determines that the three-phase resonant currents should be going to flow simultaneously if, for example, the time lag between the beginning time of the high-level period of the control signal SU6 corresponding to the U-phase and the beginning time of the high-level period of the control signal SV6 corresponding to the V-phase, the time lag between the beginning time of the high-level period of the control signal SV6 corresponding to the V-phase and the beginning time of the high-level period of the control signal SW6 corresponding to the W-phase, and the time lag between the beginning time of the high-level period of the control signal SW6 corresponding to the W-phase and the beginning time of the high-level period of the control signal SU6 corresponding to the U-phase are all less than a threshold value.

Supposing the capacitance of each of the plurality of resonant capacitors 9U, 9V, and 9W is C, if a U-phase current, a V-phase current, and a W-phase current flow simultaneously through the resonant inductor L1, a capacitor having a combined capacitance (= 3 × C) of the resonant capacitor 9U, the resonant capacitor 9V, and the resonant capacitor 9W is connected to the resonant inductor L1 in series in an equivalent circuit. Thus, in the power converter 100, if three-phase currents flow simultaneously through the resonant inductor L1, then the resonant frequency of a resonant circuit including the resonant inductor L1 changes compared to a situation where a single-phase current flows through the resonant inductor L1. Consequently, the power converter 100 may be unable to make zero-voltage soft switching. Note that unless the controller 50 performs the shortening control, such a phenomenon that three-phase resonant currents flow simultaneously is likely to occur when a servo motor serving as the AC load RA1 is rotating at low speeds.

When performing the shortening control, the controller 50 applies a control signal, of which the preset high-level period has been shortened, to a first switch that is one of the three switches 8 and applies a control signal having the preset high-level period to a second switch belonging to the three switches 8 which is different from the first switch. In addition, the controller 50 further applies a control signal, of which the high-level period is a shortened one of the preset high-level period, to a third switch belonging to the three switches 8 which is different from the first switch and the second switch. When the controller 50 performs the shortening control, the first switch is one of the three switches 8 and corresponds to a first switching circuit 10 belonging to three switching circuits 10. The three switching circuits 10 are switching circuits 10 respectively corresponding to the three switches 8 which belong to the plurality of switching circuits 10. The three switching circuits 10 respectively cause load currents having mutually different absolute values to flow therethrough. The first switching circuit 10 causes a load current, of which the absolute value is the smallest in the three switching circuits 10, to flow therethrough. The third switch is one of the three switches 8 and corresponds to a second switching circuit 10 belonging to the three switching circuits 10. The three switching circuits 10 are switching circuits 10 respectively corresponding to the three switches 8 which belong to the plurality of switching circuits 10. The three switching circuits 10 respectively cause load currents having mutually different absolute values to flow therethrough. The second switching circuit 10 causes a load current, of which the absolute value is second smallest in the three switching circuits 10, to flow therethrough.

### (1.1) When charging operation is performed on resonant capacitor

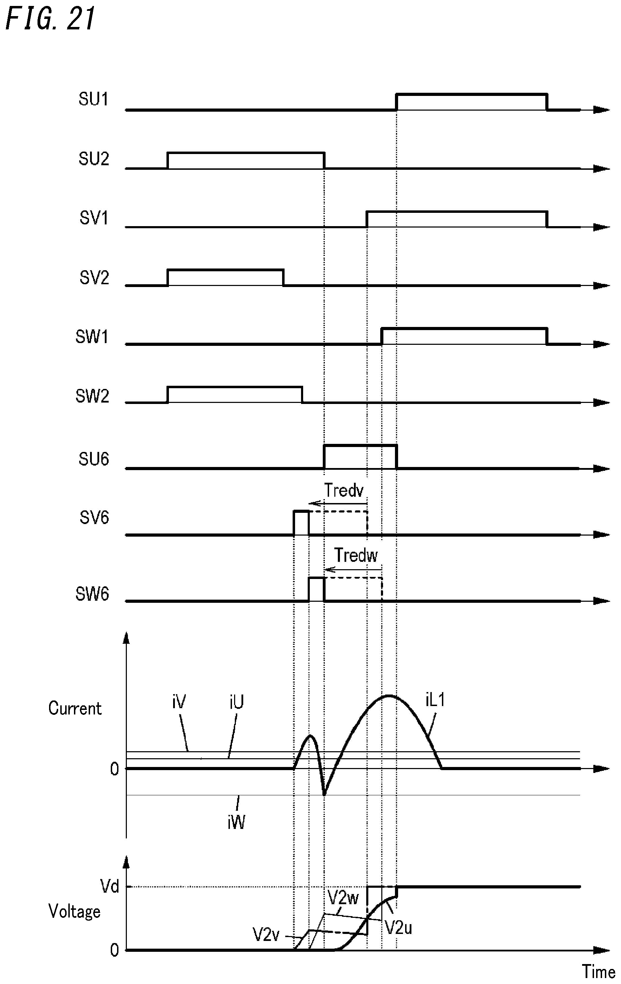

Next, it will be described with reference to FIGS. 20 and 21 how the controller 50 performs the operation of shortening control when determining in advance that three-phase resonant currents, namely, U-phase, V-phase, and W-phase resonant currents, should be going to flow simultaneously.

FIG. 20 is a timing chart illustrating how the power converter 100 according to the third embodiment operates in a situation where its controller 50 has determined that three-phase resonant currents should overlap with each other when the load current > 0 and the charging operation is performed on its resonant capacitor 9. In FIG. 20, shown is a timing chart of the control signals SU1, SU2, SV1, SV2, SW1, SW2, the control signals SU6, SV6, SW6, the load currents iU, iV, iW, the current iL1, and the voltages V2u, V2v, V2w across the second switching elements 2U, 2V, 2W when the controller 50 has determined in advance that the three-phase resonant currents should be going to flow simultaneously and before the shortening control is performed. On the other hand, FIG. 21 is a timing chart illustrating how the power converter 100 according to the third embodiment operates in a situation where its controller 50 has performed the shortening control. In FIG. 21, shown is a timing chart of the control signals SU1, SU2, SV1, SV2, SW1, SW2, the control signals SU6, SV6, SW6, the load currents iU, iV, iW, the current iL1, and the voltages V2u, V2v, V2w across the second switching elements 2U, 2V, 2W in a situation where the controller 50 has performed the shortening control. Note that FIGS. 20 and 21 are timing charts corresponding to only a part of one cycle of the carrier signal.

### (1.2) Shortening control to be performed when three-phase resonant currents are determined to flow simultaneously

In the power converter 100, unless the controller 50 performs the shortening control, when the control signals SU1, SV1, SW1 change from the low-level period to the high-level period (i.e., when the dead time period corresponding to the U-, V-, and W-phases ends), the voltages V2u, V2v, V2w across the second switching elements 2U, 2V, 2W do not increase to reach Vd as shown in FIG. 20. That is to say, unless the controller 50 performs the shortening control, the resonant capacitors 9U, 9V, 9W have not been charged with electricity yet at a point in time when the dead time period corresponding to the U-, V-, and W-phases ends. Thus, unless the shortening control is performed, the voltages across the first switching elements 1U, 1V, 1W do not decrease to zero at the end time of the dead time period corresponding to the U-, V-, and W-phases. Consequently, in the power converter 100, the first switching elements 1U, 1V, 1W are switched by hard switching.

The controller 50 compares the absolute value of the load current iU, the absolute value of the load current iV, and the absolute value of the load current iW with each other. The controller 50 shortens, by the shortening period Tredw, the high-level period of the control signal SW6 for the switch 8W, which causes a load current with the largest absolute value to flow therethrough. The controller 50 shortens, by the shortening period Tredv, the high-level period of the control signal SV6 for the switch 8V, which causes a load current with the second largest absolute value to flow therethrough. Specifically, to prevent the control signals SU6, SV6, SW6 from overlapping with each other, the controller 50 shortens the high-level period of the control signal SW6 by the shortening period Tredw and shortens the high-level period of the control signal SV6 by the shortening period Tredv as shown in FIG. 21. In the example shown in FIG. 21, the controller 50 sets the length of the shortening period Tredw at the length of an overlap period between the high-level period of the control signal SW6 that has not been subjected to the shortening control yet and the high-level period of the control signal SU6 that has not been subjected to the shortening control yet. In addition, the controller 50 also sets the length of the shortening period Tredv at the length of an overlap period between the high-level period of the control signal SV6 that has not been subjected to the shortening control yet and the high-level period of the control signal SW6 that has not been subjected to the shortening control yet. In the example shown in FIG. 21, the controller 50 shortens the high-level period of the control signal SW6 in such a direction as to advance, by the shortening period Tredw, the end time of the high-level period of the control signal SW6 that has not been subjected to the shortening control yet. In addition, the controller 50 also shortens the high-level period of the control signal SV6 in such a direction as to advance, by the shortening period Tredv, the end time of the high-level period of the control signal SV6 that has not been subjected to the shortening control yet. As can be seen from the voltages V2u, V2v, V2w across the second switching elements 2U, 2V, 2W shown in FIG. 20 and the voltages V2u, V2v, V2w across the second switching elements 2U, 2V, 2W shown in FIG. 21, hard switching of the first switching element 1U is relieved.

### (1.3) When discharging operation is performed on resonant capacitor

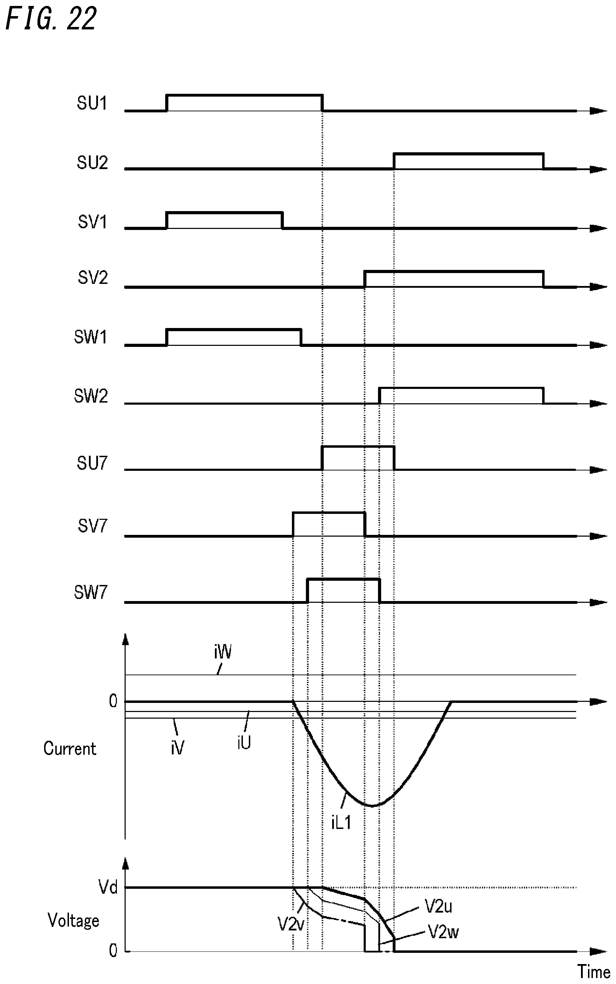

FIG. 22 is a timing chart illustrating how the power converter 100 according to the third embodiment operates in a situation where its controller 50 has determined that three-phase resonant currents should overlap with each other when the load current < 0 and the discharging operation is performed on its resonant capacitor 9. In the power converter 100, unless the controller 50 performs the shortening control, when the control signals SU2, SV2, SW2 change from the low-level period to the high-level period (i.e., when the dead time period corresponding to the U-, V-, and W-phases ends), the voltages V2u, V2v, V2w across the second switching elements 2U, 2V, 2W do not decrease to zero as shown in FIG. 22. That is to say, unless the controller 50 performs the shortening control, electricity has not been discharged from the resonant capacitors 9U, 9V, 9W yet at a point in time when the dead time period corresponding to the U-, V-, and W-phases ends. Thus, in the power converter 100, the second switching elements 2U, 2V, 2W are switched by hard switching.

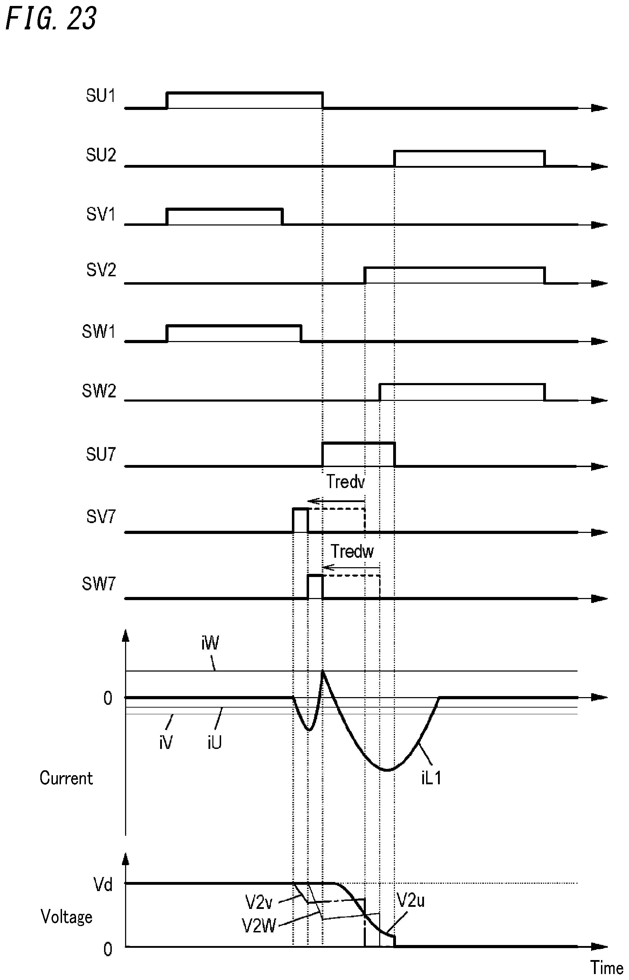

FIG. 23 is a timing chart illustrating how the power converter 100 according to the third embodiment operates in the situation where its controller 50 has performed the shortening control. The controller 50 compares the absolute value of the load current iU, the absolute value of the load current iV, and the absolute value of the load current iW with each other. The controller 50 shortens, by the shortening period Tredw, the high-level period of the control signal SW7 for the switch 8W, which causes a load current with the largest absolute value to flow therethrough. The controller 50 shortens, by the shortening period Tredv, the high-level period of the control signal SV7 for the switch 8V, which causes a load current with the second largest absolute value to flow therethrough. Specifically, to prevent the control signals SU7, SV7, SW7 from overlapping with each other, the controller 50 shortens the high-level period of the control signal SW7 by the shortening period Tredw and shortens the high-level period of the control signal SV7 by the shortening period Tredv as shown in FIG. 23. In the example shown in FIG. 23, the controller 50 sets the length of the shortening period Tredw at the length of an overlap period between the high-level period of the control signal SW7 that has not been subjected to the shortening control yet and the high-level period of the control signal SU7 that has not been subjected to the shortening control yet. In addition, the controller 50 also sets the length of the shortening period Tredv at the length of an overlap period between the high-level period of the control signal SV7 that has not been subjected to the shortening control yet and the high-level period of the control signal SW7 that has not been subjected to the shortening control yet. In the example shown in FIG. 23, the controller 50 shortens the high-level period of the control signal SW7 in such a direction as to advance, by the shortening period Tredw, the end time of the high-level period of the control signal SW7 that has not been subjected to the shortening control yet. In addition, the controller 50 also shortens the high-level period of the control signal SV7 in such a direction as to advance, by the shortening period Tredv, the end time of the high-level period of the control signal SV7 that has not been subjected to the shortening control yet.

As can be seen from the waveform of the current iL1 shown in FIG. 22 and the waveform of the current iL1 shown in FIG. 23, in the power converter 100, the controller 50 may shorten the period in which the U-phase resonant current, the V-phase resonant current, and the W-phase resonant current overlap with each other by performing the shortening control when the controller 50 determines in advance that the three-phase resonant currents, namely, the U-phase resonant current, the V-phase resonant current, and the W-phase resonant current, should be going to flow simultaneously. In addition, as can be seen from the voltages V2u, V2v, V2w across the second switching elements 2U, 2V, 2W shown in FIG. 22 and the voltages V2u, V2v, V2w across the second switching elements 2U, 2V, 2W shown in FIG. 23, hard switching of the second switching element 2U is relieved.

### (First variation of third embodiment)

In a power converter 100 according to a first variation of the third embodiment, when performing the shortening control, the controller 50 determines a first switch and a third switch differently from the third embodiment. In the first variation of the third embodiment, the third switch is one of the three switches 8 and corresponds to a first switching circuit 10 belonging to three switching circuits 10. The three switching circuits 10 are switching circuits 10 respectively corresponding to the three switches 8 which belong to the plurality of switching circuits 10. The three switching circuits 10 respectively cause load currents having mutually different absolute values to flow therethrough. The first switching circuit 10 causes a load current, of which the absolute value is the smallest in the three switching circuits 10, to flow therethrough. The first switch is one of the three switches 8 and corresponds to a second switching circuit 10 belonging to the three switching circuits 10. The three switching circuits 10 are switching circuits 10 respectively corresponding to the three switches 8 which belong to the plurality of switching circuits 10. The three switching circuits 10 respectively cause load currents having mutually different absolute values to flow therethrough. The second switching circuit 10 causes a load current, of which the absolute value is the second smallest in the three switching circuits 10, to flow therethrough.

### (Second variation of third embodiment)

A power converter 100 according to a second variation of the third embodiment has the same circuit configuration as the power converter 100 according to the first embodiment (refer to FIG. 1), and therefore, illustration and description thereof will be omitted herein.

In a power converter 100 according to a second variation of the third embodiment, when performing the shortening control, the controller 50 just determines a first switch, a second switch, and a third switch differently from the third embodiment.

The first switch is one of the three switches 8 and corresponds to a first switching circuit 10 belonging to three switching circuits 10. The three switching circuits 10 are switching circuits 10 respectively corresponding to the three switches 8 which belong to the plurality of switching circuits 10. Voltage instruction values for the three switching circuits 10 have mutually different absolute values. The voltage instruction value for the first switching circuit 10 has the smallest absolute value among the voltage instruction values for the three switching circuits 10. The second switch is one of the three switches and corresponds to a second switching circuit 10 belonging to the three switching circuits 10. The three switching circuits 10 are switching circuits 10 respectively corresponding to the three switches 8 which belong to the plurality of switching circuits 10. The voltage instruction values for the three switching circuits 10 have mutually different absolute values. The voltage instruction value for the second switching circuit 10 has the largest absolute value among the voltage instruction values for the three switching circuits 10. The third switch is one of the three switches 8 and corresponds to a third switching circuit 10 belonging to the three switching circuits 10. The three switching circuits 10 are switching circuits 10 respectively corresponding to the three switches 8 which belong to the plurality of switching circuits 10. The voltage instruction values for the three switching circuits 10 have mutually different absolute values. The voltage instruction value for the third switching circuit 10 has the second smallest absolute value among the voltage instruction values for the three switching circuits 10.

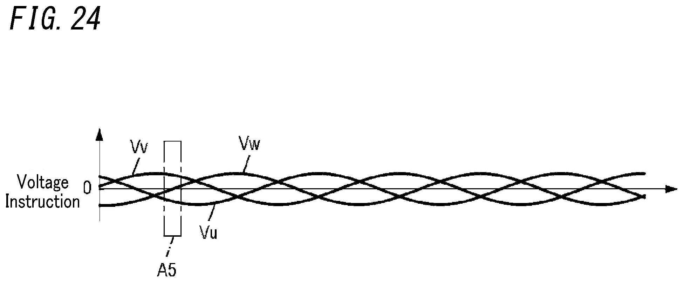

FIG. 24 illustrates a condition on which the controller 50 performs the shortening control in the power converter 100 according to the second variation of the third embodiment. In the fifth region A5 shown in FIG. 24, for example, the absolute value of the voltage instruction value Vv for the V-phase switching circuit 10V is larger than the absolute value of the voltage instruction value Vw for the W-phase switching circuit 10W, and the absolute value of the voltage instruction value Vw is larger than the absolute value of the voltage instruction value Vu for the U-phase switching circuit 10U. In this case, the first, second, and third switches are the switch 8W, the switch 8V, and the switch 8U, respectively.

### (Third variation of third embodiment)

A power converter 100 according to a third variation of the third embodiment has the same circuit configuration as the power converter 100 according to the first embodiment (refer to FIG. 1), and therefore, illustration and description thereof will be omitted herein.

In a power converter 100 according to a third variation of the third embodiment, when performing the shortening control, the controller 50 just determines a first switch, a second switch, and a third switch differently from the third embodiment.

The first switch is one of the three switches 8 and corresponds to a first switching circuit 10 belonging to three switching circuits 10. The three switching circuits 10 are switching circuits 10 respectively corresponding to the three switches 8 which belong to the plurality of switching circuits 10. Voltage instruction values for the three switching circuits 10 have mutually different absolute values. The voltage instruction value for the first switching circuit 10 has the largest absolute value among the voltage instruction values for the three switching circuits 10. The second switch is one of the three switches and corresponds to a second switching circuit 10 belonging to the three switching circuits 10. The three switching circuits 10 are switching circuits 10 respectively corresponding to the three switches 8 which belong to the plurality of switching circuits 10. The voltage instruction values for the three switching circuits 10 have mutually different absolute values. The voltage instruction value for the second switching circuit 10 has the smallest value among the voltage instruction values for the three switching circuits 10. The third switch is one of the three switches 8 and corresponds to a third switching circuit 10 belonging to the three switching circuits 10. The three switching circuits 10 are switching circuits 10 respectively corresponding to the three switches 8 which belong to the plurality of switching circuits 10. The voltage instruction values for the three switching circuits 10 have mutually different absolute values. The voltage instruction value for the third switching circuit 10 has the second largest absolute value among the voltage instruction values for the three switching circuits 10.

In the fifth region A5 shown in FIG. 24, for example, the absolute value of the voltage instruction value Vv for the V-phase switching circuit 10V is larger than the absolute value of the voltage instruction value Vu for the U-phase switching circuit 10W, and the absolute value of the voltage instruction value Vu is larger than the absolute value of the voltage instruction value Vw for the W-phase switching circuit 10W. In this case, the first, second, and third switches are the switch 8V, the switch 8W, and the switch 8U, respectively.

### (Fourth embodiment)

A power converter 100 according to a fourth embodiment has the same circuit configuration as the power converter 100 according to the first embodiment (refer to FIG. 1), and therefore, illustration and description thereof will be omitted herein.

The power converter 100 according to the fourth embodiment operates in substantially the same way as the power converter 100 according to the third embodiment but is different from the third embodiment in that when the shortening control is performed, the direction in which the high-level period of a control signal for a first switch is shortened and the direction in which the high-level period of a control signal for a third switch is shortened are opposite from each other.

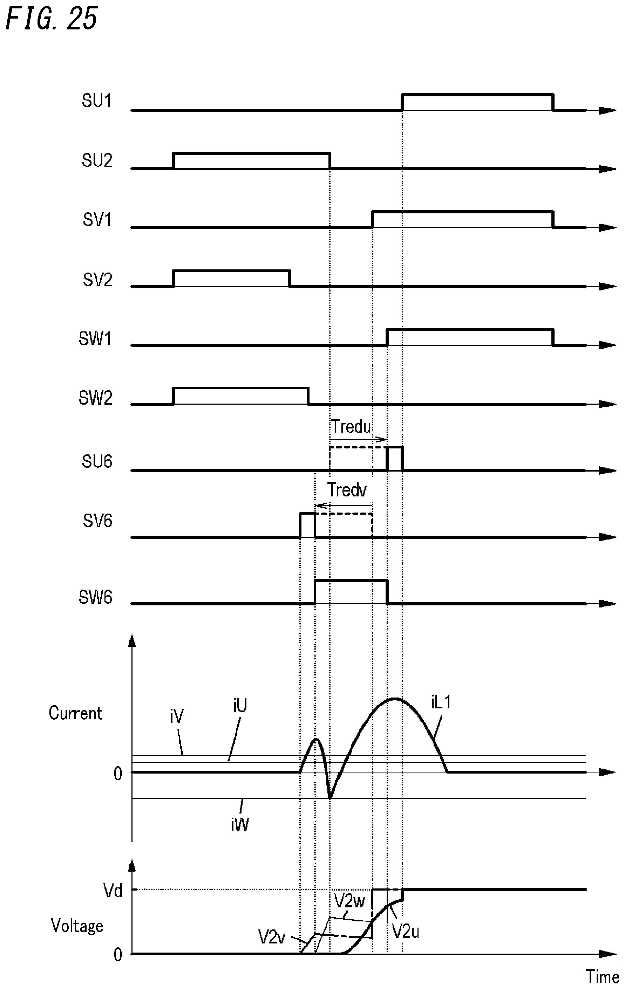

FIG. 25 is a timing chart illustrating how the power converter 100 according to the fourth embodiment operates in a situation where its controller 50 has performed the shortening control. In a situation where load current > 0 and the charging operation is performed on the resonant capacitor 9, the controller 50 shortens the high-level period of the control signal SU6 for the switch 8U in such a direction as to postpone the beginning time of the high-level period, and shortens, by Tredv, the high-level period of the control signal SV6 for the switch 8V in such a direction as to advance the end time of the high-level period as shown in FIG. 25.

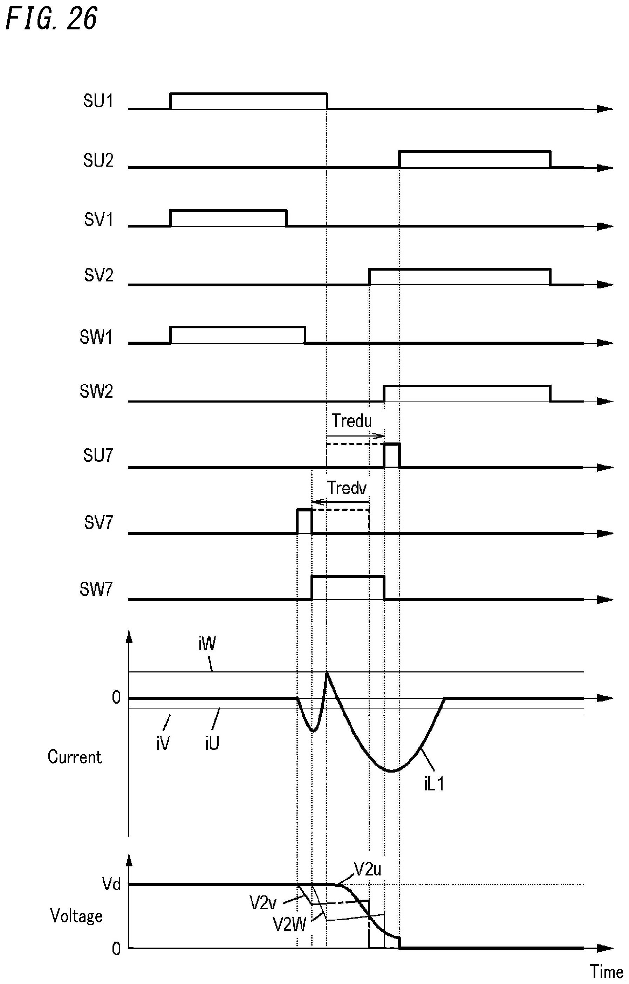

FIG. 26 is a timing chart illustrating how the power converter 100 according to the fourth embodiment operates in the situation where its controller 50 has performed the shortening control. In a situation where load current < 0 and the discharging operation is performed on the resonant capacitor 9, the controller 50 shortens the high-level period of the control signal SU6 for the switch 8U in such a direction as to postpone the beginning time of the high-level period, and shortens, by Tredv, the high-level period of the control signal SV6 for the switch 8V in such a direction as to advance the end time of the high-level period as shown in FIG. 26.

In the power converter 100 according to the fourth embodiment, the controller 50 sets a dead time period Td between the high-level period of the control signal for the first switching element 1 and the high-level period of the control signal for the second switching element 2 with respect to each of the plurality of switching circuits 10. The controller 50 sets the high-level period of the control signal for each of the plurality of switches 8 based on the dead time period Td for a corresponding one of the plurality of switching circuits 10. In addition, the controller 50 performs the shortening control when determining that resonant currents respectively passing through two or more switches 8 belonging to the plurality of switches 8 should be going to flow simultaneously through the resonant inductor L1 upon the application of a control signal having a preset high-level period to each of the plurality of switches 8. When performing the shortening control, the controller 50 applies a control signal, of which the preset high-level period has been shortened, to a first switch which is one of the two or more switches 8 and applies a control signal having the preset high-level period to a second switch belonging to the two or more switches 8 which is different from the first switch.

This configuration not only allows zero-voltage soft switching to be performed but also allows the switching loss to be cut down.

In addition, in the power converter 100 according to the fourth embodiment, when the controller 50 performs the shortening control, the first switch is one of the two or more switches 8 and corresponds to one switching circuit 10 belonging to two or more switching circuits 10. The two or more switching circuits 10 are switching circuits 10 respectively corresponding to the two or more switches 8 which belong to the plurality of switching circuits 10. The two or more switching circuits 10 respectively cause load currents having mutually different absolute values to flow therethrough. The one switching circuit causes a load current, of which the absolute value is the smallest among the two or more switching circuits 10, to flow therethrough.

In addition, according to this configuration, the high-level period of a control signal for the switch 8 corresponding to the switching circuit 10 that causes a load current, of which the absolute value is the smallest, to flow therethrough, and the high-level period of a control signal for the switch 8 corresponding to the switching circuit 10 that causes a load current, of which the absolute value is the second smallest, to flow therethrough, are shortened, thus allowing the switching loss to be further cut down.

### (Fifth embodiment)

A power converter 100 according to a fifth embodiment has the same circuit configuration as the power converter 100 according to the first embodiment (refer to FIG. 1), and therefore, illustration and description thereof will be omitted herein.

The controller 50 shortens, when determining that resonant currents respectively passing through two out of the plurality of switches 8 should be going to flow simultaneously, the high-level period of the control signal for the first switch to zero, which is a difference from the first embodiment.

When performing the shortening control, the controller 50 applies a control signal, of which the preset high-level period has been shortened to zero (i.e., a low-level control signal), to a first switch which is one of the two switches 8, and applies a control signal having the preset high-level period to a second switch belonging to the two switches 8 which is different from the first switch. When the controller 50 performs the shortening control, the first switch is one of the two switches 8 and corresponds to one switching circuit belonging to two switching circuits 10. The two switching circuits 10 are switching circuits 10 respectively corresponding to the two switches 8 which belong to the plurality of switching circuits 10. Voltage instruction values for the two switching circuits 10 have mutually different absolute values. The voltage instruction value for the one switching circuit has the largest absolute value among the voltage instruction values for the two switching circuits 10.

### (1.1) When charging operation is performed on resonant capacitor

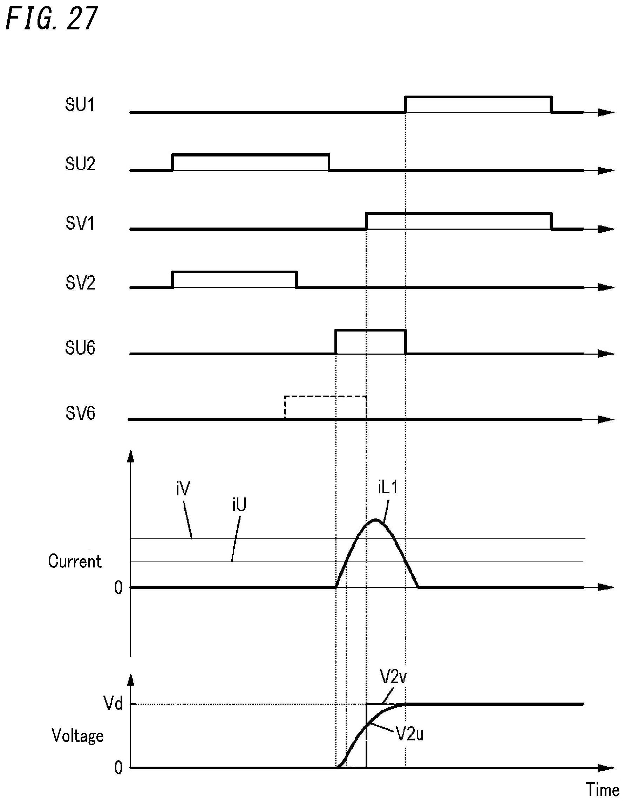

Next, it will be described with reference to FIGS. 13 and 27 how the controller 50 performs the operation of shortening control when determining in advance that two-phase resonant currents, namely, U-phase and V-phase resonant currents, should be going to flow simultaneously in a period corresponding to the third region A3 shown in FIG. 12. FIG. 27 is a timing chart illustrating how the power converter 100 according to the fifth embodiment operates in a situation where its controller 50 has performed the shortening control.

In the upper portion of FIG. 12, shown are a voltage instruction value Vu for the U-phase switching circuit 10U, a voltage instruction value Vv for the V-phase switching circuit 10V, and a voltage instruction value Vw for the W-phase switching circuit 10W, all of which are given by an external device to the controller 50. In the third region A3 shown in FIG. 12, the voltage instruction value Vv is greater than the voltage instruction value Vu.

In FIG. 13, shown is a timing chart of the control signals SU1, SU2, SV1, SV2, the control signals SU6, SV6, the load currents iU, iV, the current iL1, and the voltages V2u, V2v across the second switching elements 2U, 2V when the controller 50 has determined that the U-phase resonant current and the V-phase resonant current should be going to flow simultaneously and before the shortening control is performed. In FIG. 27, shown is a timing chart of the control signals SU1, SU2, SV1, SV2, the control signals SU6, SV6, the load currents iU, iV, the current iL1, and the voltages V2u, V2v across the second switching elements 2U, 2V when the controller 50 has performed the shortening control. Note that FIGS. 13 and 27 are timing charts corresponding to only a part of one cycle of the carrier signal.

In the power converter 100, unless the controller 50 performs the shortening control, when the control signals SU1, SV1 change from the low-level period to the high-level period (i.e., when the dead time period corresponding to the U- and V-phases ends), the voltages V2u, V2v across the second switching elements 2U, 2V do not increase to reach Vd as shown in FIG. 13. That is to say, unless the controller 50 performs the shortening control, the voltages across the first switching elements 1U, 1V do not decrease to zero at the end time of the dead time period corresponding to the U- and V-phases. Consequently, in the power converter 100, the first switching elements 1U, 1V are switched by hard switching.

The controller 50 compares the absolute value of the voltage instruction value Vu with the absolute value of the voltage instruction value Vv to shorten the high-level period of the control signal SV6 for the switch 8V, corresponding to the switching circuit 10V, of which the voltage instruction value has the larger absolute value, to zero.

As can be seen from the waveform of the current iL1 shown in FIG. 13 and the waveform of the current iL1 shown in FIG. 27, in the power converter 100, the controller 50 may reduce the V-phase resonant current, selected from the U-phase resonant current and the V-phase resonant current, to zero by performing the shortening control when the controller 50 determines in advance that the two-phase resonant currents, namely, the U-phase resonant current and the V-phase resonant current, should be going to flow simultaneously. In addition, as can be seen from the voltages V2u, V2v across the second switching elements 2U, 2V shown in FIG. 13 and the voltages V2u, V2v across the second switching elements 2U, 2V shown in FIG. 27, zero-voltage soft switching of the first switching element 1U connected to the second switching element 2U is realized.

In the same way, in this power converter 100, the controller 50 may shorten the period in which the U-phase resonant current and the W-phase resonant current overlap with each other as well by performing the shortening control when the controller 50 determines in advance that the two-phase resonant currents, namely, the U-phase resonant current and the W-phase resonant current, should be going to flow simultaneously.

In addition, in this power converter 100, the controller 50 may shorten the period in which the V-phase resonant current and the W-phase resonant current overlap with each other (may reduce the overlap period to zero) as well by performing the shortening control when the controller 50 determines in advance that the two-phase resonant currents, namely, the V-phase resonant current and the W-phase resonant current, should be going to flow simultaneously.

### (1.2) When discharging operation is performed on resonant capacitor

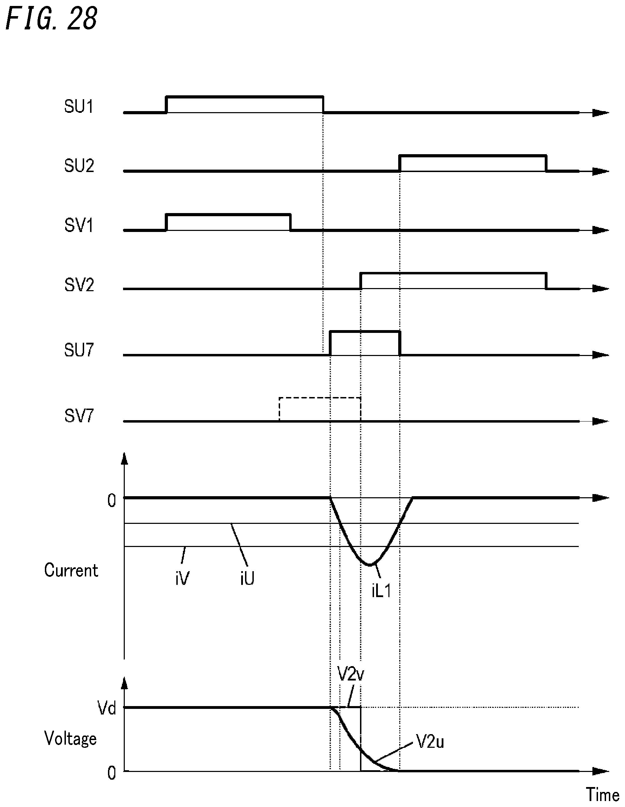

Next, it will be described with reference to FIGS. 16 and 28 how the controller 50 performs the operation of shortening control when determining in advance that two-phase resonant currents, namely, U-phase and V-phase resonant currents, should be going to flow simultaneously in a period corresponding to the fourth region A4 shown in FIG. 15. FIG. 28 is a timing chart illustrating how the power converter 100 according to the fifth embodiment operates in the situation where its controller 50 has performed the shortening control.

In the fourth region A4 shown in FIG. 15, the absolute value of the voltage instruction value Vv is greater than the absolute value of the voltage instruction value Vu.

In FIG. 16, shown is a timing chart of the control signals SU1, SU2, SV1, SV2, the control signals SU7, SV7, the load currents iU, iV, the current iL1, and the voltages V2u, V2v across the second switching elements 2U, 2V when the controller 50 has determined that the U-phase resonant current and the V-phase resonant current should be going to flow simultaneously and before the shortening control is performed. In FIG. 28, shown is a timing chart of the control signals SU1, SU2, SV1, SV2, the control signals SU7, SV7, the load currents iU, iV, and the current iL1 when the controller 50 has performed the shortening control. Note that FIGS. 16 and 28 are timing charts corresponding to only a part of one cycle of the carrier signal.

In the power converter 100, unless the controller 50 performs the shortening control, when the control signals SU1, SV1 change from the low-level period to the high-level period, the voltages V2u, V2v across the second switching elements 2U, 2V do not decrease to zero as shown in FIG. 16. That is to say, in the power converter 100, unless the controller 50 performs the shortening control, the second switching elements 2U, 2V are switched by hard switching.

The controller 50 compares the absolute value of the voltage instruction value Vu with the absolute value of the voltage instruction value Vv to shorten the high-level period of the control signal SV7 for the switch 8V, corresponding to the switching circuit 10V, of which the voltage instruction value has the larger absolute value, to zero.

As can be seen from the waveform of the current iL1 shown in FIG. 16 and the waveform of the current iL1 shown in FIG. 28, in the power converter 100, the controller 50 may reduce the V-phase resonant current, selected from the U-phase resonant current and the V-phase resonant current, to zero by performing the shortening control when the controller 50 determines in advance that the two-phase resonant currents, namely, the U-phase resonant current and the V-phase resonant current, should be going to flow simultaneously. In addition, as can be seen from the voltages V2u, V2v across the second switching elements 2U, 2V shown in FIG. 16 and the voltages V2u, V2v across the second switching elements 2U, 2V shown in FIG. 28, zero-voltage soft switching of the second switching element 2U is realized.

In the same way, in this power converter 100, the controller 50 may shorten the period in which the U-phase resonant current and the W-phase resonant current overlap with each other (may reduce the overlap period to zero) as well by performing the shortening control when the controller 50 determines in advance that the two-phase resonant currents, namely, the U-phase resonant current and the W-phase resonant current, should be going to flow simultaneously.

In addition, in this power converter 100, the controller 50 may shorten the period in which the V-phase resonant current and the W-phase resonant current overlap with each other (may reduce the overlap period to zero) as well by performing the shortening control when the controller 50 determines in advance that the two-phase resonant currents, namely, the V-phase resonant current and the W-phase resonant current, should be going to flow simultaneously.

### (2) Advantages

In a power converter 100 according to the fifth embodiment, the controller 50 sets a dead time period Td between the high-level period of the control signal for the first switching element 1 and the high-level period of the control signal for the second switching element 2 with respect to each of the plurality of switching circuits 10. The controller 50 sets the high-level period of the control signal for each of the plurality of switches 8 based on the dead time period Td for a corresponding one of the plurality of switching circuits 10. In addition, the controller 50 performs shortening control when determining that resonant currents respectively passing through two or more switches 8 belonging to the plurality of switches 8 should be going to flow simultaneously through the resonant inductor L1 upon the application of a control signal having a preset high-level period to each of the plurality of switches 8. When performing the shortening control, the controller 50 applies a control signal, of which the preset high-level period has been shortened, to a first switch which is one of the two or more switches 8 and applies a control signal having the preset high-level period to a second switch belonging to the two or more switches 8. The second switch is different from the first switch.

This configuration not only allows zero-voltage soft switching to be performed but also allows the switching loss to be cut down.

In addition, in the power converter 100 according to the fifth embodiment, when performing the shortening control, the controller 50 applies a control signal, of which the preset high-level period has been shortened to zero, to the first switch.

This configuration not only allows zero-voltage soft switching to be performed on the first switching element 1 and second switching element 2 of the switching circuit 10 corresponding to the second switch but also allows the switching loss to be cut down.

### (Sixth embodiment)

A power converter 100 according to a sixth embodiment has the same circuit configuration as the power converter 100 according to the first embodiment (refer to FIG. 1), and therefore, illustration and description thereof will be omitted herein.

In the power converter 100 according to the sixth embodiment, the controller 50 determines the first switch and the second switch differently when performing the shortening control from the power converter 100 according to the fifth embodiment.

The first switch is one of the two switches 8 and corresponds to one switching circuit belonging to two switching circuits 10. The two switching circuits 10 are switching circuits 10 respectively corresponding to the two switches 8 which belong to the plurality of switching circuits 10. The two switching circuits 10 respectively cause load currents having mutually different absolute values to flow therethrough. The one switching circuit 10 causes a load current, of which the absolute value is the smallest among the two switching circuits 10, to flow therethrough.

### (1.1) When charging operation is performed on resonant capacitor

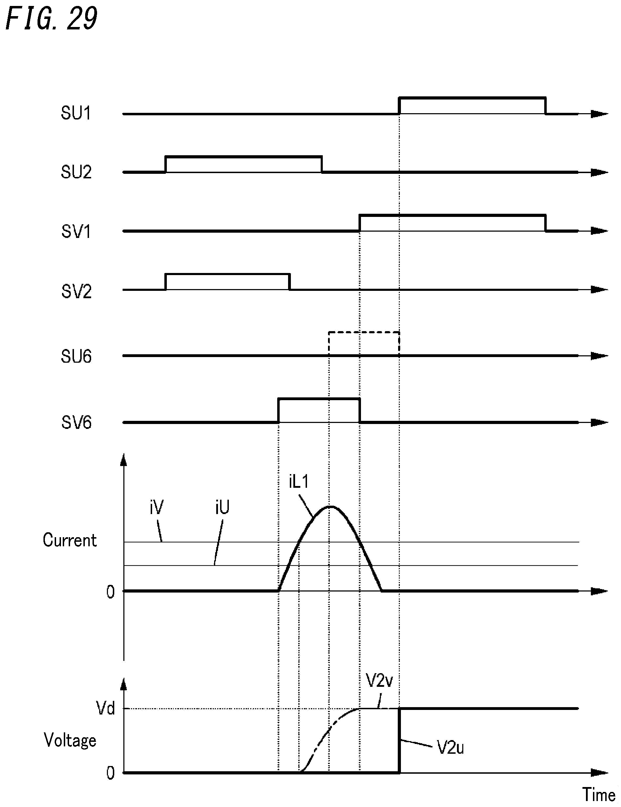

Next, it will be described with reference to FIGS. 13 and 29 how the controller 50 performs the operation of shortening control when determining in advance that two-phase resonant currents, namely, U-phase and V-phase resonant currents, should be going to flow simultaneously in a period corresponding to the third region A3 shown in FIG. 12. FIG. 29 is a timing chart illustrating how the power converter 100 according to the sixth embodiment operates in a situation where its controller 50 has performed the shortening control.

In the power converter 100, unless the controller 50 performs the shortening control, when the control signals SU1, SV1 change from the low-level period to the high-level period (i.e., when the dead time period corresponding to the U- and V-phases ends), the voltages V2u, V2v across the second switching elements 2U, 2V do not increase to reach Vd as shown in FIG. 13. Thus, unless the shortening control is performed, the voltages across the first switching elements 1U, 1V do not decrease to zero at the end time of the dead time period corresponding to the U- and V-phases. Consequently, in the power converter 100, the first switching elements 1U, 1V are switched by hard switching.

The controller 50 compares the absolute value of the load current iU with the absolute value of the load current iV to shorten the high-level period of the control signal SU6 for the switch 8U, corresponding to the switching circuit 10U, of which the load current has the smaller absolute value, to zero.

As can be seen from the waveform of the current iL1 shown in FIG. 13 and the waveform of the current iL1 shown in FIG. 29, in the power converter 100, the controller 50 may reduce the V-phase resonant current, selected from the U-phase resonant current and the V-phase resonant current, to zero by performing the shortening control when the controller 50 determines in advance that the two-phase resonant currents, namely, the U-phase resonant current and the V-phase resonant current, should be going to flow simultaneously. In addition, as can be seen from the voltages V2u, V2v across the second switching elements 2U, 2V shown in FIG. 13 and the voltages V2u, V2v across the second switching elements 2U, 2V shown in FIG. 29, zero-voltage soft switching of the first switching element 1U connected to the second switching element 2U is realized.

In the same way, in this power converter 100, the controller 50 may shorten the period in which the U-phase resonant current and the W-phase resonant current overlap with each other (may reduce the overlap period to zero) as well by performing the shortening control when the controller 50 determines in advance that the two-phase resonant currents, namely, the U-phase resonant current and the W-phase resonant current, should be going to flow simultaneously.

In addition, in this power converter 100, the controller 50 may shorten the period in which the V-phase resonant current and the W-phase resonant current overlap with each other (may reduce the overlap period to zero) as well by performing the shortening control when the controller 50 determines in advance that the two-phase resonant currents, namely, the V-phase resonant current and the W-phase resonant current, should be going to flow simultaneously.

### (1.2) When discharging operation is performed on resonant capacitor

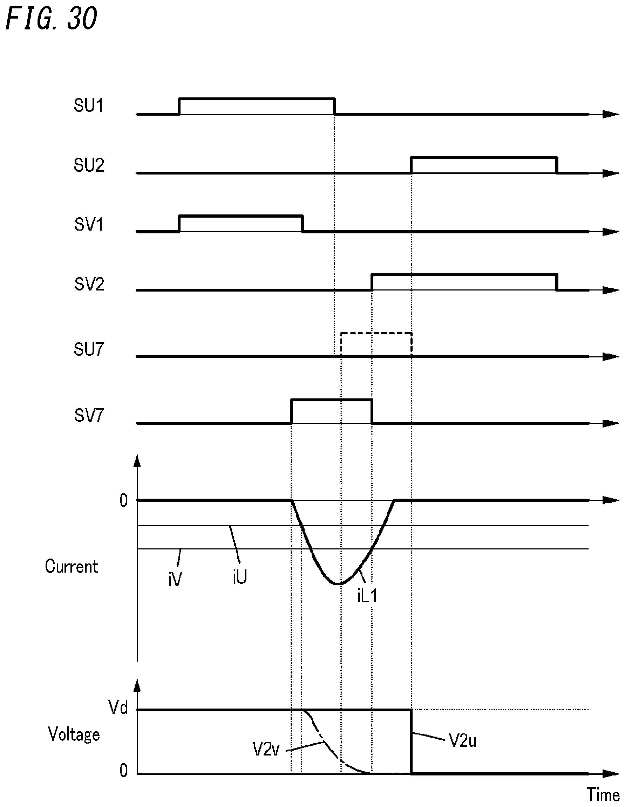

Next, it will be described with reference to FIGS. 16 and 30 how the controller 50 performs the operation of shortening control when determining in advance that two-phase resonant currents, namely, U-phase and V-phase resonant currents, should be going to flow simultaneously in a period corresponding to the fourth region A4 shown in FIG. 15. FIG. 30 is a timing chart illustrating how the power converter 100 according to the sixth embodiment operates in the situation where its controller 50 has performed the shortening control.

In FIG. 16, shown is a timing chart of the control signals SU1, SU2, SV1, SV2, the control signals SU7, SV7, the load currents iU, iV, the current iL1, and the voltages V2u, V2v across the second switching elements 2U, 2V when the controller 50 has determined that the U-phase resonant current and the V-phase resonant current should be going to flow simultaneously and before the shortening control is performed. In FIG. 30, shown is a timing chart of the control signals SU1, SU2, SV1, SV2, the control signals SU7, SV7, the load currents iU, iV, and the current iL1 when the controller 50 has performed the shortening control.

In the power converter 100, unless the controller 50 performs the shortening control, when the control signals SU1, SV1 change from the low-level period to the high-level period, the voltages V2u, V2v across the second switching elements 2U, 2V do not decrease to zero as shown in FIG. 16. That is to say, in the power converter 100, unless the controller 50 performs the shortening control, the second switching elements 2U, 2V are switched by hard switching.

The controller 50 compares the absolute value of the load current iU with the absolute value of the load current iV to shorten the high-level period of the control signal SU7 for the switch 8U, corresponding to the switching circuit 10U, of which the load current has the smaller absolute value, to zero.

As can be seen from the waveform of the current iL1 shown in FIG. 16 and the waveform of the current iL1 shown in FIG. 30, in the power converter 100, the controller 50 may reduce the U-phase resonant current, selected from the U-phase resonant current and the V-phase resonant current, to zero by performing the shortening control when the controller 50 determines in advance that the two-phase resonant currents, namely, the U-phase resonant current and the V-phase resonant current, should be going to flow simultaneously. In addition, as can be seen from the voltages V2u, V2v across the second switching elements 2U, 2V shown in FIG. 16 and the voltages V2u, V2v across the second switching elements 2U, 2V shown in FIG. 30, zero-voltage soft switching of the second switching element 2V is realized.

In the same way, in this power converter 100, the controller 50 may shorten the period in which the U-phase resonant current and the W-phase resonant current overlap with each other (may reduce the overlap period to zero) as well by performing the shortening control when the controller 50 determines in advance that the two-phase resonant currents, namely, the U-phase resonant current and the W-phase resonant current, should be going to flow simultaneously.

In addition, in this power converter 100, the controller 50 may shorten the period in which the V-phase resonant current and the W-phase resonant current overlap with each other (may reduce the overlap period to zero) as well by performing the shortening control when the controller 50 determines in advance that the two-phase resonant currents, namely, the V-phase resonant current and the W-phase resonant current, should be going to flow simultaneously.

### (2) Advantages

In a power converter 100 according to the sixth embodiment, the controller 50 sets a dead time period Td between the high-level period of the control signal for the first switching element 1 and the high-level period of the control signal for the second switching element 2 with respect to each of the plurality of switching circuits 10. The controller 50 sets the high-level period of the control signal for each of the plurality of switches 8 based on the dead time period Td for a corresponding one of the plurality of switching circuits 10. In addition, the controller 50 performs shortening control when determining that resonant currents respectively passing through two or more switches 8 belonging to the plurality of switches 8 should be going to flow simultaneously through the resonant inductor L1 upon the application of a control signal having a preset high-level period to each of the plurality of switches 8. When performing the shortening control, the controller 50 applies a control signal, of which the preset high-level period has been shortened, to a first switch which is one of the two or more switches 8 and applies a control signal having the preset high-level period to a second switch belonging to the two or more switches 8. The second switch is different from the first switch.

This configuration not only allows zero-voltage soft switching to be performed but also allows the switching loss to be cut down.

In addition, in the power converter 100 according to the sixth embodiment, when performing the shortening control, the controller 50 applies a control signal, of which the preset high-level period has been shortened to zero, to the first switch.

This configuration not only allows zero-voltage soft switching to be performed on the first switching element 1 and second switching element 2 of the switching circuit 10 corresponding to the second switch but also allows the switching loss to be cut down.

Furthermore, in the power converter 100 according to the sixth embodiment, when the controller 50 performs the shortening control, the first switch is one of the two or more switches 8 and corresponds to one switching circuit 10 belonging to two or more switching circuits 10. The two or more switching circuits 10 are switching circuits 10 respectively corresponding to the two or more switches 8 which belong to the plurality of switching circuits 10. The two or more switching circuits 10 respectively cause load currents having mutually different absolute values to flow therethrough. The one switching circuit causes a load current, of which the absolute value is the smallest among the two or more switching circuits 10, to flow therethrough.

According to this configuration, the high-level period of a control signal for a switch 8, corresponding to a switching circuit 10 that causes a load current, of which the absolute value is the smallest, to flow therethrough is shortened, thus allowing the switching loss to be further cut down.

### (Seventh embodiment)

A power converter 100 according to a seventh embodiment has the same circuit configuration as the power converter 100 according to the first embodiment (refer to FIG. 1), and therefore, illustration and description thereof will be omitted herein.

The power converter 100 according to the seventh embodiment operates in substantially the same way as the power converter 100 according to the third embodiment. The basic operation of the controller 50 in the power converter 100 according to the seventh embodiment is, as well as in the third embodiment, the same as the basic operation of the controller 50 in the power converter 100 according to the first embodiment, and therefore, description thereof will be omitted herein.

In the power converter 100 according to the seventh embodiment, the controller 50 determines the first switch, the second switch, and the third switch differently from in the third embodiment when performing the shortening control.

The first switch is one of the three switches 8 and corresponds to a first switching circuit 10 belonging to three switching circuits 10. The three switching circuits 10 are switching circuits 10 respectively corresponding to the three switches 8 which belong to the plurality of switching circuits 10. Voltage instruction values for the three switching circuits 10 have mutually different absolute values. The voltage instruction value for the first switching circuit 10 has the smallest absolute value among the voltage instruction values for the three switching circuits 10. The second switch is one of the three switches 8 and corresponds to a second switching circuit 10 belonging to the three switching circuits 10. The three switching circuits 10 are switching circuits 10 respectively corresponding to the three switches 8 which belong to the plurality of switching circuits 10. The voltage instruction values for the three switching circuits 10 have mutually different absolute values. The voltage instruction value for the second switching circuit 10 has the smallest absolute value among the voltage instruction values for the three switching circuits 10. The third switch is one of the three switches 8 and corresponds to a third switching circuit 10 belonging to the three switching circuits 10. The three switching circuits 10 are switching circuits 10 respectively corresponding to the three switches 8 which belong to the plurality of switching circuits 10. The voltage instruction values for the three switching circuits 10 have mutually different absolute values. The voltage instruction value for the third switching circuit 10 is the second smallest among the voltage instruction values for the three switching circuits 10.

In the power converter 100 according to the seventh embodiment, the controller 50 not only shortens the high-level period of the control signal for the first switch to zero but also shortens the high-level period of the control signal for the third switch to zero as well.

### (1.1) When charging operation is performed on resonant capacitor

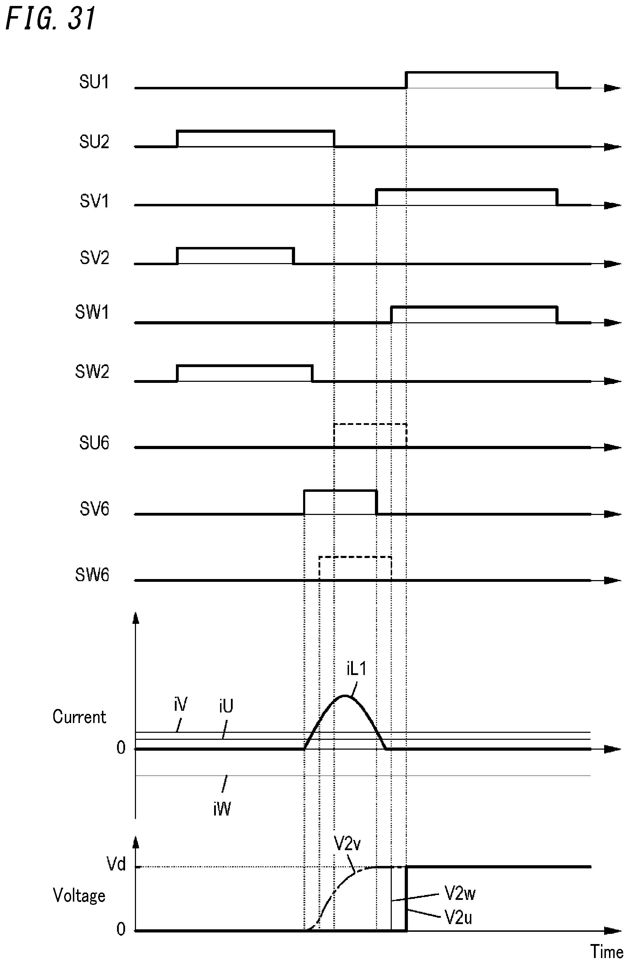

As an example, a situation where the inequality: the absolute value of the voltage instruction value Vv > the absolute value of the voltage instruction value Vw > the absolute value of the voltage instruction value Vu is satisfied and the first, second, and third switches are the switch 8U, the switch 8V, and the switch 8W, respectively, will be described with reference to FIGS. 20 and 31. FIG. 31 is a timing chart illustrating how the power converter 100 according to the seventh embodiment operates in a situation where its controller 50 has performed the shortening control.

FIG. 20 is a timing chart illustrating a situation before the controller 50 performs the shortening control. FIG. 31 is a timing chart illustrating a situation where the controller 50 has performed the shortening control. When performing the shortening control, the controller 50 shortens the high-level period of the control signal SU6 for the switch 8U (first switch) such that the high-level period of the control signal SU6 goes zero, does not shorten the high-level period of the control signal SV6 for the switch 8V (second switch), and shortens the high-level period of the control signal SW6 for the switch 8W (third switch) such that the high-level period of the control signal SW6 goes zero. Through the resonant inductor L1, only the resonant current passing through the switch 8V (second switch) out of the three switches 8 flows. The resonant capacitor 9V is charged with electricity to the point that the voltage V2v across the resonant capacitor 9V reaches Vd, thus realizing zero-voltage soft switching of the first switching element 1V.

If the inequality: the absolute value of the voltage instruction value Vw > the absolute value of the voltage instruction value Vu > the absolute value of the voltage instruction value Vv is satisfied, then the control signal for the first switch, the control signal for the second switch, and the control signal for the third switch are the control signal SV6 for the switch 8V, the control signal SW6 for the switch 8W, and the control signal SU6 for the switch 8U, respectively. In that case, when performing the shortening control, the controller 50 shortens the high-level period of the control signal SV6 such that the high-level period of the control signal SV6 goes zero and shortens the high-level period of the control signal SU6 such that the high-level period of the control signal SU6 goes zero, thus realizing zero-voltage soft switching of the first switching element 1W.

If the inequality: the absolute value of the voltage instruction value Vu > the absolute value of the voltage instruction value Vv > the absolute value of the voltage instruction value Vw is satisfied, then the control signal for the first switch, the control signal for the second switch, and the control signal for the third switch are the control signal SW6 for the switch 8W, the control signal SU6 for the switch 8U, and the control signal SV6 for the switch 8V, respectively. In that case, when performing the shortening control, the controller 50 shortens the high-level period of the control signal SW6 such that the high-level period of the control signal SW6 goes zero and shortens the high-level period of the control signal SV6 such that the high-level period of the control signal SV6 goes zero, thus realizing zero-voltage soft switching of the first switching element 1U.

### (1.2) When discharging operation is performed on resonant capacitor

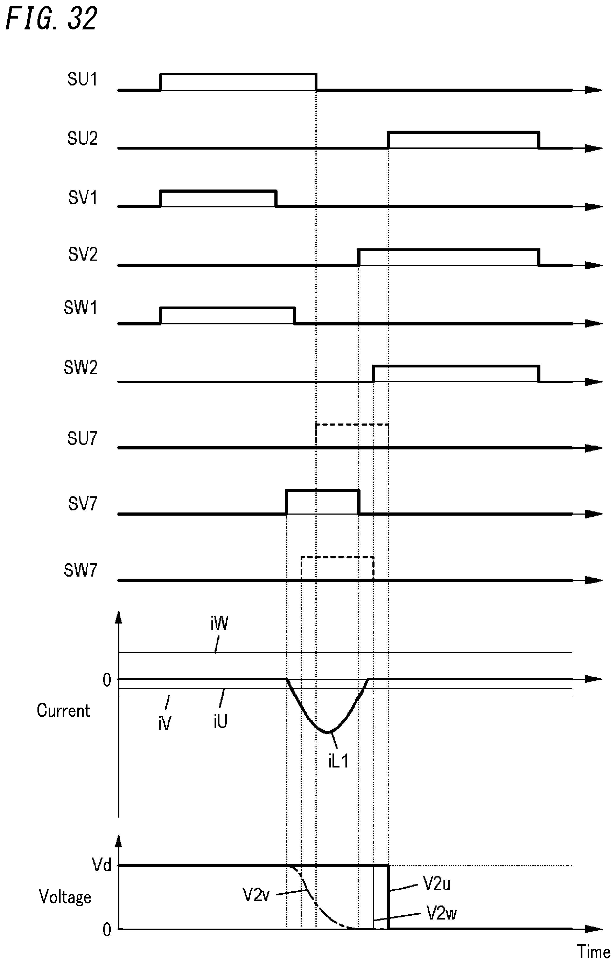

As an example, a situation where the inequality: the absolute value of the voltage instruction value Vv > the absolute value of the voltage instruction value Vw > the absolute value of the voltage instruction value Vu is satisfied and the first, second, and third switches are the switch 8U, the switch 8V, and the switch 8W, respectively, will be described with reference to FIGS. 22 and 32. FIG. 32 is a timing chart illustrating how the power converter 100 according to the seventh embodiment operates in a situation where its controller 50 has performed the shortening control.

FIG. 22 is a timing chart illustrating a situation before the controller 50 performs the shortening control. FIG. 32 is a timing chart illustrating a situation where the controller 50 has performed the shortening control. When performing the shortening control, the controller 50 shortens the high-level period of the control signal SU7 for the switch 8U (first switch) such that the high-level period of the control signal SU7 goes zero, does not shorten the high-level period of the control signal SV7 for the switch 8V (second switch), and shortens the high-level period of the control signal SW7 for the switch 8W (third switch) such that the high-level period of the control signal SW7 goes zero. Through the resonant inductor L1, only the resonant current passing through the switch 8V (second switch) out of the three switches 8 flows. Electricity is discharged from the resonant capacitor 9V to the point that the voltage V2v across the second switching element 2V becomes equal to zero volts, thus realizing zero-voltage soft switching of the second switching element 2V.

If the inequality: the absolute value of the voltage instruction value Vw > the absolute value of the voltage instruction value Vu > the absolute value of the voltage instruction value Vv is satisfied, then the control signal for the first switch, the control signal for the second switch, and the control signal for the third switch are the control signal SV7 for the switch 8V, the control signal SW7 for the switch 8W, and the control signal SU7 for the switch 8U, respectively. In that case, when performing the shortening control, the controller 50 shortens the high-level period of the control signal SV7 such that the high-level period of the control signal SV7 goes zero and shortens the high-level period of the control signal SU7 such that the high-level period of the control signal SU7 goes zero, thus realizing zero-voltage soft switching of the second switching element 2W.

If the inequality: the absolute value of the voltage instruction value Vu > the absolute value of the voltage instruction value Vv > the absolute value of the voltage instruction value Vw is satisfied, then the control signal for the first switch, the control signal for the second switch, and the control signal for the third switch are the control signal SW7 for the switch 8W, the control signal SU7 for the switch 8U, and the control signal SV7 for the switch 8V, respectively. In that case, when performing the shortening control, the controller 50 shortens the high-level period of the control signal SW7 such that the high-level period of the control signal SW7 goes zero and shortens the high-level period of the control signal SV7 such that the high-level period of the control signal SV7 goes zero, thus realizing zero-voltage soft switching of the second switching element 2U.

### (2) Advantages

In a power converter 100 according to the seventh embodiment, the controller 50 sets a dead time period Td between the high-level period of the control signal for the first switching element 1 and the high-level period of the control signal for the second switching element 2 with respect to each of the plurality of switching circuits 10. The controller 50 sets the high-level period of the control signal for each of the plurality of switches 8 based on the dead time period Td for a corresponding one of the plurality of switching circuits 10. In addition, the controller 50 performs shortening control when determining that resonant currents respectively passing through two or more switches 8 belonging to the plurality of switches 8 should be going to flow simultaneously through the resonant inductor L1 upon the application of a control signal having a preset high-level period to each of the plurality of switches 8. When performing the shortening control, the controller 50 applies a control signal, of which the preset high-level period has been shortened, to a first switch which is one of three switches 8, applies a control signal having the preset high-level period to a second switch belonging to the three switches 8, and applies a control signal, of which the preset high-level period has been shortened, to a third switch. The second switch is different from the first switch. The third switch is different from the first switch and the second switch.

This configuration not only allows zero-voltage soft switching to be performed but also allows the switching loss to be cut down.

In addition, in the power converter 100 according to the seventh embodiment, when performing the shortening control, the controller 50 applies a control signal, of which the preset high-level period has been shortened to zero, to the first switch, and applies a control signal, of which the preset high-level period has been shortened to zero, to the third switch

This configuration not only allows zero-voltage soft switching to be performed on the first switching element 1 and second switching element 2 of the switching circuit 10 corresponding to the second switch but also allows the switching loss to be cut down.

### (Eighth embodiment)

A power converter 100 according to an eighth embodiment has the same circuit configuration as the power converter 100 according to the first embodiment (refer to FIG. 1), and therefore, illustration and description thereof will be omitted herein.

The power converter 100 according to the eighth embodiment operates in substantially the same way as the power converter 100 according to the third embodiment. The basic operation of the controller 50 in the power converter 100 according to the eighth embodiment is, as well as in the third embodiment, the same as the basic operation of the controller 50 in the power converter 100 according to the first embodiment, and therefore, description thereof will be omitted herein.

In the power converter 100 according to the eighth embodiment, the controller 50 determines the first switch, the second switch, and the third switch differently from in the third embodiment when performing the shortening control.

The first switch is one of the three switches 8 and corresponds to a first switching circuit 10 belonging to three switching circuits 10. The three switching circuits 10 are switching circuits 10 respectively corresponding to the three switches 8 which belong to the plurality of switching circuits 10. The three switching circuits 10 cause load currents having mutually different absolute values to flow therethrough. The first switching circuit 10 causes a load current having the smallest absolute value in the three switching circuits 10 to flow therethrough. The second switch is one of the three switches and corresponds to a second switching circuit 10 belonging to three switching circuits 10. The three switching circuits 10 are switching circuits 10 respectively corresponding to the three switches 8 which belong to the plurality of switching circuits 10. The three switching circuits 10 cause load currents having mutually different absolute values to flow therethrough. The second switching circuit 10 causes a load current having the smallest absolute value in the three switching circuits 10 to flow therethrough. The third switch is one of the three switches 8 and corresponds to a third switching circuit 10 belonging to three switching circuits 10. The three switching circuits 10 are switching circuits 10 respectively corresponding to the three switches 8 which belong to the plurality of switching circuits 10. The three switching circuits 10 cause load currents having mutually different absolute values to flow therethrough. The third switching circuit 10 causes a load current having the second smallest absolute value in the three switching circuits 10 to flow therethrough.

In the power converter 100 according to the eighth embodiment, the controller 50 not only shortens the high-level period of the control signal for the first switch to zero but also shortens the high-level period of the control signal for the third switch to zero as well.

### (1.1) When charging operation is performed on resonant capacitor

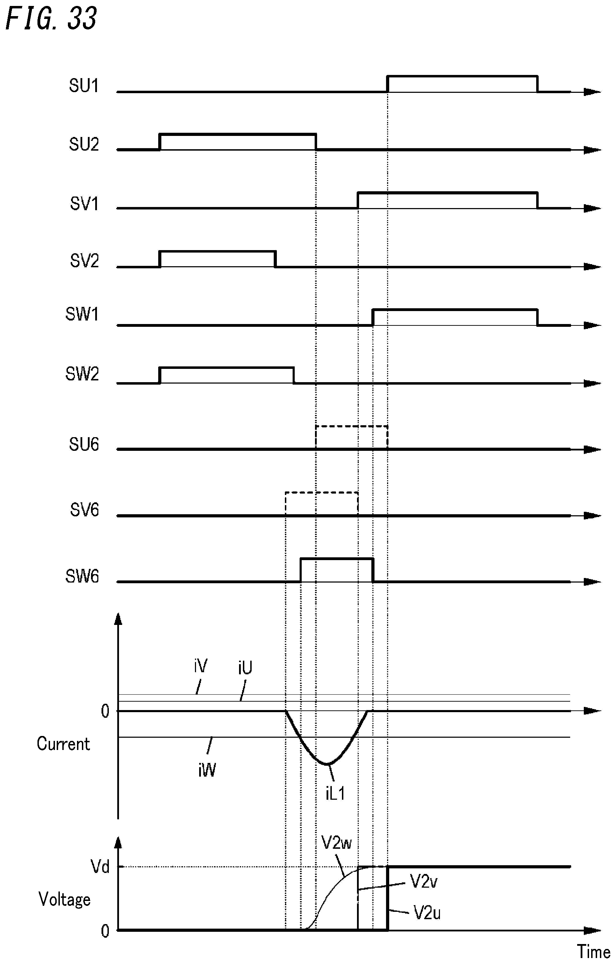

As an example, a situation where the inequality: the absolute value of the load current iW > the absolute value of the load current iV > the absolute value of the load current iU is satisfied and the first, second, and third switches are the switch 8U, the switch 8V, and the switch 8W, respectively, will be described with reference to FIGS. 20 and 33. FIG. 33 is a timing chart illustrating how the power converter 100 according to the eighth embodiment operates in a situation where its controller 50 has performed the shortening control. In FIGS. 20 and 33, the polarity of the load current iW is negative, and the polarity of the load currents iV and iU is positive.

FIG. 20 is a timing chart illustrating a situation before the controller 50 performs the shortening control. FIG. 33 is a timing chart illustrating a situation where the controller 50 has performed the shortening control. When performing the shortening control, the controller 50 shortens the high-level period of the control signal SU6 for the switch 8U (first switch) such that the high-level period of the control signal SU6 goes zero, does not shorten the high-level period of the control signal SW6 for the switch 8W (second switch), and shortens the high-level period of the control signal SV6 for the switch 8V (third switch) such that the high-level period of the control signal SV6 goes zero. Through the resonant inductor L1, only the resonant current passing through the switch 8V (second switch) out of the three switches 8 flows. The resonant capacitor 9W is charged with electricity to the point that the voltage V2w across the resonant capacitor 9W reaches Vd, thus realizing zero-voltage soft switching of the first switching element 1W.

If the inequality: the absolute value of the load current iU > the absolute value of the load current iW > the absolute value of the load current iV is satisfied, then the control signal for the first switch, the control signal for the second switch, and the control signal for the third switch are the control signal SV6 for the switch 8V, the control signal SU6 for the switch 8U, and the control signal SW6 for the switch 8W, respectively. In that case, when performing the shortening control, the controller 50 shortens the high-level period of the control signal SV6 such that the high-level period of the control signal SV6 goes zero and shortens the high-level period of the control signal SW6 such that the high-level period of the control signal SW6 goes zero, thus realizing zero-voltage soft switching of the first switching element 1U.

If the inequality: the absolute value of the load current iV > the absolute value of the load current iU > the absolute value of the load current iW is satisfied, then the control signal for the first switch, the control signal for the second switch, and the control signal for the third switch are the control signal SW6 for the switch 8W, the control signal SV6 for the switch 8V, and the control signal SU6 for the switch 8U, respectively. In that case, when performing the shortening control, the controller 50 shortens the high-level period of the control signal SW6 such that the high-level period of the control signal SW6 goes zero and shortens the high-level period of the control signal SU6 such that the high-level period of the control signal SU6 goes zero, thus realizing zero-voltage soft switching of the first switching element 1V.

### (1.2) When discharging operation is performed on resonant capacitor

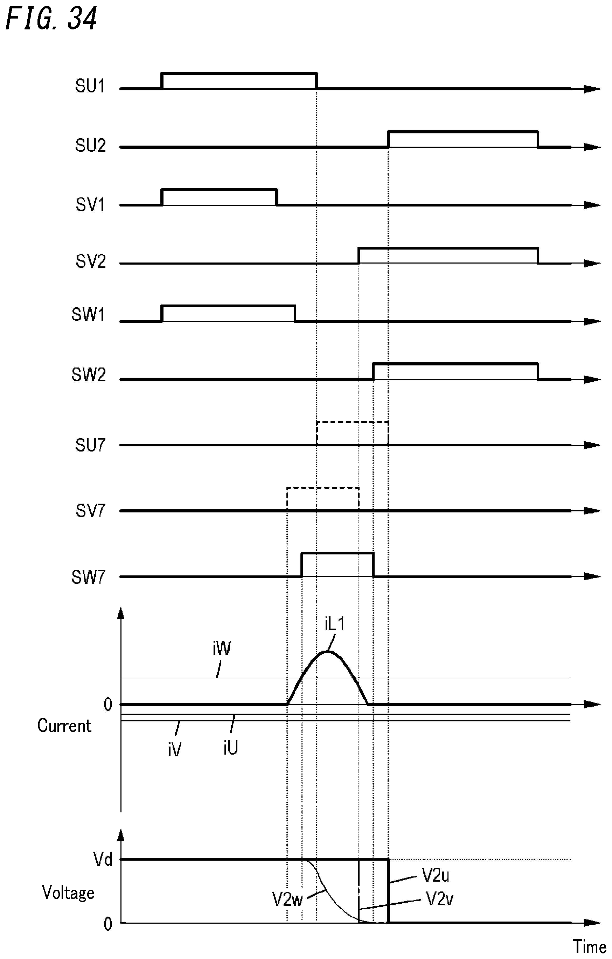

As an example, a situation where the inequality: the absolute value of the load current iW > the absolute value of the load current iV > the absolute value of the load current iU is satisfied and the first, second, and third switches are the switch 8U, the switch 8V, and the switch 8W, respectively, will be described with reference to FIGS. 22 and 34. FIG. 34 is a timing chart illustrating how the power converter 100 according to the eighth embodiment operates in a situation where its controller 50 has performed the shortening control. In FIGS. 22 and 34, the polarity of the load current iW is positive, and the polarity of the load currents iV and iU is negative.

FIG. 22 is a timing chart illustrating a situation before the controller 50 performs the shortening control. FIG. 34 is a timing chart illustrating a situation where the controller 50 has performed the shortening control. When performing the shortening control, the controller 50 shortens the high-level period of the control signal SU7 for the switch 8U (first switch) such that the high-level period of the control signal SU7 goes zero, does not shorten the high-level period of the control signal SW7 for the switch 8W (second switch), and shortens the high-level period of the control signal SV7 for the switch 8V (third switch) such that the high-level period of the control signal SU7 goes zero. Through the resonant inductor L1, only the resonant current passing through the switch 8W (second switch) out of the three switches 8 flows. Electricity is discharged from the resonant capacitor 9W to the point that the voltage V2v across the second switching element 2W becomes equal to zero volts, thus realizing zero-voltage soft switching of the second switching element 2W.

If the inequality: the absolute value of the load current iU > the absolute value of the load current iW > the absolute value of the load current iV is satisfied, then the control signal for the first switch, the control signal for the second switch, and the control signal for the third switch are the control signal SV7 for the switch 8V, the control signal SU7 for the switch 8U, and the control signal SW7 for the switch 8W, respectively. In that case, when performing the shortening control, the controller 50 shortens the high-level period of the control signal SV7 such that the high-level period of the control signal SV7 goes zero and shortens the high-level period of the control signal SW7 such that the high-level period of the control signal SW7 goes zero, thus realizing zero-voltage soft switching of the second switching element 2U.

If the inequality: the absolute value of the load current iV > the absolute value of the load current iU > the absolute value of the load current iW is satisfied, then the control signal for the first switch, the control signal for the second switch, and the control signal for the third switch are the control signal SW7 for the switch 8W, the control signal SV7 for the switch 8V, and the control signal SU7 for the switch 8U, respectively. In that case, when performing the shortening control, the controller 50 shortens the high-level period of the control signal SW6 such that the high-level period of the control signal SW6 goes zero and shortens the high-level period of the control signal SU7 such that the high-level period of the control signal SU7 goes zero, thus realizing zero-voltage soft switching of the second switching element 2V.

### (2) Advantages

In a power converter 100 according to the eighth embodiment, the controller 50 sets a dead time period Td between the high-level period of the control signal for the first switching element 1 and the high-level period of the control signal for the second switching element 2 with respect to each of the plurality of switching circuits 10. The controller 50 sets the high-level period of the control signal for each of the plurality of switches 8 based on the dead time period Td for a corresponding one of the plurality of switching circuits 10. In addition, the controller 50 performs shortening control when determining that resonant currents respectively passing through two or more switches 8 belonging to the plurality of switches 8 should be going to flow simultaneously through the resonant inductor L1 upon the application of a control signal having a preset high-level period to each of the plurality of switches 8. When performing the shortening control, the controller 50 applies a control signal, of which the preset high-level period has been shortened, to a first switch which is one of three switches 8, applies a control signal having the preset high-level period to a second switch belonging to the three switches 8, and applies a control signal, of which the preset high-level period has been shortened, to a third switch. The second switch is different from the first switch. The third switch is different from the first switch and the second switch.

This configuration not only allows zero-voltage soft switching to be performed but also allows the switching loss to be cut down.

In addition, in the power converter 100 according to the eighth embodiment, when performing the shortening control, the controller 50 applies a control signal, of which the preset high-level period has been shortened to zero, to the first switch, and applies a control signal, of which the preset high-level period has been shortened to zero, to the third switch.

This configuration not only allows zero-voltage soft switching to be performed on the first switching element 1 and second switching element 2 of the switching circuit 10 corresponding to the second switch but also allows the switching loss to be cut down.

Furthermore, in the power converter 100 according to the eighth embodiment, when the controller 50 performs the shortening control, the first switch is one of the two or more switches 8 and corresponds to one switching circuit 10 belonging to two or more switching circuits 10. The two or more switching circuits 10 are switching circuits 10 respectively corresponding to the two or more switches 8 which belong to the plurality of switching circuits 10. The two or more switching circuits 10 respectively cause load currents having mutually different absolute values to flow therethrough. The one switching circuit causes a load current, of which the absolute value is the smallest among the two or more switching circuits 10, to flow therethrough.

According to this configuration, the high-level period of a control signal for a switch 8, corresponding to a switching circuit 10 that causes a load current, of which the absolute value is the smallest, to flow therethrough is shortened, thus allowing the switching loss to be further cut down.

### (Ninth embodiment)

A power converter 100 according to a ninth embodiment has the same circuit configuration as the power converter 100 according to the first embodiment (refer to FIG. 1), and therefore, illustration and description thereof will be omitted herein.

The power converter 100 according to the ninth embodiment operates in substantially the same way as the power converter 100 according to the seventh embodiment. In the power converter 100 according to the ninth embodiment, the controller 50 shortens the high-level period of a control signal for the first switch such that the control signal has a high-level period, of which the period overlapping with the high-level period of a control signal for the second switch has a width of zero, which is a difference from the seventh embodiment.

### (1.1) When charging operation is performed on resonant capacitor

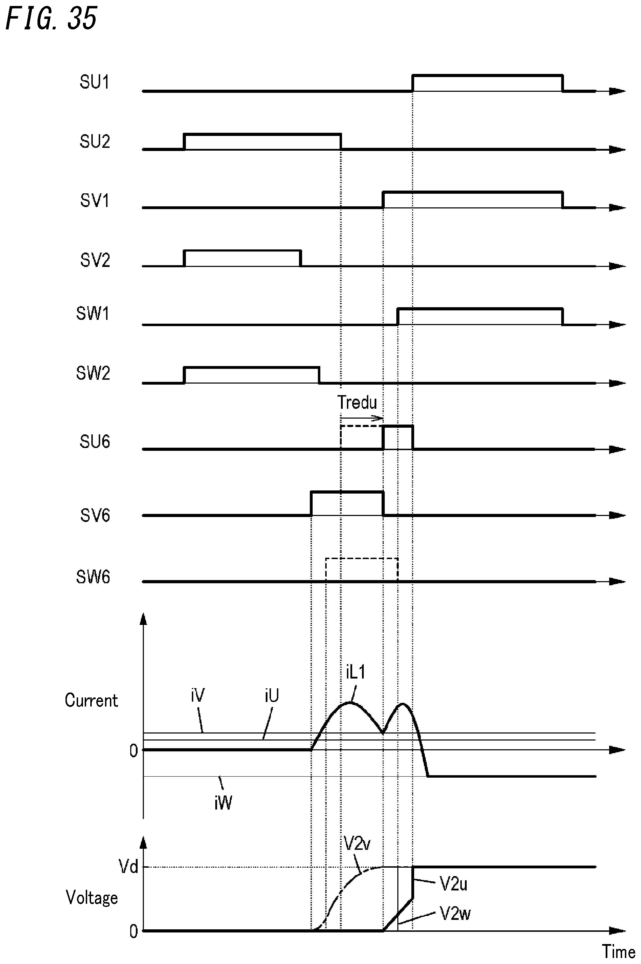

As an example, a situation where the inequality: the absolute value of the voltage instruction value Vv > the absolute value of the voltage instruction value Vw > the absolute value of the voltage instruction value Vu is satisfied and the first, second, and third switches are the switch 8U, the switch 8V, and the switch 8W, respectively, will be described with reference to FIGS. 20 and 35. FIG. 35 is a timing chart illustrating how the power converter according to the ninth embodiment operates in a situation where its controller 100 has performed the shortening control 50.

FIG. 20 is a timing chart illustrating a situation before the controller 50 performs the shortening control. FIG. 35 is a timing chart illustrating a situation where the controller 50 has performed the shortening control. When performing the shortening control, the controller 50 shortens, by Tredu, the high-level period of the control signal SU6 for the switch 8U (first switch), does not shorten the high-level period of the control signal SV6 for the switch 8V (second switch), and shortens the high-level period of the control signal SW6 for the switch 8W (third switch) such that the high-level period of the control signal SW6 goes zero. As a result, the resonant capacitor 9V is charged with electricity to the point that the voltage V2v across the resonant capacitor 9V reaches Vd, thus realizing zero-voltage soft switching of the first switching element 1V.

If the inequality: the absolute value of the voltage instruction value Vw > the absolute value of the voltage instruction value Vu > the absolute value of the voltage instruction value Vv is satisfied, then the control signal for the first switch, the control signal for the second switch, and the control signal for the third switch are the control signal SV6 for the switch 8V, the control signal SW6 for the switch 8W, and the control signal SU6 for the switch 8U, respectively. In that case, when performing the shortening control, the controller 50 shortens the high-level period of the control signal SV6 by Tredv (refer to FIG. 21) and shortens the high-level period of the control signal SU6 such that the high-level period of the control signal SU6 goes zero, thus realizing zero-voltage soft switching of the first switching element 1W.

If the inequality: the absolute value of the voltage instruction value Vu > the absolute value of the voltage instruction value Vv > the absolute value of the voltage instruction value Vw is satisfied, then the control signal for the first switch, the control signal for the second switch, and the control signal for the third switch are the control signal SW6 for the switch 8W, the control signal SU6 for the switch 8U, and the control signal SV6 for the switch 8V, respectively. In that case, when performing the shortening control, the controller 50 shortens the high-level period of the control signal SW6 by Tredw (refer to FIG. 21) and shortens the high-level period of the control signal SV6 such that the high-level period of the control signal SV6 goes zero, thus realizing zero-voltage soft switching of the first switching element 1U.

### (1.2) When discharging operation is performed on resonant capacitor

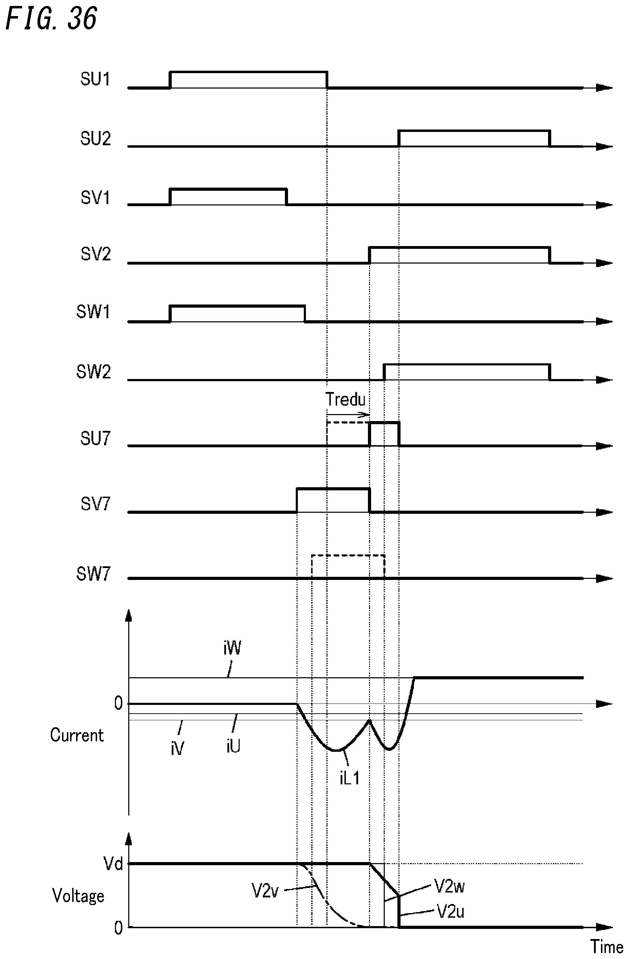

As an example, a situation where the inequality: the absolute value of the voltage instruction value Vv > the absolute value of the voltage instruction value Vw > the absolute value of the voltage instruction value Vu is satisfied and the first, second, and third switches are the switch 8U, the switch 8V, and the switch 8W, respectively, will be described with reference to FIGS. 22 and 36. FIG. 36 is a timing chart illustrating how the power converter 100 according to the ninth embodiment operates in a situation where its controller 50 has performed the shortening control.

FIG. 22 is a timing chart illustrating a situation before the controller 50 performs the shortening control. FIG. 36 is a timing chart illustrating a situation where the controller 50 has performed the shortening control. When performing the shortening control, the controller 50 shortens, by Tredu, the high-level period of the control signal SU7 for the switch 8U (first switch), does not shorten the high-level period of the control signal SV7 for the switch 8V (second switch), and shortens the high-level period of the control signal SW7 for the switch 8W (third switch) such that the high-level period of the control signal SW7 goes zero. As a result, electricity is discharged from the resonant capacitor 9V to the point that the voltage V2v across the second switching element 2V becomes equal to zero volts, thus realizing zero-voltage soft switching of the second switching element 2V.

If the inequality: the absolute value of the voltage instruction value Vw > the absolute value of the voltage instruction value Vu > the absolute value of the voltage instruction value Vv is satisfied, then the control signal for the first switch, the control signal for the second switch, and the control signal for the third switch are the control signal SV7 for the switch 8V, the control signal SW7 for the switch 8W, and the control signal SU7 for the switch 8U, respectively. In that case, when performing the shortening control, the controller 50 shortens the high-level period of the control signal SV7 by Tredv and shortens the high-level period of the control signal SU7 such that the high-level period of the control signal SU7 goes zero, thus realizing zero-voltage soft switching of the second switching element 2W.

If the inequality: the absolute value of the voltage instruction value Vu > the absolute value of the voltage instruction value Vv > the absolute value of the voltage instruction value Vw is satisfied, then the control signal for the first switch, the control signal for the second switch, and the control signal for the third switch are the control signal SW7 for the switch 8W, the control signal SU7 for the switch 8U, and the control signal SV7 for the switch 8V, respectively. In that case, when performing the shortening control, the controller 50 shortens the high-level period of the control signal SW7 by Tredw and shortens the high-level period of the control signal SV7 such that the high-level period of the control signal SV7 goes zero, thus realizing zero-voltage soft switching of the second switching element 2U.

### (2) Advantages

In a power converter 100 according to the ninth embodiment, the controller 50 sets a dead time period Td between the high-level period of the control signal for the first switching element 1 and the high-level period of the control signal for the second switching element 2 with respect to each of the plurality of switching circuits 10. The controller 50 sets the high-level period of the control signal for each of the plurality of switches 8 based on the dead time period Td for a corresponding one of the plurality of switching circuits 10. In addition, the controller 50 performs shortening control when determining that resonant currents respectively passing through two or more switches 8 belonging to the plurality of switches 8 should be going to flow simultaneously through the resonant inductor L1 upon the application of a control signal having a preset high-level period to each of the plurality of switches 8. When performing the shortening control, the controller 50 applies a control signal, of which the preset high-level period has been shortened, to a first switch which is one of three switches 8, applies a control signal having the preset high-level period to a second switch belonging to the three switches 8, and applies a control signal, of which the preset high-level period has been shortened, to a third switch. The second switch is different from the first switch. The third switch is different from the first switch and the second switch.

This configuration not only allows zero-voltage soft switching to be performed but also allows the switching loss to be cut down.

In addition, in the power converter 100 according to the ninth embodiment, when performing the shortening control, the controller 50 applies a control signal, of which the preset high-level period has been shortened by a shortening period, to the first switch, and applies a control signal, of which the preset high-level period has been shortened to zero, to the third switch.

This configuration not only allows zero-voltage soft switching to be performed on the first switching element 1 and second switching element 2 of the switching circuit 10 corresponding to the second switch but also allows the switching loss to be cut down.

### (First variation of ninth embodiment)

In a power converter 100 according to a first variation of the ninth embodiment, when performing the shortening control, the controller 50 determines a first switch and a third switch differently from the ninth embodiment. In the first variation of the ninth embodiment, the first switch is one of the three switches 8 and corresponds to a first switching circuit 10 belonging to three switching circuits 10. The three switching circuits 10 correspond to the three switches 8, respectively. Voltage instruction values for the three switching circuits 10 have mutually different absolute values. The voltage instruction value for the first switching circuit 10 has the smallest absolute value among the voltage instruction values for the three switching circuits 10. The third switch is one of the three switches 8 and corresponds to a second switching circuit 10 belonging to the three switching circuits 10. The three switching circuits 10 correspond to the three switches 8, respectively. The voltage instruction values for the three switching circuits 10 have mutually different absolute values. The voltage instruction value for the second switching circuit 10 has the second smallest absolute value among the voltage instruction values for the three switching circuits 10.

### (Second variation of ninth embodiment)

In a power converter 100 according to a second variation of the ninth embodiment, when performing the shortening control, the controller 50 determines a first switch and a third switch differently from the ninth embodiment. In the second variation of the ninth embodiment, the third switch is one of the three switches 8 and corresponds to a first switching circuit 10 belonging to three switching circuits 10. The three switching circuits 10 correspond to the three switches 8, respectively. Voltage instruction values for the three switching circuits 10 have mutually different absolute values. The voltage instruction value for the first switching circuit 10 has the smallest absolute value among the voltage instruction values for the three switching circuits 10. The first switch is one of the three switches 8 and corresponds to a second switching circuit 10 belonging to the three switching circuits 10. The three switching circuits 10 correspond to the three switches 8, respectively. The voltage instruction values for the three switching circuits 10 have mutually different absolute values. The voltage instruction value for the second switching circuit 10 has the second smallest absolute value among the voltage instruction values for the three switching circuits 10.

### (Tenth embodiment)

A power converter 100 according to a tenth embodiment has the same circuit configuration as the power converter 100 according to the first embodiment (refer to FIG. 1), and therefore, illustration and description thereof will be omitted herein.

The power converter 100 according to the tenth embodiment operates in substantially the same way as the power converter 100 according to the eighth embodiment. In the power converter 100 according to the tenth embodiment, the controller 50 shortens the high-level period of a control signal for the third switch such that the control signal has a high-level period, of which the period overlapping with the high-level period of a control signal for the second switch has a width of zero, which is a difference from the seventh embodiment.

### (1.1) When charging operation is performed on resonant capacitor

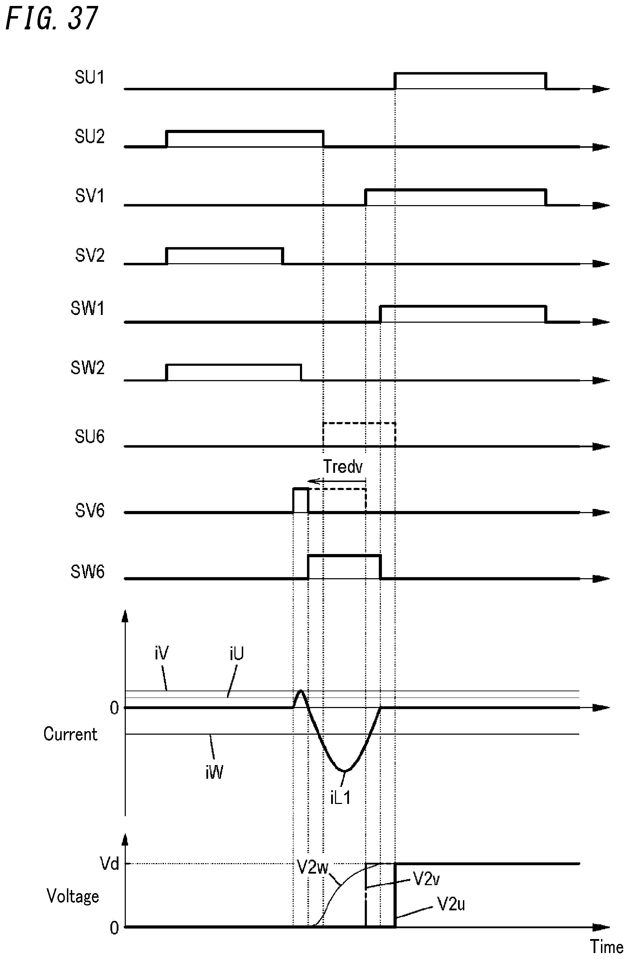

As an example, a situation where the inequality: the absolute value of the load current iW > the absolute value of the load current iV > the absolute value of the load current iU is satisfied and the first, second, and third switches are the switch 8U, the switch 8V, and the switch 8W, respectively, will be described with reference to FIGS. 20 and 37. FIG. 37 is a timing chart illustrating how the power converter 100 according to the tenth embodiment operates in a situation where its controller 50 has performed the shortening control. In FIGS. 20 and 37, the polarity of the load current iW is negative, and the polarity of the load currents iV and iU is positive.

FIG. 20 is a timing chart illustrating a situation before the controller 50 performs the shortening control. FIG. 37 is a timing chart illustrating a situation where the controller 50 has performed the shortening control. When performing the shortening control, the controller 50 shortens the high-level period of the control signal SU6 for the switch 8U (first switch) such that the high-level period of the control signal SU6 goes zero, does not shorten the high-level period of the control signal SW6 for the switch 8W (second switch), and shortens the high-level period of the control signal SV6 for the switch 8V (third switch) by Tredv. As a result, the resonant capacitor 9W is charged with electricity to the point that the voltage V2w across the resonant capacitor 9W reaches Vd, thus realizing zero-voltage soft switching of the first switching element 1W. In addition, the controller 50 preferentially shortens the high-level period of a switch 8 corresponding to a switching circuit 10 which causes a load current having a relatively small absolute value to flow therethrough, thus allowing the switching loss to be caused by the switching circuit 10 to be further cut down.

If the inequality: the absolute value of the load current iU > the absolute value of the load current iW > the absolute value of the load current iV is satisfied, then the control signal for the first switch, the control signal for the second switch, and the control signal for the third switch are the control signal SV6 for the switch 8V, the control signal SU6 for the switch 8U, and the control signal SW6 for the switch 8W, respectively. In that case, when performing the shortening control, the controller 50 shortens the high-level period of the control signal SV6 such that the high-level period of the control signal SV6 goes zero and shortens the high-level period of the control signal SW6 by Tredw (refer to FIG. 21), thus realizing zero-voltage soft switching of the first switching element 1U. In addition, the controller 50 preferentially shortens the high-level period of a switch 8 corresponding to a switching circuit 10 which causes a load current having a relatively small absolute value to flow therethrough, thus allowing the switching loss to be caused by the switching circuit 10 to be further cut down.

If the inequality: the absolute value of the load current iV > the absolute value of the load current iU > the absolute value of the load current iW is satisfied, then the control signal for the first switch, the control signal for the second switch, and the control signal for the third switch are the control signal SW6 for the switch 8W, the control signal SV6 for the switch 8V, and the control signal SU6 for the switch 8U, respectively. In that case, when performing the shortening control, the controller 50 shortens the high-level period of the control signal SW6 such that the high-level period of the control signal SW6 goes zero and shortens the high-level period of the control signal SU6 by Tredu, thus realizing zero-voltage soft switching of the first switching element 1V. In addition, the controller 50 preferentially shortens the high-level period of a switch 8 corresponding to a switching circuit 10 which causes a load current having a relatively small absolute value to flow therethrough, thus allowing the switching loss to be caused by the switching circuit 10 to be further cut down.

### (1.2) When discharging operation is performed on resonant capacitor

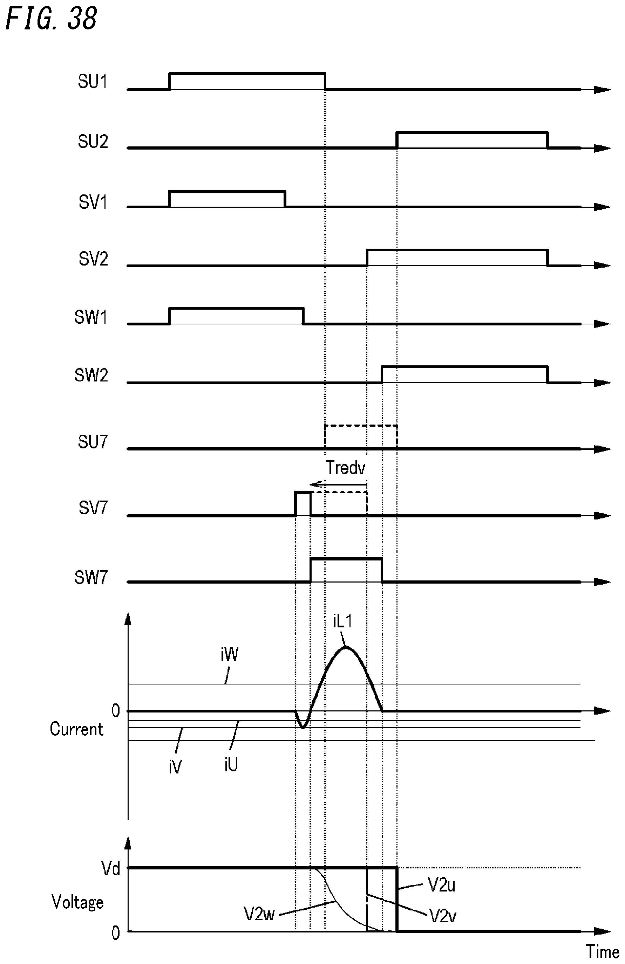

As an example, a situation where the inequality: the absolute value of the load current iW > the absolute value of the load current iV > the absolute value of the load current iU is satisfied and the first, second, and third switches are the switch 8U, the switch 8W, and the switch 8V, respectively, will be described with reference to FIGS. 22 and 38. FIG. 38 is a timing chart illustrating how the power converter 100 according to the tenth embodiment operates in a situation where its controller 50 has performed the shortening control. In FIGS. 22 and 38, the polarity of the load current iW is positive, and the polarity of the load currents iV and iU is negative.

FIG. 22 is a timing chart illustrating a situation before the controller 50 performs the shortening control. FIG. 38 is a timing chart illustrating a situation where the controller 50 has performed the shortening control. When performing the shortening control, the controller 50 shortens the high-level period of the control signal SU7 for the switch 8U (first switch) such that the high-level period of the control signal SU7 goes zero, does not shorten the high-level period of the control signal SW7 for the switch 8W (second switch), and shortens the high-level period of the control signal SV7 for the switch 8V (third switch) by Tredv. As a result, electricity is discharged from the resonant capacitor 9W to the point that the voltage V2v across the second switching element 2W becomes equal to zero volts, thus realizing zero-voltage soft switching of the second switching element 2W. In addition, the controller 50 preferentially shortens the high-level period of a switch 8 corresponding to a switching circuit 10 which causes a load current having a relatively small absolute value to flow therethrough, thus allowing the switching loss to be caused by the switching circuit 10 to be further cut down.

If the inequality: the absolute value of the load current iU > the absolute value of the load current iW > the absolute value of the load current iV is satisfied, then the control signal for the first switch, the control signal for the second switch, and the control signal for the third switch are the control signal SV7 for the switch 8V, the control signal SU7 for the switch 8U, and the control signal SW7 for the switch 8W, respectively. In that case, when performing the shortening control, the controller 50 shortens the high-level period of the control signal SV7 such that the high-level period of the control signal SV7 goes zero and shortens the high-level period of the control signal SW7 by Tredw, thus realizing zero-voltage soft switching of the second switching element 2U. In addition, the controller 50 preferentially shortens the high-level period of a switch 8 corresponding to a switching circuit 10 which causes a load current having a relatively small absolute value to flow therethrough, thus allowing the switching loss to be caused by the switching circuit 10 to be further cut down.

If the inequality: the absolute value of the load current iV > the absolute value of the load current iU > the absolute value of the load current iW is satisfied, then the control signal for the first switch, the control signal for the second switch, and the control signal for the third switch are the control signal SW7 for the switch 8W, the control signal SV7 for the switch 8V, and the control signal SU7 for the switch 8U, respectively. In that case, when performing the shortening control, the controller 50 shortens the high-level period of the control signal SW6 such that the high-level period of the control signal SW6 goes zero and shortens the high-level period of the control signal SU7 by Tredu, thus realizing zero-voltage soft switching of the second switching element 2V. In addition, the controller 50 preferentially shortens the high-level period of a switch 8 corresponding to a switching circuit 10 which causes a load current having a relatively small absolute value to flow therethrough, thus allowing the switching loss to be caused by the switching circuit 10 to be further cut down.

### (2) Advantages

In a power converter 100 according to the tenth embodiment, the controller 50 sets a dead time period Td between the high-level period of the control signal for the first switching element 1 and the high-level period of the control signal for the second switching element 2 with respect to each of the plurality of switching circuits 10. The controller 50 sets the high-level period of the control signal for each of the plurality of switches 8 based on the dead time period Td for a corresponding one of the plurality of switching circuits 10. In addition, the controller 50 performs shortening control when determining that resonant currents respectively passing through two or more switches 8 belonging to the plurality of switches 8 should be going to flow simultaneously through the resonant inductor L1 upon the application of a control signal having a preset high-level period to each of the plurality of switches 8. When performing the shortening control, the controller 50 applies a control signal, of which the preset high-level period has been shortened, to a first switch which is one of three switches 8, applies a control signal having the preset high-level period to a second switch belonging to the three switches 8, and applies a control signal, of which the preset high-level period has been shortened, to a third switch. The second switch is different from the first switch. The third switch is different from the first switch and the second switch.

This configuration not only allows zero-voltage soft switching to be performed but also allows the switching loss to be cut down.

In addition, in the power converter 100 according to the tenth embodiment, when performing the shortening control, the controller 50 applies a control signal, of which the preset high-level period has been shortened to zero, to the first switch, and applies a control signal, of which the preset high-level period has been shortened by a shortening period, to the third switch.

This configuration not only allows zero-voltage soft switching to be performed on the first switching element 1 and second switching element 2 of the switching circuit 10 corresponding to the second switch but also allows the switching loss to be cut down.

Furthermore, in the power converter 100 according to the tenth embodiment, when the controller 50 performs the shortening control, the first switch is one of the two or more switches 8 and corresponds to one switching circuit 10 belonging to two or more switching circuits 10. The two or more switching circuits 10 are switching circuits 10 respectively corresponding to the two or more switches 8 which belong to the plurality of switching circuits 10. The two or more switching circuits 10 respectively cause load currents having mutually different absolute values to flow therethrough. The one switching circuit causes a load current, of which the absolute value is the smallest among the two or more switching circuits 10, to flow therethrough.

According to this configuration, the high-level period of a control signal for a switch 8, corresponding to a switching circuit 10 that causes a load current, of which the absolute value is the smallest, to flow therethrough is shortened, thus allowing the switching loss to be further cut down.

### (First variation of tenth embodiment)

In a power converter 100 according to a first variation of the tenth embodiment, when performing the shortening control, the controller 50 determines a first switch and a third switch differently from the tenth embodiment. In the first variation of the tenth embodiment, the first switch is one of the three switches 8 and corresponds to a first switching circuit 10 belonging to three switching circuits 10. The three switching circuits 10 correspond to the three switches 8, respectively. Voltage instruction values for the three switching circuits 10 have mutually different absolute values. The voltage instruction value for the first switching circuit 10 has the largest absolute value among the voltage instruction values for the three switching circuits 10. The third switch is one of the three switches 8 and corresponds to a second switching circuit 10 belonging to the three switching circuits 10. The three switching circuits 10 correspond to the three switches 8, respectively. The voltage instruction values for the three switching circuits 10 have mutually different absolute values. The voltage instruction value for the second switching circuit 10 has the second largest absolute value among the voltage instruction values for the three switching circuits 10.

### (Second variation of tenth embodiment)

In a power converter 100 according to a second variation of the tenth embodiment, when performing the shortening control, the controller 50 determines a first switch and a third switch differently from the tenth embodiment. In the second variation of the tenth embodiment, the third switch is one of the three switches 8 and corresponds to a first switching circuit 10 belonging to three switching circuits 10. The three switching circuits 10 correspond to the three switches 8, respectively. Voltage instruction values for the three switching circuits 10 have mutually different absolute values. The voltage instruction value for the first switching circuit 10 has the largest absolute value among the voltage instruction values for the three switching circuits 10. The first switch is one of the three switches 8 and corresponds to a second switching circuit 10 belonging to the three switching circuits 10. The three switching circuits 10 correspond to the three switches 8, respectively. The voltage instruction values for the three switching circuits 10 have mutually different absolute values. The voltage instruction value for the second switching circuit 10 has the second largest absolute value among the voltage instruction values for the three switching circuits 10.

### (Eleventh embodiment)

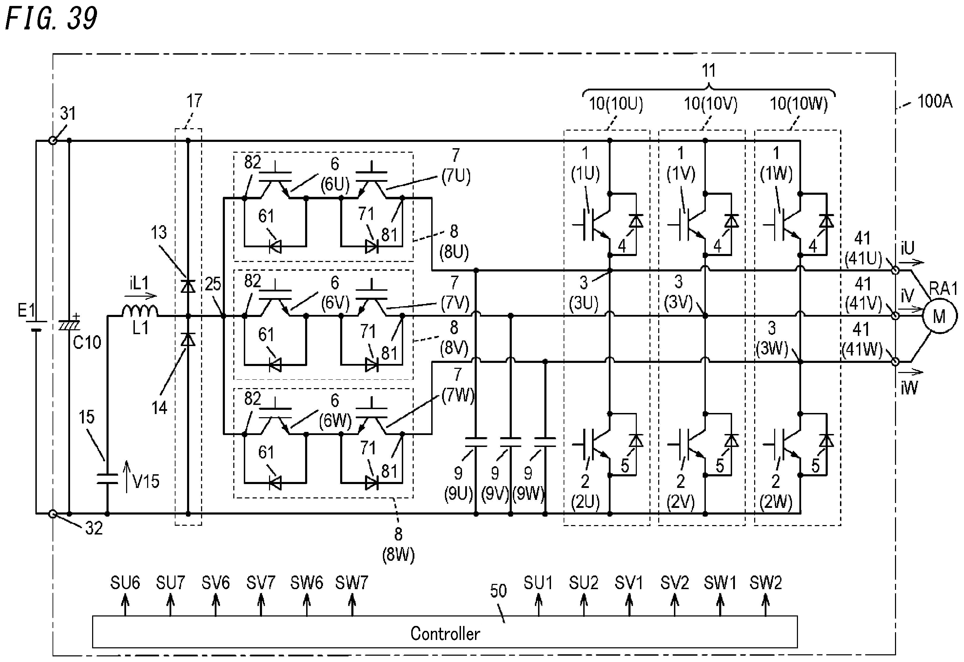

A power converter 100A according to an eleventh embodiment will be described with reference to FIG. 39. FIG. 39 is a circuit diagram of a system including a power converter 100A according to the eleventh embodiment. In the following description, any constituent element of the power converter 100A according to the eleventh embodiment, having the same function as a counterpart of the power converter 100 according to the first embodiment described above, will be designated by the same reference numeral as that counterpart's, and description thereof will be omitted herein.

In the power converter 100A according to the eleventh embodiment, in each of the plurality of switches 8, first IGBT 6 and second IGBT 7 thereof are connected in anti-series. In the power converter 100A according to the eleventh embodiment, in each of the plurality of switches 8, an emitter terminal of the first IGBT 6 and an emitter terminal of the second IGBT 7 are connected to each other, a collector terminal of the first IGBT 6 is connected to the connection node 3 of a corresponding one of the plurality of switching circuits 10, and a collector terminal of the second IGBT 7 is connected to the common connection node 25. In addition, each of the plurality of switches 8 further includes a diode 61 connected to the first IGBT 6 in antiparallel and a diode 71 connected to the second IGBT 7 in antiparallel.

The controller 50 may operate in the same way as, for example, the controller 50 according to the first embodiment. However, this is only an example and should not be construed as limiting. Alternatively, the controller 50 may also operate in the same way as the controller 50 according to any one of the second to tenth embodiments or may perform any of these operations in combination.

In the power converter 100A according to the eleventh embodiment, each of the first IGBT 6 and the second IGBT 7 may be replaced with either a metal-oxide semiconductor field effect transistor (MOSFET) or a bipolar transistor. In that case, the diode 61 and diode 71 shown in FIG. 21 may each be replaced with, for example, either a parasitic diode of the replacement element or an element built in one chip of the replacement element. Also, in the power converter 100A according to the eleventh embodiment, the diode 61 and the diode 71 do not have to be provided as external elements for the first IGBT 6 and the second IGBT 7, respectively, but may also be elements built in one chip.

Alternatively, in each of the plurality of switches 8, a collector terminal of the first IGBT 6 and a collector terminal of the second IGBT 7 may be connected to each other, an emitter terminal of the first IGBT 6 may be connected to the connection node 3 of a corresponding one of the plurality of switching circuits 10, and an emitter terminal of the second IGBT 7 may be connected to the common connection node 25.

### (Twelfth embodiment)

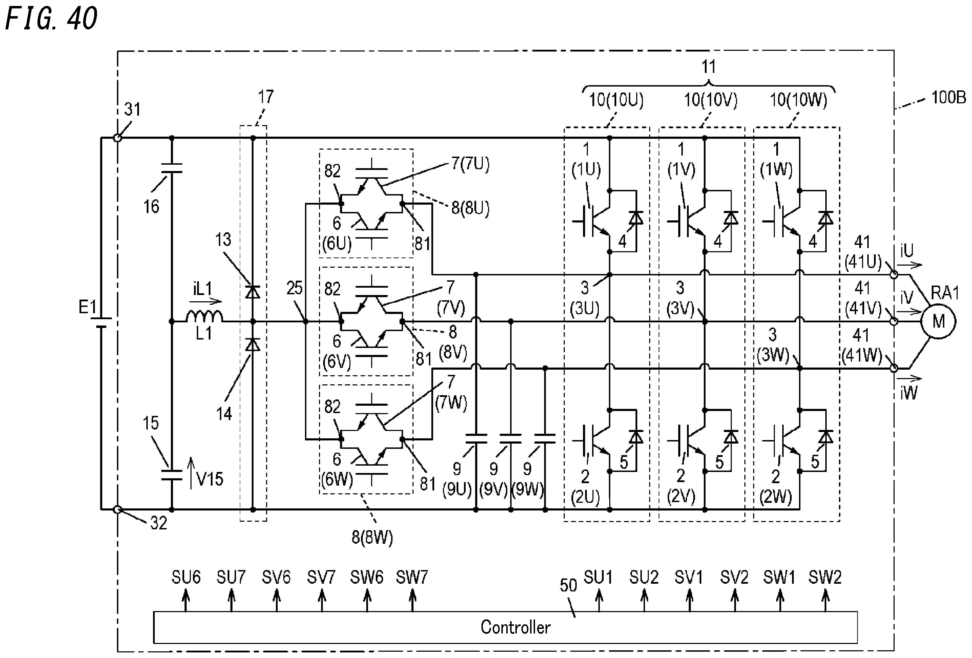

A power converter 100B according to a twelfth embodiment will be described with reference to FIG. 40. FIG. 40 is a circuit diagram of a system including a power converter 100B according to the twelfth embodiment. The power converter 100B according to the twelfth embodiment further includes a capacitor 16 connected between the second end of the resonant inductor L1 and the first DC terminal 31, which is a difference from the power converter 100 according to the first embodiment. In the following description, any constituent element of the power converter 100B according to the twelfth embodiment, having the same function as a counterpart of the power converter 100 according to the first embodiment described above, will be designated by the same reference numeral as that counterpart's, and description thereof will be omitted herein.

The power converter 100B does not include the capacitor C10 of the power converter 100 according to the first embodiment. The capacitor 16 is connected to the regenerative capacitor 15 in series. Thus, in this power converter 100B, a series circuit of the capacitor 16 and the regenerative capacitor 15 is connected between the first DC terminal 31 and the second DC terminal 32. The capacitance of the capacitor 16 is equal to the capacitance of the regenerative capacitor 15. As used herein, the expression "the capacitance of the capacitor 16 is equal to the capacitance of the regenerative capacitor 15" refers to not only a situation where the capacitance of the capacitor 16 is exactly equal to the capacitance of the regenerative capacitor 15 but also a situation where the capacitance of the capacitor 16 is equal to or greater than 95% and equal to or less than 105% of the capacitance of the regenerative capacitor 15 as well.

In the power converter 100B according to the twelfth embodiment, the potential V15 at the fourth end 154 of the regenerative capacitor 15 has a value calculated by dividing the voltage value Vd of the DC power supply E1 by two that is the number of the capacitors, namely, the capacitor 16 and the regenerative capacitor 15. Thus, the potential V15 at the fourth end 154 of the regenerative capacitor 15 is approximately Vd/2. In the power converter 100B according to the twelfth embodiment, the controller 50 may store in advance the value of the potential V15 at the fourth end 154 of the regenerative capacitor 15.

The controller 50 of the power converter 100B according to the twelfth embodiment, as well as the controller 50 of the power converter 100 according to the first embodiment, performs the shortening control. Thus, the power converter 100B according to the twelfth embodiment, as well as the power converter 100 according to the first embodiment, may also cut down the switching loss.

The controller 50 may perform the shortening control operation in the same way as, for example, the controller 50 according to the first embodiment. However, this is only an example and should not be construed as limiting. Alternatively, the controller 50 may also perform the shortening control operation in the same way as the controller 50 according to any one of the second to tenth embodiments and may also perform any of these operations in combination.

### (Thirteenth embodiment)

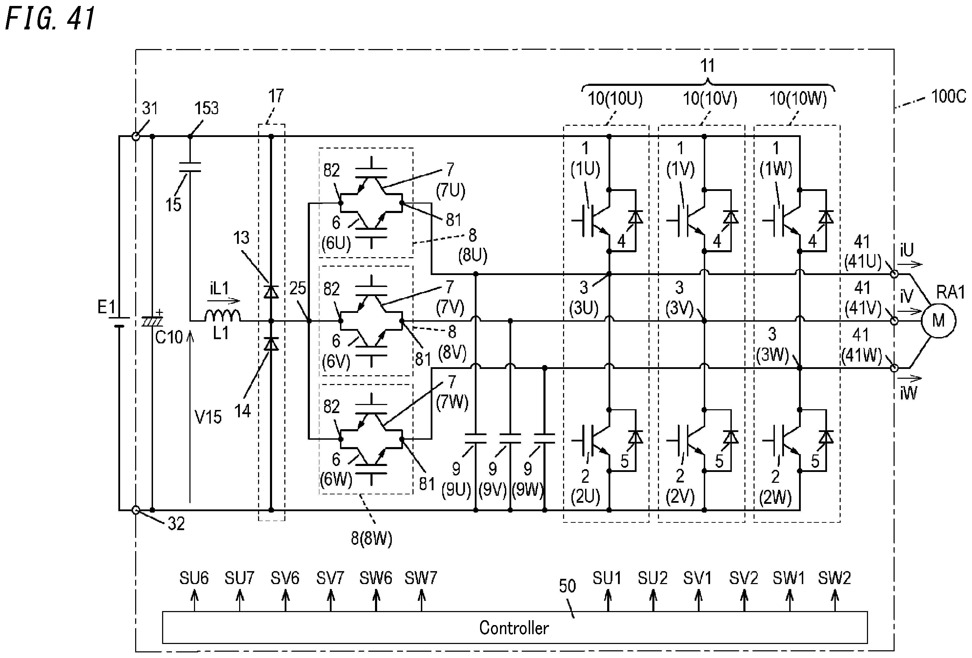

A power converter 100C according to a thirteenth embodiment will be described with reference to FIG. 41. FIG. 41 is a circuit diagram of a system including a power converter 100C according to the thirteenth embodiment. In the power converter 100C according to the thirteenth embodiment, the regenerative capacitor 15 is connected between the second end of the resonant inductor L1 and the first DC terminal 31, which is a difference from the power converter 100 according to the first embodiment. In the following description, any constituent element of the power converter 100C according to this thirteenth embodiment, having the same function as a counterpart of the power converter 100 according to the first embodiment described above, will be designated by the same reference numeral as that counterpart's, and description thereof will be omitted herein.

The controller 50 of the power converter 100C according to the thirteenth embodiment, as well as the controller 50 of the power converter 100 according to the first embodiment, performs the shortening control. Thus, the power converter 100C according to the thirteenth embodiment, as well as the power converter 100 according to the first embodiment, may also cut down the switching loss.

### (Other variations)

Note that the first to thirteenth embodiments and their variations described above are only exemplary ones of various embodiments of the present disclosure and their variations and should not be construed as limiting. Rather, the first to thirteenth exemplary embodiments and their variations may be readily modified in various manners depending on a design choice or any other factor without departing from the scope of the present disclosure.

The operation performed by the controller 50 to "determine that a plurality of resonant currents should be going to flow simultaneously" is not limited to the operation of "determining that a plurality of resonant currents should be going to flow simultaneously" if the time lag described for the first embodiment is less than a threshold value.

Alternatively, the controller 50 may also determine that two-phase resonant currents should be going to flow simultaneously if any one of the current difference between the U-phase load current iU and the V-phase load current iV, the current difference between the V-phase load current iV and the W-phase load current iW, or the current difference between the W-phase load current iW and the U-phase load current iU is less than a current difference threshold value.

Still alternatively, the controller 50 may also determine that three-phase resonant currents should be going to flow simultaneously if the current difference between the U-phase load current iU and the V-phase load current iV, the current difference between the V-phase load current iV and the W-phase load current iW, and the current difference between the W-phase load current iW and the U-phase load current iU are all less than the current difference threshold value.

Yet alternatively, the controller 50 may also determine "two-phase resonant currents should be going to flow simultaneously" if the electrical angle determined by calculation, or estimated, based on sensor information provided by a sensor device (such as an encoder or a resolver) for detecting the number of revolutions of a motor falls within a first rotational angle range (e.g., equal to or larger than 55 degrees and equal to or smaller than 65 degrees), or a second rotational angle range (e.g., equal to or larger than 115 degrees and equal to or smaller than 125 degrees), or a third rotational angle range (e.g., equal to or larger than 175 degrees and equal to or smaller than 185 degrees), or a fourth rotational angle range (e.g., equal to or larger than 235 degrees and equal to or smaller than 245 degrees), or a fifth rotational angle range (e.g., equal to or larger than 295 degrees and equal to or smaller than 305 degrees), or a sixth rotational angle range (e.g., equal to or larger than 355 degrees and equal to or smaller than 365 degrees).

In the variation of the first embodiment, the variation of the second embodiment, and the fifth embodiment described above, the first and second switches belonging to the plurality of switches 8 are determined depending on which of the respective absolute values of their voltage instruction values is larger or smaller than the others. Alternatively, the first and second switches belonging to the plurality of switches 8 may also be determined depending on which of the respective duties is larger or smaller than the others. Furthermore, in the second variation of the third embodiment, the third variation of the third embodiment, the seventh embodiment , the ninth embodiment, the first variation of the ninth embodiment, the second variation of the ninth embodiment, the first variation of the tenth embodiment, and the second variation of the tenth embodiment, the first, second, and third switches belonging to the plurality of switches 8 are determined depending on which of the respective absolute values of their voltage instruction values is larger or smaller than the others. Alternatively, the first, second, and third switches belonging to the plurality of switches 8 may also be determined depending on which of the respective duties is larger or smaller than the others.

For example, each of the plurality of first switching elements 1 and the plurality of second switching elements 2 does not have to be an IGBT but may also be a MOSFET. In that case, each of the plurality of first diodes 4 may also be replaced with, for example, a parasitic diode of a MOSFET serving as its corresponding first switching element 1. In addition, each of the plurality of second diodes 5 may also be replaced with, for example, a parasitic diode of a MOSFET serving as its corresponding second switching element 2. The MOSFET may be, for example, an Si-based MOSFET or an SiC-based MOSFET. Each of the plurality of first switching elements 1 and the plurality of second switching elements 2 may also be, for example, a bipolar transistor or a GaN-based GIT.

Optionally, in the power converters 100, 100A, 100B, and 100C, if each of the plurality of resonant capacitors 9 has a relatively small capacitance, then the parasitic capacitors across the plurality of second switching elements 2 may also serve as the plurality of resonant capacitors 9 instead of providing the plurality of resonant capacitors 9 as separate elements.

The dead time period may also be set by a dead time generator circuit included in a gate driver integrated circuit (IC) provided separately from the controller 50. Alternatively, the controller 50 may include a gate driver IC and a dead time generator circuit included in the gate driver IC may set the dead time period.

Furthermore, the power converters 100, 100A, 100B, and 100C do not have to be configured to output three-phase AC power but may also be configured to output multi-phase AC power in more than three phases. As for the method for determining the additional time Tau, Tav, Taw already described in the "(3.1) Basic example" section for the first embodiment, the equation cited above is an example of ideal design, and therefore, calculation is not always made using such an equation. Rather, as the case may be, there is no problem even if the additional time Tau, Tav, Taw is set at either 0 or any other fixed value. Also, as long as the object of providing the additional time Tau, Tav, Taw is achievable, the additional time Tau, Tav, Taw may also have a value calculated by any other equation. For example, in the basic example described above, the additional time Tau is calculated by the equation: Tau = iU × (L/V15). However, this is only an example and should not be construed as limiting. Alternatively, Tau may also be set at 0, may be set at a value falling within the range from 0 to iU × (L/V15), may be set at an always constant additional time, may be calculated by another equation, or may be set as a combination of these.

Furthermore, the respective lengths of the shortening periods Tredu, Tredv, and Tredw do not have to be the same as the time lag but may also have any other values.

### (Aspects)

The foregoing description provides specific implementations for the following aspects of the present disclosure.

A power converter (100; 100A; 100B; 100C) according to a first aspect includes a first DC terminal (31) and a second DC terminal (32), a power converter circuit (11), a plurality of AC terminals (41), a plurality of switches (8), a plurality of resonant capacitors (9), a resonant inductor (L1), a regenerative capacitor (15), and a controller (50). The power converter circuit (11) includes a plurality of first switching elements (1) and a plurality of second switching elements (2). In the power converter circuit (11), a plurality of switching circuits (10), in each of which one of the plurality of first switching elements (1) and a corresponding one of the plurality of second switching elements (2) are connected one to one in series, are connected to each other in parallel. In the power converter circuit (11), the plurality of first switching elements (1) are connected to the first DC terminal (31), and the plurality of second switching elements (2) are connected to the second DC terminal (32). The plurality of AC terminals (41) are provided one to one for the plurality of switching circuits (10). Each of the plurality of AC terminals (41) is connected to a connection node (3) between the first switching element (1) and the second switching element (2) of a corresponding one of the plurality of switching circuits (10). The plurality of switches (8) are provided one to one for the plurality of switching circuits (10). Each of the plurality of switches (8) has a first end (81) and a second end (82). Each of the plurality of switches (8) has the first end (81) thereof connected to the connection node (3) between the first switching element (1) and the second switching element (2) of a corresponding one of the plurality of switching circuits (10). The plurality of switches (8) have the respective second ends (82) thereof connected in common to a common connection node (25). The plurality of resonant capacitors (9) are provided one to one for the plurality of switches (8). Each of the plurality of resonant capacitors (9) is connected between the first end (81) of a corresponding one of the plurality of switches (8) and the second DC terminal (32). The resonant inductor (L1) has a first end and a second end. In the resonant inductor (L1), the first end of the resonant inductor (L1) is connected to the common connection node (25). The regenerative capacitor (15) has a third end (153) and a fourth end (154). In the regenerative capacitor (15), the third end (153) of the regenerative capacitor (15) is connected to either the first DC terminal (31) or the second DC terminal (32). The controller (50) applies a control signal, of which a potential level alternates between high level and low level, to each of the plurality of first switching elements (1), the plurality of second switching elements (2), and the plurality of switches (8). The controller (50) sets a dead time period (Td) between a high-level period of the control signal for the first switching element (1) and a high-level period of the control signal for the second switching element (2) with respect to each of the plurality of switching circuits (10). The controller (50) sets a high-level period of the control signal for each of the plurality of switches (8) based on the dead time period (Td) for a corresponding one of the plurality of switching circuits (10). A load current, passing through either the first switching element (1) or the second switching element (2) of the corresponding one of the plurality of switching circuits (10), flows through each of the plurality of AC terminals (41). The controller (50) performs shortening control when determining that resonant currents respectively passing through two or more switches (8) belonging to the plurality of switches (8) should be going to flow simultaneously through the resonant inductor (L1) upon application of a control signal having a preset high-level period to each of the plurality of switches (8). When performing the shortening control, the controller (50) applies a control signal, of which the preset high-level period has been shortened, to a first switch which is one of the two or more switches (8) and applies a control signal having the preset high-level period to a second switch belonging to the two or more switches (8). The second switch is different from the first switch.

This aspect not only allows zero-voltage soft switching to be performed but also allows the switching loss to be cut down.

In a power converter (100; 100A; 100B; 100C) according to a second aspect, which may be implemented in conjunction with the first aspect, the controller (50) applies, when performing the shortening control, a control signal, of which the preset high-level period has been shortened to zero, to the first switch.

This aspect not only allows zero-voltage soft switching to be performed on the first switching element (1) and second switching element (2) of the switching circuit (10) corresponding to the second switch but also allows the switching loss to be cut down.

In a power converter (100; 100A; 100B; 100C) according to a third aspect, which may be implemented in conjunction with the first or second aspect, the first switch is one of the two or more switches (8) and corresponds to one switching circuit (10) belonging to two or more switching circuits (10). The two or more switching circuits (10) are switching circuits (10) respectively corresponding to the two or more switches (8) which belong to the plurality of switching circuits (10). The two or more switching circuits (10) respectively cause load currents having mutually different absolute values to flow therethrough. The one switching circuit causes a load current, of which the absolute value is smallest among the two or more switching circuits (10), to flow therethrough.

This aspect allows the switching loss to be further cut down.

In a power converter (100; 100A; 100B; 100C) according to a fourth aspect, which may be implemented in conjunction with the first or second aspect, the first switch is one of the two or more switches (8) and corresponds to one switching circuit belonging to two or more switching circuits (10). The two or more switching circuits (10) are switching circuits (10) respectively corresponding to the two or more switches (8) which belong to the plurality of switching circuits (10). Voltage instruction values for the two or more switching circuits (10) have mutually different absolute values. The voltage instruction value for the one switching circuit has the smallest absolute value among the voltage instruction values for the two or more switching circuits (10).

This aspect allows for uniformizing switches (8), of which hard switching is to be relieved, among the plurality of switches (8).

In a power converter (100; 100A; 100B; 100C) according to a fifth aspect, which may be implemented in conjunction with the first or second aspect, the first switch is one of the two or more switches (8) and corresponds to one switching circuit belonging to two or more switching circuits (10). The two or more switching circuits (10) are switching circuits (10) respectively corresponding to the two or more switches (8) which belong to the plurality of switching circuits (10). Voltage instruction values for the two or more switching circuits (10) have mutually different absolute values. The voltage instruction value for the one switching circuit has the largest absolute value among the voltage instruction values for the two or more switching circuits (10).

This aspect allows for uniformizing switches (8), of which hard switching is to be relieved, among the plurality of switches (8).

In a power converter (100; 100A; 100B; 100C) according to a sixth aspect, which may be implemented in conjunction with the first aspect, the two or more switches (8) are three switches (8). When performing the shortening control, the controller (50) applies a control signal, of which the preset high-level period has been shortened to zero, to the first switch, and applies a control signal, of which a high-level period is a shortened one of the preset high-level period, to a third switch belonging to the three switches (8) which is different from the first switch and the second switch.

This aspect allows zero-voltage soft switching to be performed on the first switching element (1) and second switching element (2) of the switching circuit (10) corresponding to the second switch by performing the shortening control.

In a power converter (100; 100A; 100B; 100C) according to a seventh aspect, which may be implemented in conjunction with the sixth aspect, the first switch is one of the three switches (8) and corresponds to a first switching circuit (10) belonging to three switching circuits (10). The three switching circuits (10) are switching circuits (10) respectively corresponding to the three switches (8) which belong to the plurality of switching circuits (10). The three switching circuits (10) respectively cause load currents having mutually different absolute values to flow therethrough. The first switching circuit (10) causes a load current, of which the absolute value is smallest in the three switching circuits (10), to flow therethrough. The third switch is one of the three switches (8) and corresponds to a second switching circuit (10) belonging to the three switching circuits (10). The three switching circuits (10) are switching circuits (10) respectively corresponding to the three switches (8) which belong to the plurality of switching circuits (10). The three switching circuits (10) respectively cause load currents having the mutually different absolute values to flow therethrough. The second switching circuit (10) causes a load current, of which the absolute value is second smallest in the three switching circuits (10), to flow therethrough.

This aspect allows the switching loss to be further cut down.

In a power converter (100; 100A; 100B; 100C) according to an eighth aspect, which may be implemented in conjunction with the sixth aspect, the third switch is one of the three switches (8) and corresponds to a first switching circuit (10) belonging to three switching circuits (10). The three switching circuits (10) are switching circuits (10) respectively corresponding to the three switches (8) which belong to the plurality of switching circuits (10). The three switching circuits (10) respectively cause load currents having mutually different absolute values to flow therethrough. The first switching circuit (10) causes a load current, of which the absolute value is smallest in the three switching circuits (10), to flow therethrough. The first switch is one of the three switches (8) and corresponds to a second switching circuit (10) belonging to the three switching circuits (10). The three switching circuits (10) are switching circuits (10) respectively corresponding to the three switches (8) which belong to the plurality of switching circuits (10). The three switching circuits (10) respectively cause load currents having the mutually different absolute values to flow therethrough. The second switching circuit (10) causes a load current, of which the absolute value is second smallest in the three switching circuits (10), to flow therethrough.

This aspect allows the switching loss to be further cut down.

In a power converter (100; 100A; 100B; 100C) according to a ninth aspect, which may be implemented in conjunction with the sixth aspect, the first switch is one of the three switches (8) and corresponds to a first switching circuit (10) belonging to three switching circuits (10). The three switching circuits (10) are switching circuits (10) respectively corresponding to the three switches (8) which belong to the plurality of switching circuits (10). Voltage instruction values for the three switching circuits (10) are different from each other. The voltage instruction value for the first switching circuit (10) is smallest among the voltage instruction values for the three switching circuits (10). The third switch is one of the three switches (8) and corresponds to a second switching circuit (10) belonging to the three switching circuits (10). The three switching circuits (10) are switching circuits (10) respectively corresponding to the three switches (8) which belong to the plurality of switching circuits (10). The voltage instruction values for the three switching circuits (10) are different from each other. The voltage instruction value for the second switching circuit (10) is the second smallest among the voltage instruction values for the three switching circuits (10).

This aspect allows the switches (8) to be subjected to zero-voltage soft switching to be uniformized among the plurality of switches (8) when the shortening control is performed.

In a power converter (100; 100A; 100B; 100C) according to a tenth aspect, which may be implemented in conjunction with the sixth aspect, the third switch is one of the three switches (8) and corresponds to a first switching circuit (10) belonging to three switching circuits (10). The three switching circuits (10) are switching circuits (10) respectively corresponding to the three switches (8) which belong to the plurality of switching circuits (10). Voltage instruction values for the three switching circuits (10) are different from each other. The voltage instruction value for the first switching circuit (10) is the smallest among the voltage instruction values for the three switching circuits (10). The first switch is one of the three switches (8) and corresponds to a second switching circuit (10) belonging to the three switching circuits (10). The three switching circuits (10) are switching circuits (10) respectively corresponding to the three switches (8) which belong to the plurality of switching circuits (10). The voltage instruction values for the three switching circuits (10) are different from each other. The voltage instruction value for the second switching circuit (10) is the second smallest among the voltage instruction values for the three switching circuits (10).

This aspect allows the switches (8) to be subjected to zero-voltage soft switching to be uniformized among the plurality of switches (8) when the shortening control is performed.

In a power converter (100; 100A; 100B; 100C) according to an eleventh aspect, which may be implemented in conjunction with the sixth aspect, the first switch is one of the three switches (8) and corresponds to a first switching circuit (10) belonging to three switching circuits (10). The three switching circuits (10) are switching circuits (10) respectively corresponding to the three switches (8) which belong to the plurality of switching circuits (10). Voltage instruction values for the three switching circuits (10) are different from each other. The voltage instruction value for the first switching circuit (10 is the largest among the voltage instruction values for the three switching circuits (10). The third switch is one of the three switches (8) and corresponds to a second switching circuit (10) belonging to the three switching circuits (10). The three switching circuits (10) are switching circuits (10) respectively corresponding to the three switches (8) which belong to the plurality of switching circuits (10). The voltage instruction values for the three switching circuits (10) are different from each other. The voltage instruction value for the second switching circuit (10) is the second largest among the voltage instruction values for the three switching circuits (10).

This aspect allows the switching loss to be further cut down.

In a power converter (100; 100A; 100B; 100C) according to a twelfth aspect, which may be implemented in conjunction with the sixth aspect, the third switch is one of the three switches (8) and corresponds to a first switching circuit (10) belonging to three switching circuits (10). The three switching circuits (10) are switching circuits (10) respectively corresponding to the three switches (8) which belong to the plurality of switching circuits (10). Voltage instruction values for the three switching circuits (10) are different from each other. The voltage instruction value for the first switching circuit (10) is the largest among the voltage instruction values for the three switching circuits (10). The first switch is one of the three switches (8) and corresponds to a second switching circuit (10) belonging to the three switching circuits (10). The three switching circuits (10) are switching circuits (10) respectively corresponding to the three switches (8) which belong to the plurality of switching circuits (10). The voltage instruction values for the three switching circuits (10) are different from each other. The voltage instruction value for the second switching circuit (10) is the second largest among the voltage instruction values for the three switching circuits (10).

### Industrial Applicability

The power converter according to the present disclosure not only allows zero-voltage soft switching to be performed but also allows the switching loss to be cut down. As can be seen, the power converter according to the present disclosure is effectively applicable to various fields on an industrial basis.

### Reference Signs List

1 First Switching Element
2 Second Switching Element
3 Connection Node
8 Switch
9 Resonant Capacitor
10 Switching Circuit
11 Power Converter Circuit
15 Regenerative Capacitor
31 First DC Terminal
32 Second DC Terminal
41 AC Terminal
50 Controller
100, 100A, 100B, 100C Power Converter
iU, iV, iW Output Current (Load Current)
L1 Resonant Inductor
RA1 AC Load
SU1, SU2, SU6, SU7 Control Signal
SV1, SV2, SV6, SV7 Control Signal
SW1, SW2, SW6, SW7 Control Signal
Tad Additional Time
Tred Shortening Period
Tres Resonant Half-Cycle
V15 Voltage
Vu Voltage Instruction Value
Vv Voltage Instruction Value
Vw Voltage Instruction Value

## Claims

1. A power converter comprising:
a first DC terminal and a second DC terminal;
a power converter circuit including a plurality of first switching elements and a plurality of second switching elements, the power converter circuit being implemented as a parallel connection of a plurality of switching circuits in each of which one of the plurality of first switching elements and a corresponding one of the plurality of second switching elements are connected one to one in series, the plurality of first switching elements being connected to the first DC terminal, the plurality of second switching elements being connected to the second DC terminal;
a plurality of AC terminals provided one to one for the plurality of switching circuits, each of the plurality of AC terminals being connected to a connection node between the first switching element and the second switching element of a corresponding one of the plurality of switching circuits;
a plurality of switches provided one to one for the plurality of switching circuits, each of the plurality of switches having a first end and a second end, each of the plurality of switches having the first end thereof connected to the connection node between the first switching element and the second switching element of a corresponding one of the plurality of switching circuits, the plurality of switches having the respective second ends thereof connected in common to a common connection node;
a plurality of resonant capacitors provided one to one for the plurality of switches, each of the plurality of resonant capacitors being connected between the first end of a corresponding one of the plurality of switches and the second DC terminal;
a resonant inductor having a first end and a second end, the first end of the resonant inductor being connected to the common connection node;
a regenerative capacitor having a third end and a fourth end, the third end of the regenerative capacitor being connected to either the first DC terminal or the second DC terminal; and
a controller configured to apply a control signal, of which a potential level alternates between high level and low level, to each of the plurality of first switching elements, the plurality of second switching elements, and the plurality of switches,
the controller being configured to set a dead time period between a high-level period of the control signal for the first switching element and a high-level period of the control signal for the second switching element with respect to each of the plurality of switching circuits, the controller being configured to set a high-level period of the control signal for each of the plurality of switches based on the dead time period for a corresponding one of the plurality of switching circuits,
a load current, passing through either the first switching element or the second switching element of the corresponding one of the plurality of switching circuits, flowing through each of the plurality of AC terminals,
the controller being configured to perform shortening control when determining that resonant currents respectively passing through two or more switches belonging to the plurality of switches are going to flow simultaneously through the resonant inductor upon application of a control signal having a preset high-level period to each of the plurality of switches,
the controller being configured to, when performing the shortening control:
apply a control signal, of which the preset high-level period has been shortened, to a first switch which is one of the two or more switches; and
apply a control signal having the preset high-level period to a second switch belonging to the two or more switches, the second switch being different from the first switch.

2. The power converter of claim 1, wherein
the controller is configured to, when performing the shortening control, apply a control signal, of which the preset high-level period has been shortened to zero, to the first switch.

3. The power converter of claim 1 or 2, wherein
the first switch is one of the two or more switches and corresponds to one switching circuit belonging to two or more switching circuits,
the two or more switching circuits are switching circuits respectively corresponding to the two or more switches which belong to the plurality of switching circuits, the two or more switching circuits respectively causing load currents having mutually different absolute values to flow therethrough, and
the one switching circuit causes a load current, of which the absolute value is smallest among the two or more switching circuits, to flow therethrough.

4. The power converter of claim 1 or 2, wherein
the first switch is one of the two or more switches and corresponds to one switching circuit belonging to two or more switching circuits,
the two or more switching circuits are switching circuits respectively corresponding to the two or more switches which belong to the plurality of switching circuits,
voltage instruction values for the two or more switching circuits have mutually different absolute values, and
the voltage instruction value for the one switching circuit has a smallest absolute value among the voltage instruction values for the two or more switching circuits.

5. The power converter of claim 1 or 2, wherein
the first switch is one of the two or more switches and corresponds to one switching circuit belonging to two or more switching circuits,
the two or more switching circuits are switching circuits respectively corresponding to the two or more switches which belong to the plurality of switching circuits,
voltage instruction values for the two or more switching circuits have mutually different absolute values, and
the voltage instruction value for the one switching circuit has a largest absolute value among the voltage instruction values for the two or more switching circuits.

6. The power converter of claim 1, wherein
the two or more switches are three switches,
the controller is configured to, when performing the shortening control,
apply a control signal, of which the preset high-level period has been shortened to zero, to the first switch, and
apply a control signal, of which a high-level period is a shortened one of the preset high-level period, to a third switch belonging to the three switches which is different from the first switch and the second switch.

7. The power converter of claim 6, wherein
the first switch is one of the three switches and corresponds to a first switching circuit belonging to three switching circuits,
the three switching circuits are switching circuits respectively corresponding to the three switches which belong to the plurality of switching circuits, the three switching circuits respectively causing load currents having mutually different absolute values to flow therethrough, and
the first switching circuit causes a load current, of which the absolute value is smallest in the three switching circuits, to flow therethrough, and
the third switch is one of the three switches and corresponds to a second switching circuit belonging to the three switching circuits,
the three switching circuits are switching circuits respectively corresponding to the three switches which belong to the plurality of switching circuits, the three switching circuits respectively causing load currents having the mutually different absolute values to flow therethrough, and
the second switching circuit causes a load current, of which the absolute value is second smallest in the three switching circuits, to flow therethrough.

8. The power converter of claim 6, wherein
the third switch is one of the three switches and corresponds to a first switching circuit belonging to three switching circuits,
the three switching circuits are switching circuits respectively corresponding to the three switches which belong to the plurality of switching circuits, the three switching circuits respectively causing load currents having mutually different absolute values to flow therethrough, and
the first switching circuit causes a load current, of which the absolute value is smallest in the three switching circuits, to flow therethrough, and
the first switch is one of the three switches and corresponds to a second switching circuit belonging to the three switching circuits,
the three switching circuits are switching circuits respectively corresponding to the three switches which belong to the plurality of switching circuits, the three switching circuits respectively causing load currents having the mutually different absolute values to flow therethrough, and
the second switching circuit causes a load current, of which the absolute value is second smallest in the three switching circuits, to flow therethrough.

9. The power converter of claim 6, wherein
the first switch is one of the three switches and corresponds to a first switching circuit belonging to three switching circuits,
the three switching circuits are switching circuits respectively corresponding to the three switches which belong to the plurality of switching circuits,
voltage instruction values for the three switching circuits have mutually different absolute values, and
the voltage instruction value for the first switching circuit has a smallest absolute value among the voltage instruction values for the three switching circuits, and
the third switch is one of the three switches and corresponds to a second switching circuit belonging to the three switching circuits,
the three switching circuits are switching circuits respectively corresponding to the three switches which belong to the plurality of switching circuits,
the voltage instruction values for the three switching circuits have the mutually different absolute values, and
the voltage instruction value for the second switching circuit has a second smallest absolute value among the voltage instruction values for the three switching circuits.

10. The power converter of claim 6, wherein
the third switch is one of the three switches and corresponds to a first switching circuit belonging to three switching circuits,
the three switching circuits are switching circuits respectively corresponding to the three switches which belong to the plurality of switching circuits,
voltage instruction values for the three switching circuits have mutually different absolute values, and
the voltage instruction value for the first switching circuit has a smallest absolute value among the voltage instruction values for the three switching circuits, and
the first switch is one of the three switches and corresponds to a second switching circuit belonging to the three switching circuits,
the three switching circuits are switching circuits respectively corresponding to the three switches which belong to the plurality of switching circuits,
the voltage instruction values for the three switching circuits have the mutually different absolute values, and
the voltage instruction value for the second switching circuit has a second smallest absolute value among the voltage instruction values for the three switching circuits.

11. The power converter of claim 6, wherein
the first switch is one of the three switches and corresponds to a first switching circuit belonging to three switching circuits,
the three switching circuits are switching circuits respectively corresponding to the three switches which belong to the plurality of switching circuits,
voltage instruction values for the three switching circuits have mutually different absolute values, and
the voltage instruction value for the first switching circuit has a largest absolute value among the voltage instruction values for the three switching circuits, and
the third switch is one of the three switches and corresponds to a second switching circuit belonging to the three switching circuits,
the three switching circuits are switching circuits respectively corresponding to the three switches which belong to the plurality of switching circuits,
the voltage instruction values for the three switching circuits have the mutually different absolute values, and
the voltage instruction value for the second switching circuit has a second largest absolute value among the voltage instruction values for the three switching circuits.

12. The power converter of claim 6, wherein
the third switch is one of the three switches and corresponds to a first switching circuit belonging to three switching circuits,
the three switching circuits are switching circuits respectively corresponding to the three switches which belong to the plurality of switching circuits,
voltage instruction values for the three switching circuits have mutually different absolute values, and
the voltage instruction value for the first switching circuit has a largest absolute value among the voltage instruction values for the three switching circuits, and
the first switch is one of the three switches and corresponds to a second switching circuit belonging to the three switching circuits,
the three switching circuits are switching circuits respectively corresponding to the three switches which belong to the plurality of switching circuits,
the voltage instruction values for the three switching circuits have the mutually different absolute values, and
the voltage instruction value for the second switching circuit has a second largest absolute value among the voltage instruction values for the three switching circuits.
